(19) Europäisches Patentamt
European Patent Office
Office européen des brevets

(11) **EP 0 984 397 B1**

(12) **EUROPÄISCHE PATENTSCHRIFT**

(45) Veröffentlichungstag und Bekanntmachung des Hinweises auf die Patenterteilung:
**02.03.2005   Patentblatt 2005/09**

(51) Int Cl.⁷: **G06T 15/50**

(21) Anmeldenummer: **99250266.6**

(22) Anmeldetag: **06.08.1999**

(54) **Verfahren und Vorrichtung zum Eliminieren unerwünschter Stufungen an Kanten bei Bilddarstellungen im Zeilenraster**

METHOD AND DEVICE FOR ELIMINATION OF UNWANTED STEPS IN RASTER DISPLAYS

METHODE ET DISPOSITIF POUR ELIMINER LES MARCHES INDESIREES DANS UN AFFICHAGE A BALAYAGE LIGNES

(84) Benannte Vertragsstaaten:
DE

(30) Priorität: **30.08.1998  DE 19840529**

(43) Veröffentlichungstag der Anmeldung:
**08.03.2000   Patentblatt 2000/10**

(73) Patentinhaber: **GMD - FORSCHUNGSZENTRUM INFORMATIONSTECHNIK GMBH**
**D-53757 Sankt Augustin (DE)**

(72) Erfinder: **Szymaniak, Markus**
**13435 Berlin (DE)**

(74) Vertreter: **Eisenführ, Speiser & Partner**
**Patentanwälte Rechtsanwälte**
**Spreepalais am Dom**
**Anna-Louisa-Karsch-Strasse 2**
**10178 Berlin (DE)**

(56) Entgegenhaltungen:
- **FIUME E: "COVERAGE MASKS AND CONVOLUTION TABLES FOR FAST AREA SAMPLING" CVGIP GRAPHICAL MODELS AND IMAGE PROCESSING,US,ACADEMIC PRESS, DULUTH, MA, Bd. 53, Nr. 1, 1991, Seiten 25-30, XP000173962 ISSN: 1077-3169**
- **HARSTON S ET AL: "A 66 MHZ DSP-AUGMENTED RAMDAC FOR SMOOTH-SHADED GRAPHIC APPLICATIONS" PROCEEDINGS OF THE CUSTOM INTEGRATED CIRCUITS CONFERENCE,US,NEW YORK, IEEE, Bd. CONF. 12, 13. Mai 1990 (1990-05-13), Seiten 1551-1554, XP000167710**
- **PATENT ABSTRACTS OF JAPAN vol. 1997, no. 03, 31. März 1997 (1997-03-31) & JP 08 315177 A (RICOH CO LTD), 29. November 1996 (1996-11-29)**
- **PATENT ABSTRACTS OF JAPAN vol. 1997, no. 01, 31. Januar 1997 (1997-01-31) & JP 08 235380 A (NEC CORP), 13. September 1996 (1996-09-13)**

**Beschreibung**

Die Erfindung betrifft ein Verfahren gemäß dem Oberbegriff des Anspruchs 1 sowie eine entsprechende Vorrichtung.

3D-Graphikapplikationen, wie Virtual Reality, 3D-Spiele oder im professionelleren Umfeld Modellierung und Animation, gehören bereits heute zu den Standardanwendungen auf PCs. Voraussetzung für die Echtzeitfähigkeit in diesem Gebiet ist die extreme Leistungssteigerung der Prozessoren in den letzten Jahren sowie neuerdings der Einsatz 3D-Graphik-Beschleunigern, die spezielle, wiederkehrende Arbeiten in der Graphikgenerierung übernehmen. Dem Prozessor fällt lediglich noch die Aufgabe zu, die Geometriebeschreibung der darzustellenden Szene zu generieren, alles weitere, wie die Rasterisierung (Erzeugung der anzuzeigenden Pixel) und das Shading (Farbgebung der Pixel) werden vom Beschleuniger übernommen.

Aufgrund der aber immer noch beschränkten Leistungsfähigkeit solcher Systeme müssen Kompromisse zwischen der Bildqualität und der Echtzeitanforderung (mindestens 25 Bilder pro Sekunde für eine kontinuierliche Bewegung) eingegangen werden. Im Allgemeinen wird mehr Wert auf eine ruckfreie Darstellung gelegt, wodurch einerseits Objekte nur sehr grob modelliert werden, um die Anzahl der Polygone klein zu halten, und andererseits die Bildschirmauflösung klein gehalten wird, um die Anzahl der zu generierenden Pixel zu begrenzen. Bei heute üblicher VESA-Auflösung (640 x 480 Pixel) und animierten Bildsequenzen fallen Aliasing-Effekte, die durch die Rasterisierung entstehen, aber noch besonders störend ins Auge. Trotzdem werden sie toleriert, da klassische Antialiasing-Ansätze, wie zum Beispiel das Supersampling, einen zu hohen Speicher- und Rechenleistungsbedarf haben.

Bis eine im Computer modellierte Szene auf dem Bildschirm dargestellt werden kann, bedarf es mehrerer Schritte:

1. Die im Speicher abgelegten Datensätze der darzustellenden Objekte müssen transformiert (skaliert, rotiert) und an den richtigen Stellen in der virtuellen Szene plaziert werden (modeling transformation).

2. Ausgehend von der Position der Objekte bezüglich des Blickwinkels des Betrachters werden nun Objekte verworfen und damit nicht weiterberücksichtigt, die garantiert nicht sichtbar sein können. Dabei werden sowohl ganze Objekte eliminiert, die sich außerhalb des sichtbaren Volumens befinden (clipping), als auch einzelne Polygone von Objekten, die dem Betrachter abgewendet sind (backface removal).

3. Die in Weltkoordinaten modellierten Polygone (meist Dreiecke) müssen nun in das Bildkoordinatensystem überführt werden, wobei eine perspektivische Verzerrung erfolgt, um eine möglichst realistische Abbildung zu ermöglichen (viewing transformation).

4. Die nun in Bildkoordinaten vorliegenden Polygone müssen so aufbereitet werden, daß sie durch den Renderer verarbeitet werden können (z.B. Berechnung von Steigungen an Kanten, usw. / setup processing).

5. Im Rasterisierer erfolgt dann eine Berechnung der sichtbaren Pixel auf dem Bildschirm. Pro Pixel wird nicht nur die Position auf dem Bildschirm (x, y) berechnet, sondern es erfolgt auch die Bestimmung weiterer für die Beleuchtung und Verdecktheitsanalyse benötigter Parameter (z-Wert, homogener Parameter, Texturkoordinaten, Normalen, usw. / rasterization)

6. Aufgrund der berechneten Parameter werden nun die Farbwerte der darzustellenden Pixel ermittelt (lighting). Dieser Schritt wird <u>hier</u> nur dann durchgeführt, wenn es sich um ein Phong-Renderer handelt. Ist nur ein Gouraud-Renderer vorhanden, so wird dieser Schritt bereits vor der Transformation ins Bildkoordinatensystem durchgeführt.

7. Die berechneten Farbwerte werden dann im Framebuffer gespeichert, wenn der z-Wert des Pixels angibt, daß das Pixel sich vor dem an dieser Position im Framebuffer stehendem Pixel befindet (z-buffering). Vor der Speicherung können die Farbwerte mittels des Blendings mit dem vorher im Framebuffer stehen Wert modifiziert werden, wodurch z.B. die Modellierung von halb transparenten Objekten möglich wird.

8. Sind alle sichtbaren Dreiecke rasterisiert worden, so befindet sich im Framebuffer das auf dem Bildschirm darzustellende Bild. Über die RAMDAC wird das Bild linear aus dem Speicher ausgelesen und in analoge Signale gewandelt, die direkt an den Monitor geschickt werden (display process).

Das Problem des Aliasing entsteht aus der heute üblichen Verwendung von Rasterdisplays, da es mit diskreten Punkten nicht möglich ist, beispielsweise eine geneigte Kante exakt darzustellen. Bei der "normalen" Scankonvertierung wird ein Pixel (picture element) immer dann gesetzt, wenn der Pixelmittelpunkt bedeckt ist, wodurch aus einer kontinuierlichen Kante im diskreten Fall in bestimmten Abständen sichtbare Sprünge entstehen, die bei bewegten Bildern besonders auffallen, da sie über die Kante wandern. So tritt zum Beispiel bei der Bewegung einer fast horizontalen Kante der irritierende Effekt auf, daß, wenn die Kante langsam vertikal verschoben wird, die Sprünge schnell horizontal über die Kante laufen. Es scheint also weder die Bewegungsrichtung noch die Bewegungsgeschwindigkeit zu stimmen.

Aus der Signalverarbeitung ist bekannt, daß sich ein Signal (in diesem Fall das Bild) nur dann korrekt reproduzieren läßt, wenn die Abtastrate größer als das Doppelte der maximal auftretenden Frequenz ist (Abtasttheorem von Shannon). Da aber die Abtastrate durch die Bildschirmauflösung fest vorgegeben ist, werden als Umkehrschluß nur Frequenzen unterhalb der halben Abtastrate korrekt wiedergegeben; alle Frequenzen darüber tragen zum Aliasing bei.

Das Problem des klassischen Samplings besteht also darin, daß ein Pixel immer als Punkt betrachtet wird, wodurch sich auch der Name Point-Sampling ergibt. Allen Antialiasing-Ansätzen gemein ist, daß das Pixel nun als etwas Flächenhaftes gesehen wird; die Farbe sich ergo aus der Mittelung der Farbgebung der bedeckten Pixelfläche ergeben sollte. Das Antialiasing versucht nun die darstellungsbedingten Probleme soweit wie möglich zu beseitigen, oder zumindest abzuschwächen.

Bei Aliasing an Polygonkanten sind nicht alle Polygonkanten betroffen, sondern nur solche, die sind an den Rändern von Objekten befinden. Innerhalb von Objekten passen die Polygone in der Regel nahtlos aneinander, und sofern benachbarte Polygone eine ähnliche Farbgebung besitzen, ist es an den Kanten zwischen den Polygonen nicht von Bedeutung, ob die Pixel von dem einen oder dem anderen Polygon gesetzt werden.

Sehr kleine Objekte können verschwinden, falls ihre Ausdehnung kleiner als ein Pixel ist. Dieser Effekt fällt besonders dann auf, wenn durch eine kleine Verschiebung das Objekt sichtbar wird, da auf einmal ein Pixelmittelpunkt berührt wird. Es entsteht eine Art Blinkeffekt, der die Aufmerksamkeit des Betrachters auf sich lenkt.

Bei modernen Phong-Renderern treten zusätzliche Aliasing-Effekte an den Spot-Grenzen auf. Bei Gouraud-Renderern tritt dieses Problem nicht auf, da bei ihnen keine Lichteffekte wie die hier gezeigten möglich sind, wodurch die Bildqualität nicht vergleichbar ist.

Der am weitesten verbreitete Ansatz für das Antialiasing ist das Supersampling. Jedes Pixel wird in (n x n) Subpixel unterteilt, die dann wiederum normal "gepointsampelt" werden. Es ergibt sich ein Zwischenbild, welches in beiden Dimensionen die n-fache Auflösung des darzustellenden Bildes besitzt. Durch Aufsummierung der Farbwerte der (n x n) Subpixel und der anschließende Division durch die Anzahl der Subpixel ($n^2$) ergibt sich dann die endgültige Farbe des Pixels. Aus Sicht der Signalverarbeitung wird die Abtastrate um den Faktor n (auch Oversamplingfaktor genannt) erhöht, wodurch kleinere Details rekonstruiert werden können. Sinnvolle Werte für n liegen im Bereich 2 bis 8, wodurch zwischen 4 und 64 Farbwerte pro Pixel zur Verfügung stehen.

Trotz der Einfachheit diese Vorgehens gibt es entscheidende Nachteile, aufgrund derer eine Realisierung in Hardware nicht erreicht werden konnte:

1. Speicherbedarf: Da das Bild in einer n-fachen Auflösung gerendert wird, muß nicht nur der Framebuffer), sondern auch der z-Buffer (24 - 32Bit/Pixel) n-fach ausgelegt sein.

Beispielsweise ergibt sich für eine Bildschirmauflösung von 1024 x 768 Pixel und einen Oversamplingfaktor von n=4 ein Speicherbedarf von 48 MB für den Framebuffer und 36 MB noch einmal für den z-Buffer. Insgesamt werden also 84 MByte Speicher gegenüber 5,25 MB für das normale Sampling benötigt.

2. Rechenzeitaufwand: Aufgrund der höheren Anzahl der zu erzeugenden Pixel nimmt die Rechenzeit ebenfalls um den Faktor $n^2$ zu. War das System also vorher in der Lage, 16 Bilder pro Sekunde anzuzeigen, so kommt es bei n = 4 nur noch auf ein Bild pro Sekunde; es hat seine Echtzeitfähigkeit also verloren.

Das Verfahren kann zudem nicht garantieren, daß das entstehende Bild frei von Artefakten ist, denn zu jeder Samplingrate läßt sich leicht ein Bild konstruieren, welches garantiert falsch dargestellt wird. Hat das darzustellende Bild eine horizontale Auflösung von w, so wird ein senkrechtes Streifenmuster aus (n x w) schwarzen und (n x w) weißen Balken, entweder komplett schwarz oder komplett weiß dargestellt.

Beim stochastischen Supersampling werden die Samplepoints zufällig über das Pixel verteilt, wodurch die übrig gebliebenen Artefakte mit einem Rauschen überlagert werden, welches für das menschliche Auge angenehmer ist.

Ein Bild, welches vierfach mit einem stochastischen Ansatz gerendert wurde, hat in etwa die gleiche Bildqualität, wie ein 16faches Supersampling an einem regulären Raster.

Das Verfahren ist jedoch auf eine Anwendung in Software beschränkt, da Hardware-Renderer ausschließlich mit inkrementellen Verfahren arbeiten. Bei beliebig plazierten Samplepoints gibt es keine feste Reihenfolge der Punkte mehr, so daß die Bearbeitung nicht mehr inkrementell erfolgen kann, sondern die Parameter pro Punkt komplett neu berechnet werden müßten, was einen extremen Aufwand bedeutet.

Bei dem Nachbearbeitungsdurchgang müssen nicht alle Subpixel gleich behandelt werden; bei der Aufsummierung der Farbwerte kann noch ein Faktor eingebracht werden, der angibt, wie wichtig das Subpixel für das Pixel ist. Die Faktoren werden nach der Gauß-, Poisson- oder einer anderen Verteilung ermittelt, bei denen in der Regel Subpixel, die näher am Pixelmittelpunkt liegen, ein höheres Gewicht erhalten.

Supersampling erfolgt in seiner Grundform über das gesamte Bild immer mit der gleichen Abtastrate. In flächigen Bereichen ist jedoch viel Rechenzeit erforderlich, da dort jedes Subpixel den gleichen Farbwert beisteuert. Die Idee besteht dabei darin, Supersampling nur dort zu betreiben, wo es wirklich nötig ist. In einem ersten Durchgang wird das Bild normal gerendert, und in einem zweiten Durchlauf wird dann jeder Farbwert mit den Farbwerten aus seiner Umgebung verglichen, und nur sofern die Differenz einen vorgegebener Schwellwert übersteigt, erfolgt nun ein Supersampling für dieses Pixel. Der Nachteil bei diesem Vorgehen ist natürlich das zweimalige Rendern eines jeden Polygons.

Der Accumulationbuffer ist eine Abwandlung des vorgenannten Supersamplings, bei dem der extreme Speicherbedarf vermieden wird. Es wird lediglich zu dem sowieso vorhandenen Frame- bzw. z-Buffer ein zusätzlicher Buffer von der Größe des Framebuffers benötigt, der jedoch eine etwas höhere Genauigkeit braucht. Das Rendern eines Bildes benötigt nun $n^2$ Renderdurchgänge bei der normalen Framebufferauflösung, wobei n wiederum den Oversamplingfaktor darstellt. Zwischen den Berechnungen der Teilbilder wird jeweils das Koordinatensystem der zu beschreibenden Geometrie im Subpixelbereich so verschoben, daß die Pixelmittelpunkte jeweils auf einem anderen Sample des entsprechenden Supersampling-Verfahrens zu liegen kommen. Die bei jedem Rendering-Durchlauf erzeugten Framebuffer-Inhalte werden im zusätzlichen Buffer akkumuliert (daher der Name Accumulationbuffer), worauf sich das Löschen des Frame und z-Buffer für das nächste Teilbild anschließt. Da im Accumulationbuffer $n^2$ Farbwerte pro Pixel aufsummiert werden, sind zu der Framebuffergenauigkeit noch einmal $2*\log_2 n$ Genauigkeitsbits zusätzlich erforderlich, damit kein Überlaufen der Farbwerte möglich ist. Sobald alle Teilbilder gerendert wurden, werden die Farbwerte aus dem Accumulationbuffer durch die Anzahl der Samples ($n^2$) geteilt, und in den Framebuffer übernommen, der dann angezeigt werden kann.

Durch den Einsatz des Accumulationbuffers anstelle des beim Supersamplings riesigen Framebuffers wird der Nachteil des großen Speicherbedarfs beseitigt, nicht jedoch der Bedarf an Rechenzeit. Im Gegenteil wird sich die Renderingzeit sogar noch erhöhen, da nun die Geometriebeschreibungen (meist Dreiecke) nun mehrmals an den Renderer übertragen werden müssen.

Das Areasampling, entwickelt von Edwin Catmull [Edwin Catmull: "A hidden-surface algorithm with antialiasing", Aug.78], basiert darauf, daß pro Pixel die Fläche berechnet wird, welche auf die einzelnen Polygone entfällt. Dies geschieht auf analytischem Wege, so daß jedes noch so kleine Polygon in Betracht gezogen wird, und liefert eine dementsprechend hohe Bildqualität.

Der Ablauf des Algorithmus läßt sich in etwa so beschreiben:

- Alle Polygone werden nach ihrer größten y-Koordinate geordnet.

- Es wird eine Liste von aktiven Polygonen verwaltet, in die Polygone eingetragen werden, sobald die Scanline mit dem größtem y-Wert erreicht ist, und aus der sie wieder gelöscht werden, sobald der minimale y-Wert unterschritten wird.

- Pro Scanline, wobei eine Scanline hierbei als etwas Flächenhaftes betrachtet wird, muß pro Pixel ein Bucket angelegt werden, in dem jeweils alle Polygonteile eingetragen werden, die zu diesem Pixel beitragen. Die Polygonanteile werden dabei wieder durch Polygone repräsentiert, die gegenüber den Pixelkanten geclippt wurden. Beim Aufbau der Buckets wird darauf geachtet, daß die jeweiligen Polygone entsprechend ihrer z-Werte einsortiert werden.

- Pro Pixel wird nun mit Hilfe des sogenannten "Hidden-Surface-Algorithmus" von Sutherland die sichtbare Fläche der einzelnen Polygone bestimmt, deren Farben dann gewichtet die endgültige Pixelfarbe ergeben.

Gegen eine derartige Hardwarerealisierung spricht der extreme Rechenaufwand für die Bestimmung der sichtbaren Flächenanteile bei länger werdenen Listen, sowie die scanline-basierte Vorgehensweise bei der Rasterisierung.

Der A-Buffer-Algorithmus [Loren Carpenter: "The a-buffer, an antialiased hidden surface method", Computer Graphics 12, 84]) stellt die diskrete Realisierung des Areasamplings dar, bei der nicht die exakte Fläche der Polygone abgespeichert wird, sondern nur Subpixelmasken, die eine Approximation der Flächen darstellen. Zudem erfolgt die Traversierung polygonweise, so daß wiederum ein Framebuffer benötigt wird, der jedoch eine dynamische Liste pro Pixel aufnehmen muß, in der die Subpixelmasken mitsamt ihren Farbwerten gespeichert werden. Pro Subpixelmaske wird dabei entweder nur ein z-Wert (der vom Mittelpunkt des Pixels) oder zwei z-Werte (minimal und maximal auftretender z-Wert im Pixel) abgespeichert, um den Speicheraufwand zu begrenzen. Sobald alle Polygone behandelt worden sind, werden in einem weiteren Durchlauf durch das Bild die Subpixelmasken aufgrund der z-Werte verrechnet, so daß der endgültige Farbwert entsteht.

Der konstant hohe Speicherbedarf des Supersamplings wurde somit durch einen sich dynamisch der Komplexität der Szene anpassenden Speicherbedarf ersetzt. Aufgrund dieses dynamischen Verhaltens und der daraus resultierenden Traversierung von Listen eignet sich dieses Verfahren kaum für eine Hardware-Implementierung. Weiterhin stellt sich die Verdecktheitsanalyse anhand der begrenzten Anzahl der z-Werte als problematisch heraus. In [Andreas Schilling und Wolfgang Straßer: "EXACT: Algorithm and Hardware Architecture for an Improved A-Buffer", Computer Graphics Proceedings, 93] wird eine mögliche Lösung mittels der zusätzlichen Speicherung von dz/dx und dz/dy auf Subpixelebene aufgezeigt.

Beim Approximationbuffer von Lau [Wing Hung Lau: "The antialiased approximation buffer", Aug.94] findet ebenfalls der A-Buffer-Ansatz Verwendung, wobei jedoch die Anzahl der pro Pixel gespeicherten Fragmente auf zwei beschränkt wird. Es ergibt sich somit ein konstanter Speicheraufwand, der jedoch mit Verlusten in der Bildqualität erkauft wird. So werden nur noch Pixel korrekt behandelt, die maximal von zwei Polygonen bedeckt sind, da mehr Anteile nicht darstellbar sind. Das Verfahren ist demnach auf wenige, große Polygone beschränkt, da dann der Fall von mehr als zwei Fragmenten praktisch nur noch sehr selten auftritt (unter 0,8% laut Lau), und somit die Qualität der Ergebnisbilder ausreichend gut ist.

Der Exact Area Subpixel Algorithm (EASA von Andreas Schilling [Andreas Schilling: "Eine Prozessor-Pipeline zur Anwendung in der graphischen Datenverarbeitung", Dissertation an der Eberhard-Karls-Universität in Tübingen, Juni 94]) stellt eine Modifikation des A-Buffers dar, bei dem eine höhere Genauigkeit an Kanten eines Polygons erreicht wird. Die Generierung der Subpixelmasken erfolgt beim A-Buffer aufgrund der Bedeckung der Subpixelmittelpunkte. Schilling hingegen berechnet den exakten Flächenanteil, woraus eine Anzahl zu setzender Subpixel abgeleitet wird, die dann zur Generierung der eigentlichen Maske anhand der Steigung der Kante führt. Durch dieses Vorgehen kann eine höhere Auflösung bei fast horizontalen (vertikalen) Kanten erreicht werden, da beim A-Buffer immer mehrere Subpixel auf einmal gesetzt werden, so daß nicht die maximale Auflösung der Subpixelmaske ausgenutzt werden konnte.

Das Verfahren von Patrick Baudisch [Patrick Baudisch: "Entwicklung und Implementierung eines effizienten, hardwarenahen Antialiasing-Algorithmus", Diplomarbeit, Technische Hochschule Darmstadt, Sept.94]) basiert ebenfalls auf Subpixelmasken, die an Polygonkanten generiert werden. Jedoch dienen sie hierbei nicht dazu, die Fläche der einzelnen Polygone zu berechnen und deren Farbe damit entsprechend zu gewichten wie bei den vorigen Verfahren, sondern um aus einem normal gepointsampleten Bild die benachbarten Farben zuzumischen. Als Grundlage dient die räumliche Kohärenz der Pixel, d.h., daß die Farbe, die ein Polygon teilweise zu einem Pixel beiträgt, garantiert in einem benachbarten Pixel zu finden ist. Die Position der Subpixel in der Maske gibt an, aus welchem benachbartem Pixel eine Zumischung erfolgen soll, sofern es gesetzt wird. Die Subpixel auf den Diagonalen verweisen dabei auf zwei benachbarte Pixel.

Beim Vier-Zeiger-Verfahren werden jeweils 4 Subpixel zu einem Meta-Subpixel zusammengefaßt, welches wiederum die Zumischung der benachbarten Pixelfarbe angibt. Durch das Zusammenfassen geht die räumliche Information verloren, die Genauigkeit der Flächenanteile erhöht sich aber. Die bisherigen Antialiasing-Verfahren haben insgesamt Nachteile in bezug auf ihre mögliche Hardware-Realisierbarkeit, die nur schwer behoben werden können. Einerseits muß ein enormer Speicheraufwand betrieben werden (Supersampling, Area-sampling, A-Buffer), und andererseits ist der Rechenaufwand einiger Verfahren so hoch (Supersampling, Accumulationbuffer, Areasampling), daß eine Hardware-Realisierung kaum noch echtzeitfähig ist. Zudem werden bei Verfahren, die ausschließlich auf Polygonkanten arbeiten, (Areasampling, A-Buffer, Approximationbuffer, EASA, Subpixelverfahren, Vier-Zeiger-Verfahren) Billboard- und Spot-Artefakte nicht berücksichtigt.

Die beim Stand der Technik bestehenden Probleme sollen nachfolgend noch einmal kurz zusammengefaßt werden:

Das Problem des Aliasing entsteht aus der Verwendung von Rasterdisplays, da es mit diskreten Punkten nicht möglich ist, z.B. eine geneigte Kante exakt darzustellen. Bei normalen Rasterisierungsmethoden entstehen aus einer kontinuierlichen Kante im diskreten Fall in bestimmten Abständen Sprünge, die den visuellen Eindruck stark stören.

Ein üblicher Ansatz um diesen Effekt zu beheben, ist das Supersampling, bei dem durch viele Abtastpunkte innerhalb eines Pixels versucht wird, eine bessere Farbe zu bestimmen. Das Verfahren ist aber kaum im Echtzeitbereich einsetzbar, da ein sehr hoher Speicher- und Rechenzeitaufwand nötig ist.

Die anderen Verfahren versuchen, einen besseren Farbwert zu bestimmen, indem sie den flächenmäßigen Beitrag der Polygone zu jedem Pixel genau berechnen. Aber auch hier ist ein sehr hoher Rechenzeitbedarf (wenn nicht auch Speicherplatz) notwendig.

Aus der US-Patentschrift 5 748 178 ist es ferner bekannt, die Umgebung eines Pixels im Durchlauf in einer Art Schieberegister zu speichern, wobei einander benachbarte Pixel auch benachbarte Speicherplätze einnehmen. Eine Filterung wird dabei dadurch erzielt, daß dann jeweils eine Pixel-Umgebung einem gemeinsamen Filter- Gewichtungsvorgang unterworfen werden kann. Da die Wirksamkeit des Verfahrens davon abhängig ist, welche Pixel einander zufällig benachbart sind, ist hiermit ein wirksames Antialiasing nicht möglich.

Aus der US-Patentschrift 5 264 838 ist es ebenfalls bekannt, zum Zwecke des Antialiasing je eine Umgebung eines Pixels im Bereich eines Impulses mit einer unscharfen Umgebung (Halo) zu versehen. Dieses Verfahren erzeugt jedoch lediglich eine zusätzliche Unschärfe, da es ungezielt wirkt.

Der Erfindung liegt demgegenüber die Aufgabe zugrunde, ein Antialiasing-Verfahren anzugeben, welches die Echtzeitfähigkeit nicht beeinträchtigt, wodurch trotz der Notwendigkeit der Realisierung in Hardware eine deutliche Verbesserung der Bildqualität erreicht werden konnte.

Diese Aufgabe wird durch ein Verfahren gelöst, welches zum Eliminieren unerwünschter Stufungen an Kanten bei Bilddarstellungen im Zeilenraster, insbesondere im On-line Betrieb dient. Dieses Verfahren ist gekennzeichnet durch die Schritte:

a) Anwendung eines Kantenoperators auf einen Bildteil zur Grobermittlung mindestens eines gerasterten Kantenverlaufs,

b) Bestimmung der Position mindestens eines ersten Pixels aus der Menge derjenigen Pixel, die den gerasterten Kantenverlauf bilden oder an diesen gerasterten Kantenverlauf angrenzen,

c) Approximation einer Geraden zur Ermittlung eines wahrscheinlichen Verlaufs der ungerasterten Bildkante in der Nähe des ersten Pixels,

d) Ermittlung eines Kriteriums aus der Approximationsgeraden und der Position des ersten Pixels für die Zumischung einer Farbe X zu der Farbe C im betrachteten ersten Pixels und

e) Mischung der ermittelten Farbe X zu der Farbe C im betracheten ersten Pixel.

Gemäß einer besonders bevorzugten Ausführungsform ist das erfindungsgemäße Verfahren dadurch gekennzeichnet, daß das Kriterium des Verfahrensschrittes d) in Abhängigkeit von der Lage des betrachteten Pixels relativ zur Approximationsgeraden festlegt, welche Farbe X zu der Farbe C des betrachteten Pixels zugemischt wird.

Gemäß einer besonders bevorzugten Ausführungsform ist das erfindungsgemäße Verfahren dadurch gekennzeichnet, daß das Kriterium gemäß Verfahrensschritt d) in Abhängigkeit von der Lage des betrachteten Pixels relativ zur Approximationsgeraden festlegt, daß die Farbe mindestens eines benachbarten Pixels gewichtet zur Farbe des betrachteten Pixels zugemischt wird.

Gemäß einer besonders bevorzugten Ausführungsform ist das erfindungsgemäße Verfahren dadurch gekennzeichnet, daß bei einem betrachteten Pixel, das von der Approximationsgeraden nicht geschnitten wird, die Farbe unverändert bleibt.

Gemäß einer besonders bevorzugten Ausführungsform ist das erfindungsgemäße Verfahren dadurch gekennzeichnet, daß bei einem betrachteten Pixel, das von der Approximationsgeraden geschnitten wird, die resultierende Farbe R nach Maßgabe des folgenden Kriteriums bestimmt wird:

die Approximationsgerade teilt das betrachtete Pixel in zwei Teilflächen $F_1$, $F_2$, wobei $F_1 + F_2 = 1$, mit 1 ist die Gesamtfläche des Pixels, wobei $F_1$ diejenige Teilfläche ist, in welcher der Pixelmittelpunkt liegt;

-    zugemischt wird zu der Farbe C des betrachteten Pixels die Farbe X desjenigen benachbarten Pixels, welche an die längste vom Raster gebildete Kante der Teilfläche $F_2$ angrenzt.

Gemäß einer besonders bevorzugten Ausführungsform ist das erfindungsgemäße Verfahren dadurch gekennzeichnet, daß sich die resultierende Farbe R aus der ursprünglichen Farbe C des betrachteten Pixels und der zugemischten Farbe X eines benachbarten Pixels nach folgender Gleichung ergibt:

$$R = F_1 \times C + F_2 \times X$$

Gemäß einer besonders bevorzugten Ausführungsform ist das erfindungsgemäße Verfahren dadurch gekennzeichnet, daß die Teilflächen $F_1$, $F_2$ durch ein geeignetes Approximationsverfahren approximiert werden.

Gemäß einer besonders bevorzugten Ausführungsform ist das erfindungsgemäße Verfahren dadurch gekennzeichnet, daß die genannten Verfahrensschritte auf einen mittels eine Rendering und/oder Shading-Verfahrens behandelten Bildteil angewendet werden.

Gemäß einer besonders bevorzugten Ausführungsform ist das erfindungsgemäße Verfahren dadurch gekennzeichnet, daß das Shading/Rendering dreiecks- oder Scanlinebasiert ist, oder daß es sich um ein Gouraud-oder Phong-Shading handelt.

Gemäß einer besonders bevorzugten Ausführungsform ist das erfindungsgemäße Verfahren dadurch gekennzeichnet, daß die vorgenannten Verfahrensschritte a) bis e) einzeln oder in Gruppen im zeitlichen Versatz ausgeführt werden.

Gemäß einer besonders bevorzugten Ausführungsform ist das erfindungsgemäße Verfahren dadurch gekennzeichnet, daß der zeitliche Versatz mindestens eine Bildzeile beträgt.

Gemäß einer besonders bevorzugten Ausführungsform ist das erfindungsgemäße Verfahren dadurch gekennzeichnet, daß die Verarbeitung im zeitlichen Versatz in einem Framebuffer ohne weitere Zwischenspeicherung erfolgt.

Gemäß einer besonders bevorzugten Ausführungsform ist das erfindungsgemäße Verfahren dadurch gekennzeichnet, daß die Approximationsgerade über mehrere Stufen des gerasterten Kantenverlaufs verläuft, und daß die Approximationsgerade endet, wenn die Kriterien

1) Es können maximal zwei verschiedene Stufenlängen vorkommen, deren Stufenlängen sich außerdem um maximal 1 unterscheiden dürfen.

2) Nur eine der beiden Stufenlängen darf mehrmals hintereinander auftreten.

3) Durch das Aneinanderreihen der <u>Anzahlen</u> der Stufen, die die gleiche Länge haben, erhält man eine Zahlensequenz, bei der abwechselnd immer eine Eins und dann eine beliebige Zahl ( > 0) steht. Die Einsen (nur die an jeder zweiten Position) werden aus dieser Sequenz gestrichen. Bei der erhaltenen Sequenz dürfen wieder nur zwei verschiedene Zahlen vorkommen, die sich um eins unterscheiden.

4) Bei der unter 3. erhaltenen Sequenz darf nur eine der beiden möglichen Zahlen mehrmals hintereinander auftreten.

5) Durch wiederholtes Anwenden der Regeln 3. und 4. auf die Zahlensequenz, läßt sich ein immer globalerer Blick auf die Kante gewinnen.

in aufsteigender Reihenfolge überprüft werden und mindestens ein Kriterium nicht erfüllt ist.

Gemäß einer besonders bevorzugten Ausführungsform ist das erfindungsgemäße Verfahren dadurch gekennzeichnet, daß die Approximationsgerade über mehrere Stufen des gerasterten Kantenverlaufs verläuft, und daß die Approximationsgerade endet, wenn eines der Kriterien

1) Es können maximal zwei verschiedene Stufenlängen vorkommen, deren Stufenlängen sich außerdem um maximal 1 unterscheiden dürfen.

2) Nur eine der beiden Stufenlängen darf mehrmals hintereinander auftreten.

3) Durch das Aneinanderreihen der Anzahl der Stufen, die die gleiche Länge haben, erhält man eine Zahlensequenz, bei der abwechselnd immer eine Eins und dann eine beliebige Zahl ( > 0) steht. Die Einsen (nur die an jeder zweiten Position) werden aus dieser Sequenz gestrichen. Bei der erhaltenen Sequenz dürfen wieder nur zwei verschiedene Zahlen vorkommen, die sich um eins unterscheiden.

4) Bei der unter 3. erhaltenen Sequenz darf nur eine der beiden möglichen Zahlen mehrmals hintereinander auftreten.

oder eines der Kriterien 1), 2), 3) oder eines der Kriterien 1), 2) nicht erfüllt ist.

Gemäß einer besonders bevorzugten Ausführungsform ist das erfindungsgemäße Verfahren gekennzeichnet durch das Vorsehen eines Tripple-Buffers, wobei sich die drei resultierenden Buffer in zyklischer Vertauschung parallel die Verfahrensschritte Rendering, Post-Antialyasing und Bildwiedergabe teilen.

Das erfindungsgemäße Verfahren geht dementsprechend im Vergleich zum Stand der Technik einen grundsätzlich anderen Weg. Es schließt dabei die Erkenntnis ein, daß bei einem in normaler Auflösung gerenderten Bild die störenden Kanten (darunter fallen auch die beschriebenen Billboard- und Spot-Artefakte) erkannt und beseitigt werden.

Bei der Rasterisierung eines Dreiecks unter Verwendung der normalen Scankonvertierung, wird ein Pixel immer dann in der Farbe des Dreiecks gefärbt, wenn der Pixelmittelpunkt innerhalb der Dreiecksfläche liegt, anderenfalls erhält das Pixel die Hintergrundfarbe. Hierbei entstehen an den Kanten des Dreiecks sichtbare Sprünge, die den visuellen Eindruck einer geraden Kante stark stören. Nach dem erfindungsgemäßen Verfahren wird nun den Pixeln an den Kanten des Dreiecks eine gemischte Farbe gegeben, welche zwischen der Farbe des Dreiecks und der Hintergrundfarbe liegt. Hierbei wird die flächenmäßigen Bedeckung des Pixels als Kriterium herangezogen. Durch dieses Vorgehen lassen sich alle ungewollten Stufeneffekte vermeiden, wodurch die Qualität des Bildes merklich heraufgesetzt wird.

Für die Mischung der Farben wird also die bedeckte Fläche der einzelnen Farbanteile benötigt, die bei herkömmlichen Antialiasing-Verfahren während der Rasterisierung bestimmt wird. Die Information, welche Flächenanteile auf die einzelnen Seiten der Kante entfallen, läßt sich auch aus einem normal gerendertem Bild im nachhinein bestimmen. Da die Entscheidung über das Setzen eines Pixels immer aufgrund seines Pixelmittelpunktes getroffen wird, läßt sich aus der entstandenen Stufensequenz an der Kante recht genau die reale Kante rekonstruieren. Aus der realen Geraden können dann wieder die Flächenanteile, die auf die einzelnen Seiten der Kante entfallen, bestimmt werden.

Für das betrachtete Pixel steht nun zunächst nur eine Farbe zur Verfügung, nämlich diejenige, die sich bei der Rasterisierung ergeben hat. Durch Einbeziehung der Nachbarpixel ist dabei zusätzlich auch die Farbe auf der anderen Seite der Kante zur Verfügung, sofern von einer räumlichen Kohärenz ausgegangen wird.

Die Ergebnisbilder eines Pointsampling-Verfahrens (Rendering der Bilder bei normaler Auflösung) werden also zunächst einer Kantenerkennung unterzogen, aufgrund derer dann Kanten im Bild erkannt und dann auch bearbeitet werden, die im Bild als "stufig" wahrgenommen werden.

Die Bearbeitung kann in einem linearen Durchlauf durch das Bild geschehen, so daß das Verfahren gut für eine Hardware-Implementierung geeignet ist. Der Speicheraufwand ist in der Regel auf dem Chip realisierbar; beim Triple-Buffer-Betrieb wird lediglich ein weiterer Buffer benötigt, in dem das antialiaste Bild gespeichert wird.

Die Kantenerkennung auf dem gerenderten Bild kann mit Standard-Verfahren der Kantenerkennung durchgeführt werden. Aus der Kanteninformation in einer Umgebung können dann die realen Kanten approximiert werden, die als Grundlage für die Zumischung der benachbarten Pixelfarben dienen.

Um nicht das komplette Kantenbild abspeichern zu müssen, wird bevorzugt zu der Kantenerkennung im Versatz um einige Bildschirmzeilen der Prozeß der Verfolgung der Stufen durchgeführt. Sobald eine Kante erkannt wurde, kann unverzüglich für das aktuelle Pixel eine antialiaste Farbe berechnet werden.

Die Einbeziehung einiger Bildschirmzeilen bei der Verfolgung der Kanten reicht somit vollkommen aus, um eine deutliche Qualitätsverbesserung der Bilder zu erreichen. Wieviele Zeilen einbezogen werden sollen, kann nach gewünschter Bildqualität und zur Verfügung stehenden Platz auf dem Chip bestimmt werden.

Der Algorithmus läßt sich also in drei Teile unterteilen, die einzeln optimierbar sind. Die Optimierungsergebnisse werden an die jeweils nächste Stufe weitergereicht.

1. Kantendetektion im ursprünglichen Bild: Hierbei ist wesentlich, daß die Sprünge zwischen zwei benachbarten horizontalen (vertikalen) Stufen eindeutig bestimmt werden können, da nur sie als Informationsquelle der ursprünglichen rasterisierten Kante zur Verfügung stehen.

2. Bestimmung der angenommenen Lage der realen Kante anhand des Kantenbildes.

3. Bestimmung der Flächenanteile und daraus resultierend die Zumischung der geeigneten benachbarten Pixelfarben bei den Kantenpixeln.

Der Verfahrensschritt 1 erfolgt in einem eigenem Durchlauf durch das Bild, da für den folgenden Verfahrensschritt das Kantenbild in der Umgebung schon bekannt sein muß. Die Approximation der realen Geraden und das anschließende Mischen der Farben kann hingegen in einem Durchlauf geschehen, da nur aufgrund der Lage der Geraden in diesem Punkt die Mischung erfolgt.

Für eine Hardware-Realisierung ist es dagegen so, daß bereits beim ersten Durchlauf das komplette Bild einmal aus dem Speicher ausgelesen werden muß, woraufhin dann das Kantenbild (mindestens 1 Bit pro Pixel) im Speicher abgelegt wird. Beim zweiten Durchlauf werden dann die Kanten in voller Länge im Kantenbild verfolgt, was bei einer beliebigen Richtung der Kante einen (fast) zufälligen Zugriff auf den Speicher zur Folge hat. Es ergeben sich also Probleme bei der Bearbeitungszeit, aufgrund der Notwendigkeit zweier getrennter Durchläufe, und des schwierigen Zugriffs auf den Speicher beim zweiten Durchlauf. Unschön ist natürlich auch, daß extra ein Speicherbereich zur Verfügung stehen muß, in dem das Kantenbild abgelegt werden kann, da es bei einer Größe von minimal 400 kByte (1 Bit bei einer Bildschirmauflösung von 2048 x 1536) schlecht im Chip gehalten werden kann.

Das erfindungsgemäße Verfahren bietet die Möglichkeit der Lösung dieser Probleme, indem die Kanten nur lokal verfolgt werden. Vorteilhaft ist es, die Kante nur innerhalb eines lokalen Fensters von n x n Pixeln im Bild zu verfolgen. Nur in diesem Fenster muß die Kanteninformation bekannt sein, die Speicherung des kompletten Kantenbildes entfällt also.

Bisherige Verfahren arbeiteten immer während der Generierung der Szenen und erforderten damit einen hohen Speicheraufwand und/oder eine Menge Rechenzeit. Durch die Verlagerung konnte dieser Nachteil größtenteils beseitigt werden, wobei zwei Verwendungsmöglichkeiten Display-Prozeß, Triple-Buffer) denkbar sind, die je nach vorhandenem Renderingsystem sogar im nachhinein integrierbar sind.

Im Vergleich zu anderen Verfahren, die eine ähnliche Geschwindigkeit erlauben, hat das hier vorgestellte den Vorteil, daß sowohl Billboards als auch Spotkanten antialiast werden können. Supersampling, welches auch diese Fälle behandelt, hat einen viel höheren Aufwand, und ist derzeit nicht echtzeitfähig.

Das Verfahren ist zudem skalierbar; steht noch Platz auf dem Framebuffer-Chip zur Verfügung, so wird man sich für den Triple-Buffer-Betrieb entscheiden und die Fenstergröße so anpassen, daß die Logik mitsamt dem nötigen Speicher gerade noch auf den Chip paßt.

Beim Triple-Buffer-Betrieb läßt sich aber eine Methode des "slicings" anwenden. Dabei wird das zu bearbeitende Bild in s vertikale Streifen eingeteilt, die nach einander mit dem normalen Verfahren bearbeitet werden. Durch dieses Vorgehen wird ein Bild der Breite w in s Streifen der Breite w/s zerlegt, wodurch sich der Speicherbedarf um den Faktor s reduziert.

Um die Übergangsbereiche zwischen den einzelnen Streifen zu verdecken, sind Überlappungsbereiche zwischen den Streifen von der halben Fensterbreite nötig, so daß pro Streifen noch einmal ein zusätzlicher Speicheraufwand fällig ist, der jedoch vergleichsweise gering ausfällt. Durch die zusätzliche Bearbeitung der Übergangsbereiche bleibt die Bildqualität des ursprünglichen Verfahren erhalten, jedoch steigt natürlich die Gesamtbearbeitungszeit mit jedem weiteren Streifen, so daß die Anzahl der Streifen nicht zu groß ausfallen sollte.

Einige mögliche Detailoptimierungen um die Bildqualität zu steigern, wie auch die genaue Berechnung der Flächenanteile oder die optimierte Bestimmung der Mischfaktoren an den Ecken eines Objektes wird weiter unten im einzelnen beschrieben werden.

Da mit dem hier beschriebenen Antialiasing-Verfahren nicht jene Fälle behandelt werden können, für die im gepointsampelten Bild nicht genügend Informationen vorhanden sind, ist es weiterhin günstig, dieses Verfahren mit einem Anderen zu kombinieren. Ideal wäre ein Verfahren, welches ausschließlich Polygone (z.B. durch Supersampling oder Areasampling) behandelt, deren Breite bzw. Höhe unter zwei Pixel liegt, damit der zusätzliche Aufwand sich in Grenzen hält und die Echtzeitfähigkeit nicht verloren geht. Die Kombination sollte prinzipiell keine Probleme bereiten, da beim Post-Antialiasing nur solche Kanten behandelt werden, die im Bild noch deutliche Sprünge enthalten. Die durch ein anderes Verfahren behandelten Kanten würden im Bild genau wie gefilterte Texturkanten erscheinen, und demnach nicht behandelt werden.

Um die Kante auch lokal möglichst genau annähern zu können, wird pro Pixel ein zentriertes Fenster verwendet, d.h. bei der Bearbeitung jedes einzelnen Pixels einer Zeile wird immer wieder ein anderes Fenster mit Kanteninformation vorgesehen.

Bei der Verschiebung des Fensters um ein Pixel, müßten an der rechten Kante für jedes Pixel die Kanteninformation neu generiert werden. Bei einem Fenster der Größe 17 x 17 würde es beispielsweise bedeuten, daß 17 Farbwerte aus dem Speicher gelesen werden müssen, und auf die Zugehörigkeit zu einer Kante untersucht werden. Dieser extreme Aufwand an Speicherbandbreite ist nicht hinnehmbar, jedoch fällt auf, daß bei der Bearbeitung des Pixels aus der nächsten Zeile 16 der 17 Kantenwerte noch einmal benötigt werden. Darum ist es günstig, die Kanteninformation so lange aufzubewahren, bis sie nicht wieder benötigt wird. Pro Pixel muß somit immer nur ein neuer Farbwert gelesen und die Kanteninformation aus ihm extrahiert werden. Alle anderen Informationen stehen schon von den vorangegangenen Zeilen zur Verfügung. Im Speicher werden demzufolge bei einem 17 x 17 Fenster nur 16 Bildschirmzeilen an Kanteninformation gehalten. Dieser Speicherbedarf ist auch "on-chip" realisierbar, so daß kein externer Speicher benötigt wird.

Wesentlich ist die Erkennung der Kanten, die wirklich bearbeitet werden müssen, da die Kantenerkennung alle Kanten im Bild liefert.

Hierbei ist es wichtig, die für die Bearbeitung relevanten Kanten zu ermitteln. Eine Kante läßt sich also so definieren, daß es sich um eine abrupte Änderung im Signal handeln muß. Die Entscheidung, ob ein Pixel potentiell als Kante betrachtet wird, kann also relativ lokal getroffen werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figuren 1 bis 22          schematische Detaildarstellungen von Kantenbereichen zum Erläuterung des Prinzips des erfindungsgemäßen Verfahrens,

Figuren 24 bis 66         Blockdarstellungen verschiedener Baugruppen einer Hardware-Lösung zur Realierung des erfindungsgemäßen Verfahrens sowie

Figur 67                eine Zeichenerklärung zu den in den Figuren 24 bis 66 gegebenen Symboldarstellungen.

Die Tabellen 1 bis 33 geben Ein- und Ausgangszustände der Schaltungen wieder, wie es in der Beschreibung jeweils erläutert ist.

Zur Beschreibung der Verfahrenseinzelheiten soll zunächst der Verfahrensablauf des erfindungsgemäßen "Post-Anti-Aliasing" anhand von Pixeldarstellungen der zu betrachtenden Kantenbereiche näher beschrieben werden.

Signaltechnisch läßt sich ein Kantenbild durch die Faltung des Bildes mit einer Maske, deren Summe Null ist, gewinnen. Die Summe der Elemente in der Maske muß Null ergeben, da sich nur somit der Gleichanteil im Bild entfernen läßt (d.h. einfarbige Flächen werden im Kantenbild einen Wert von Null erhalten). Um diese Bedingung gewährleisten zu können, werden sowohl positive als auch negative Elemente in der Maske enthalten sein, so daß das ein durch Faltung erzeugtes (beispielsweise) Grauwertbild positive und negative Werte beinhalten wird. Der Betrag des Grauwertes ist dabei ein Maß für die Stärke einer Kante im betrachteten Pixel (ein Wert von Null bedeutet also, daß im Pixel keine potentielle Kante zu finden ist).

Ausgangspunkt für die Bestimmung der Lage der realen Geraden bei dem erfindungsgemäßen Verfahren ist ein binäres Kantenbild, wobei die Kante immer nur in Abhängigkeit vom verwendeten Kantenerkennungsoperator korrekt gefunden werden kann. Jeder Kantenoperator hat seine Eigenheiten (ein/zwei Pixel breite Kanten, Aussehen des Bereiches zwischen zwei Sprüngen), die im Kantenbild richtig interpretiert werden müssen, um sinnvolle Ergebnisse zu erhalten.

Durch das folgend beschriebene Verfahren entsteht zunächst ein Kantenbild mit 4 Bit Information pro Pixel, das letztlich vorzustellende Verfahren arbeitet aber auf einem Binärbild, also nur mit der Information Kantenpixel ja oder nein.

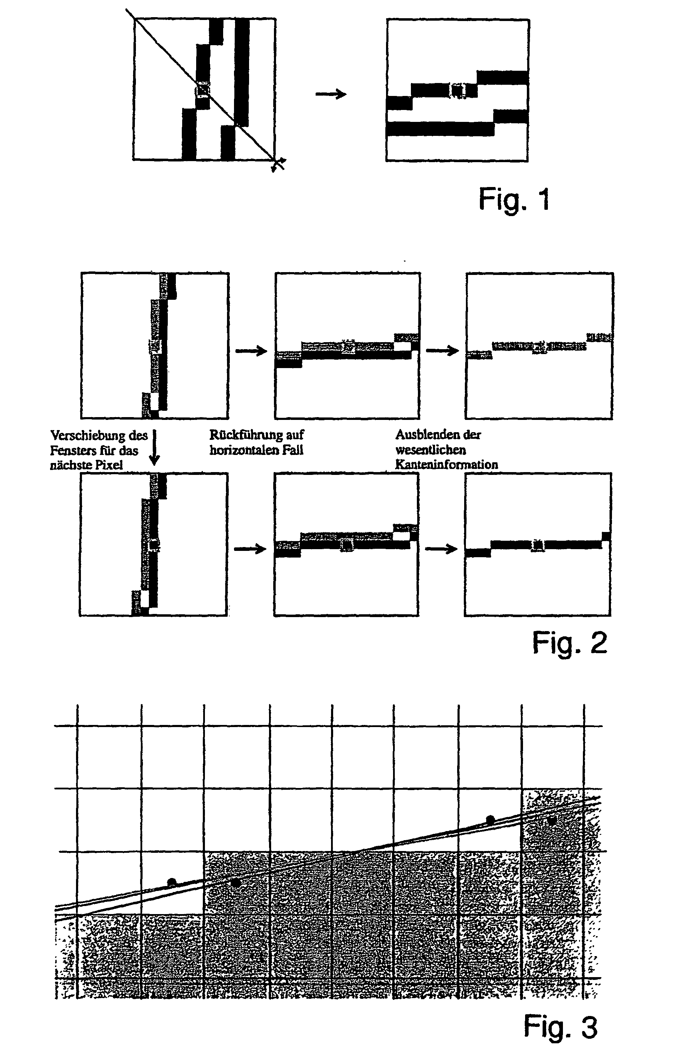

Vorab erfolgt eine Steigungsdiskrimination: Bei x-dominanten Kanten erfolgt eine Zumischung der Farbe des darüber- bzw. des darunterliegenden Pixels, da nur von ihnen sichergestellt ist, daß wenigstens einer auf der anderen Seite der gerade betrachteten Kante liegt (und damit eine andere Farbe hat). Der linke und der rechte Nachbar kann sich aufgrund des Pointsamplings immer noch auf der gleichen Seite der Kante befinden. Entsprechendes gilt für die y-dominanten Kanten, so daß die Feststellung, daß y-dominante Kanten genauso behandelt werden sollten wie x-dominante sich aufdrängt. Eine Möglichkeit, die Fälle gemeinsam zu behandeln, ergibt sich, indem der eine Fall auf den anderen zurückgeführt wird. Die Rückführung erfolgt pro zu behandelndem Kantenpixel, indem der aktuell betrachtete Ausschnitt aus dem Kantenbild an der Hauptdiagonalen gespiegelt wird. Dieser Vorgang ist in Figur 1 dargestellt. Pro Pixel stehen nun zwei Kantenbildausschnitte zur Verfügung, die weiterhin vollkommen identisch behandelt werden können. Der eine führt dabei zu den vertikalen und der andere zu den horizontalen Mischfaktoren. Jeder Kantenbildausschnitt besteht aus zwei Bit Informationen, da für die Verfolgung der x-dominantem Kanten nur die Information "positive bzw. negative horizontale" Kante (entsprechend für die Verfolgung der y-dominaten Kante nur die Information "positive bzw. negative vertikale" Kante) benötigt wird.

Die Kante wird dann als "positiv" bzw. "negativ" bezeichnet, wenn die Differenz der Beträge der im Farbraum vorhandenen Farbvektoren der beiden im Bild aneinander angrenzenden Farben bei der jeweils gewählten Betrachtungsrichtung positiv bzw. negativ ist.

Ausgehend von dem aktuell zu betrachtenden Pixel wird nun aus den noch vorhandenen zwei Bit die richtige Information ausgeblendet. Ist das Zentralpixel als positiv markiert, so werden auch in der Umgebung nur positive Kantenpixel berücksichtigt, um wirklich nur die positive Kante zu verfolgen; entsprechend werden, falls das Zentralpixel als negativ markiert ist, nur negative Kantenpixel betrachtet. Somit entfällt beim Beispiel eines senkrecht stehenden Fahnenmastes die störende negative bzw. positive Kante und beide Fälle können korrekt behandelt werden, wie es in Figur 2 dargestellt ist. Hier wird die Behandlung zweier nebeneinanderliegender Kanten dargestellt, die nach Rückführung auf den horizontalen Fall durch Drehung als x-dominante Binärbilder weiterverarbeitet werden. Ist das Zentralpixel jedoch als positiv und negativ markiert, so liegt der Spezialfall vor, bei dem benachbarte Farben die gleiche Farbvektorlänge besitzen, und es erfolgt eine ODER-Verknüpfung der beiden Informationen pro Pixel.

Von nun an wird also mit einem binären Kantenbildausschnitt weitergearbeitet, bei dem nur noch x-dominante Kanten markiert sind, d.h., der Winkel der zu erkennenden Geraden liegt zwischen -45 und + 45 °.

Um aus dem vorliegenden Kantenbild reale Geraden extrahieren zu können, muß erst einmal ermittelt werden, wie die dargestellten Pixel generiert wurden.

Die Geometriebeschreibung einer in einem Bild dargestellten Szene erfolgt fast ausschließlich auf Polygonbasis, da Polygone am einfachsten handhabbar sind. Weitere Darstellungsmöglichkeiten, wie B-Splines (Angabe nur von Stützstellen der Oberfläche), Voxelmodelle (Beschreibung des kompletten Volumens des Objektes), sowie CSG-Bäume (Aufbau des Objektes aus geometrischen Primitiva), finden kaum Anwendung, da aus ihnen abgeleitete Darstellungsverfahren für die Rasterisierung zu komplex sind, um sie in Hardware realisieren zu können.

Bei den in Hardware realisierten Polygonrenderern handelt es sich meist um Dreiecksrenderer, da nur bei Dreiecken gewährleistet ist, daß nach einer Transformation (Rotation, Skalierung, Translation) das Polygon eben bleibt, was bei allgemeinen Polygonen aufgrund der beschränkten Rechengenauigkeit der Rechner nicht immer der Fall ist.

Die Dreiecke, beschrieben durch die drei Eckpunkte und Parametern (z-Wert, Texturkoordinaten, Normalen, usw.) an diesen Punkten, werden in einem sogenannten "Scanliner" rasterisiert, und anschließend wird jedem Pixel aufgrund der interpolierten Parameter ein Farbwert zugewiesen, der dann im Framebuffer abgelegt wird, falls das Pixel nicht durch ein Pixel eines anderen Dreiecks verdeckt ist. Unser Interesse gilt nun genau diesem Scanliner, der entscheidet, welche Pixel gesetzt werden, und welche nicht.

Die Arbeitsweise eines Scanliners läßt dabei sich wie folgend beschreiben: Ausgehend vom unteren Eckpunkt des Dreiecks wird für jede Zeile der reale Anfangs- und Endpunkt bestimmt, alle Pixel die zwischen diesen beiden Punkten liegen, gehören demnach zum Dreieck und werden dargestellt. Die Entscheidung, welches Pixel das erste bzw. letzte darzustellende ist, wird aufgrund der Lage des Pixelmittelpunktes zur realen Kante getroffen. Liegt der Pixelmittelpunkt innerhalb des Anfangs- und Endpunktes dieser Zeile, so wird das Pixel gesetzt. Durch dieses Vorgehen ergeben sich an den Kanten charakteristische Stufenmuster, die als einzige Informationsquelle trotzdem vieles über die Lage der realen Kante aussagen.

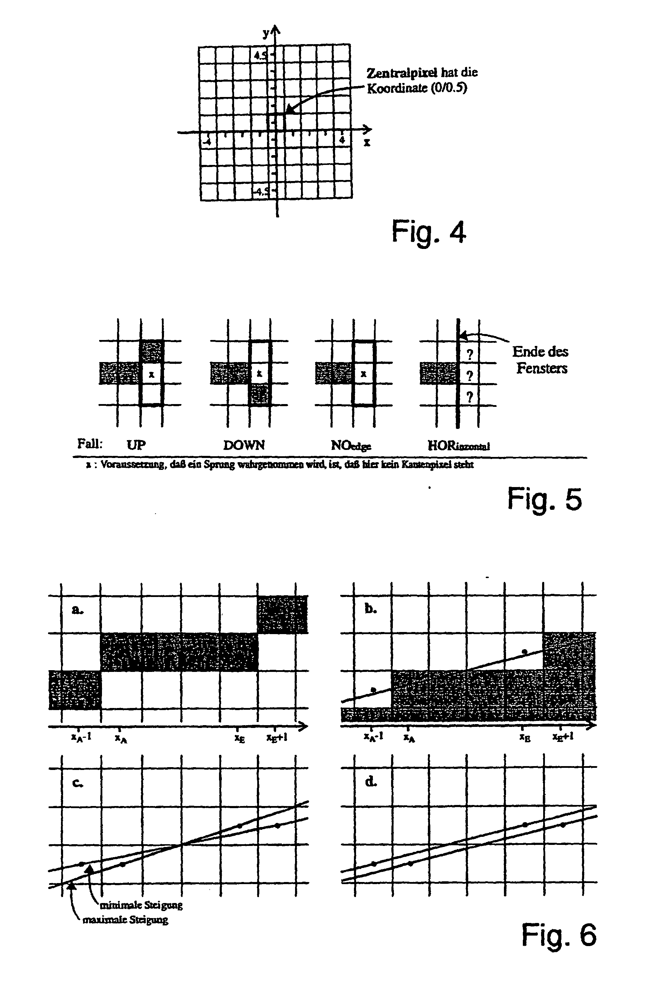

Ergibt sich im Bild eine Stufe, so ist bekannt, daß die reale Kante zwischen den beiden Pixelmittelpunkten der verschiedenfarbigen Pixel verlaufen muß. Dies ist in Figur 3 dargestellt. Werden mehrere Stufen bei diesem Vorgehen berücksichtigt, so wird immer genauer die reale Kante angenähert. Die Verfolgung von Stufen gestaltet sich in realen Bildern schwieriger als hier zunächst angenommen, da im Bildausschnitt meist nicht nur eine Kante enthalten ist, sondern auch sich kreuzende Kanten, Kanten, die ihre Steigung ändern, sowie Texturkanten und Rauschen.

Zunächst soll nur der Idealfall einer vorhandenen Kante im aktuellen Kantenbildausschnitt behandelt werden, wobei weiterhin die Einschränkung getroffen wird, daß nur eine Stufe der Kante verfolgt wird, die Erweiterung auf mehrere Stufen erfolgt in einem späteren Abschnitt.

Über das aktuelle Fenster des Kantenbildes wird der Einfachheit halber ein lokales Koordinatensystem gelegt, durch das alle Pixel von nun an beschrieben werden können. Das Zentralpixel erhält die Koordinate (0/0.5); 0.5 in der y-Koordinate deshalb, da der hier angenommene Differenzoperator immer das Pixel oberhalb des Farbsprunges markiert, bei y= 0.0 liegt demnach genau der Farbsprung. Ein derartiges Fenster ist in Figur 4 dargestellt.

Ist das Zentralpixel also als Kante markiert, so wird im aktuellen Fenster die Stufe weiter nach rechts bzw. links verfolgt, um die nächstgelegenen Sprünge zu finden. Es ergeben sich somit zwei Werte $x_A$ und $x_E$, die die Endpunkte der Stufe bezeichnen. Am Ende der Stufe kann es nun prinzipiell vier verschiedene Konstellationen geben.

1. Schräg oberhalb liegt ein weiteres Kantenpixel, d.h., es erfolgt ein Sprung nach oben (Dieser Fall wird weiterhin als UP bezeichnet.)

2. Schräg unterhalb liegt ein weiteres Kantenpixel, d.h., es erfolgt ein Sprung nach unten (Fall: DOWN)

3. In der nächsten Spalte existiert kein weiteres Kantenpixel; die Kante hört also hier vollkommen auf (wir befinden uns wahrscheinlich an einer Ecke des Objektes) (Fall: NO)

4. Wir befinden uns am Rand des Kantenfensters, die Stufe paßte demnach nicht vollständig in das aktuelle Fenster. Es wird sich voraussichtlich um eine sehr flache Kante handeln. (Fall: HOR)

Voraussetzung ist dabei die Anwendung eines Operators, der bei der Verfolgung der Kante einen Kantenstreifen mit der Breite nur eines Pixels liefert.

Die ersten beiden Fälle bilden den Normalfall, der letzte Fall ist unangenehm, da keine Aussage über den weiteren Verlauf der Kante möglich ist. Die entsprechend markierten Fälle sind in Figur 5 nebeneinander wiedergegeben (von links nach rechts (UP, Down, NOedge, HORizontal).

Falls an beiden Enden der Stufe entgegengesetzte Fälle auftreten (links UP / rechts DOWN oder links DOWN / rechts UP), kann nun bereits eine Gerade festgelegt werden. Die Endpunkte befinden sich bei $x_{Anf} := xA-0.5$ und $xEnd := x_{E+0.5}$ und die y-Koordinate ergibt sich bei einem Sprung nach oben zu 0.5, bei einem Sprung nach unten zu -0.5.

Am Beispiel einer schräg nach oben verlaufenden Kante soll verdeutlicht werden, warum die Gerade durch die beiden Punkte

$(x_{Anf,yAnf}) := (xA-0.5,-0.5)$ und
$(xEnd,yEnd) := (xE + 0.5,0.5)$

gelegt wurde. Zu beachten ist dabei die Unterscheidung von xA (letztes Pixel der Stufe) bzw. xE und xAnf (Punkt auf der angenommenen Geraden) bzw. xEnd. Aufgrund des Musters im Kantenbild ist genau bekannt, wo sich der Sprung zwischen den beiden beteiligten Farben befindet. Dieser Zusammenhang ist aus Figur 6 ersichtlich, welche die Zuordnung der möglichen Verläufe der realen Geraden zu einer Kante wiedergibt (Links oben: Muster im Kantenbild, rechts oben: Farbzuordnung der Pixel mit angenommener Geraden), links unten: minimale und maximale Steigung, rechts unten: parallele Geraden. Irgendwo zwischen den horizontal andersfarbigen Pixeln muß also die reale Kante verlaufen.

Während in Figur 6 die möglichen Extremfälle der möglichen Geraden dargestellt sind, bildet die gewählte Gerade nun genau einen Mittelweg zwischen allen Extremen, so daß der Fehler zur realen Geraden, unabhängig davon, um welche es sich handelt, minimiert wird.

Bei der Behandlung des Falles NO, in dem kein weiteres Kantenpixel in der nächsten Spalte vorhanden ist, wird dem Endpunkt die y-Koordinate 0.0 zugewiesen, da aus dem Kantenbild nicht ersichtlich ist, warum kein weiteres Pixel existiert. Der Grund kann entweder sein, daß eine Ecke eines Objektes vorliegt (in diesem Fall erscheint die Ecke etwas abgerundet), oder aber der Schwellwert bei der Kantenbildgenerierung nicht klein genug angesetzt war (so daß die Kante beliebig weiterläuft, jedoch nicht mehr als solche erkannt wurde).

Im vierten Fall (HOR) muß eine Sonderbehandlung vorgesehen werden, da dieser nur aufgrund der Beschränkung des Algorithmus auf ein Fenster auftritt.

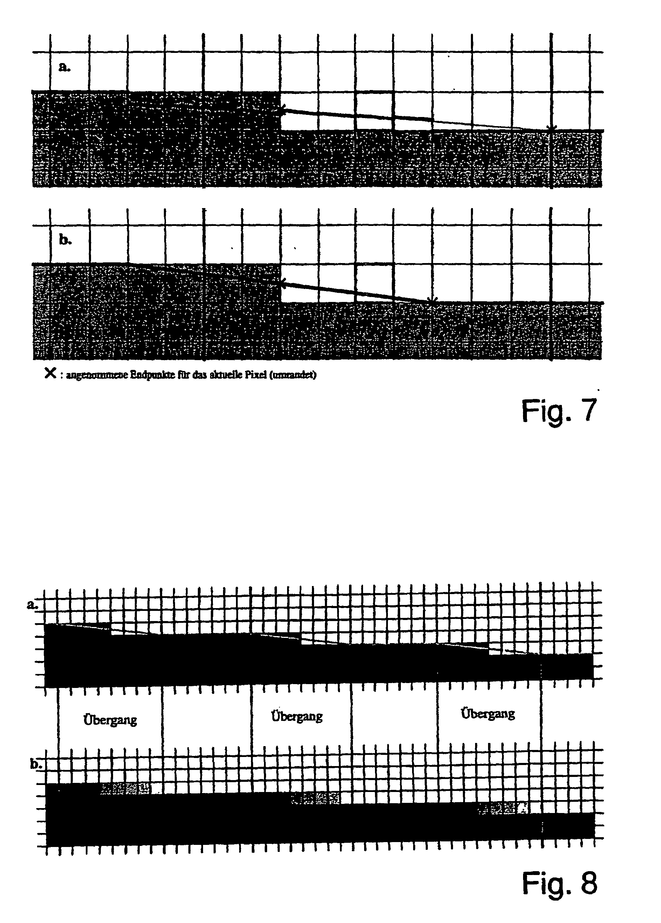

Der einfachste Ansatz ist, diesen Fall genau wie den vorherigen zu behandeln, dem entsprechenden Endpunkt also den y-Wert 0.0 zuzuweisen. Dies ist würde jedoch zu unrichtigen Ergebnissen führen, wie am Beispiel von Figur 7 ersichtlich ist. Für jedes Pixel wurde die Gerade eingezeichnet, die sich durch dieses Vorgehen ergibt. Bei der Verschiebung des Fensters wird die erzeugte Gerade immer flacher, bis sie auf einmal vollkommen horizontal wird, sobald der Sprung aus dem Fenster läuft.

Prinzipiell ist das auch wünschenswert, aber ergibt sich für das zu betrachtende Pixel fast immer der gleiche y-Wert, wodurch kein sinnvoller Verlauf interpoliert wird.

Stattdessen wird eine Gerade herangezogen, die für alle Pixel, die zumindest an einem Ende noch einen Sprung sehen, <u>gleich</u> ist. Ergab sich bei $x_{Anf}$ ein Endpunkt, so wird der zweite bei $x_{end} = x_{anf} + (n-1)/2$ , mit n der Fenstergröße (Figur 7b) festgelegt. Durch dieses Vorgehen ergeben sich bei sehr langen Stufen (Stufen, die nicht mehr komplett in das Fenster passen) Übergangsbereiche an den initialen Sprüngen, in denen ein Farbverlauf entsteht, und Bereiche, in denen die Farben erhalten bleiben. Dieser Zusammenhang ist in Figur 8 wiedergegeben. Je größer das Fenster gewählt wird, desto breiter wird der Übergangsbereich, was zur Folge hat, daß die reale Kante besser approximiert wird.

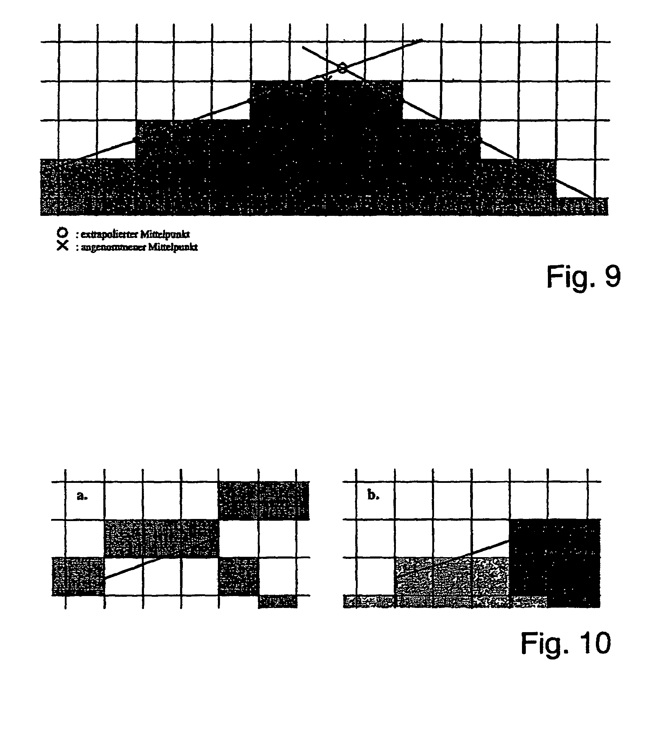

Desweiteren ist es möglich, daß an beiden Enden ein Sprung in die selbe Richtung erfolgt (DOWN/DOWN oder UP/UP). In diesem Fall geht eine schräg nach oben verlaufende Kante in eine schräg nach unten verlaufende (oder umgekehrt über), es wird also zusätzlich zu den beiden Endpunkten ein dritter Punkt benötigt, der bei $X_{mid} = (x_{end} + x_{anf})/2,0)$ festgelegt wird. Der mittlere Punkt ließe sich genauer bestimmen, indem man die jeweils nächsten Stufen in beide Richtungen verfolgt, und aus deren beiden Endpunkten den Mittelpunkt extrapoliert. Dies erhöht die Qualität des Bildes und ist daher sinnvoll, falls man bereit ist, den Mehraufwand hierfür in Kauf zu nehmen. Dieser Fall ist in Figur 9 wiedergegeben und recht selten und die Ergebnisse mit dem hier angenommenen Punkt sehen recht annehmbar aus, so daß der zusätzliche Rechenaufwand mit Blick auf die Hardwarerealisierung vermieden wird.

Alle bekannten Spezialfälle werden auf die Grundfälle zurückgeführt, indem die Zustände an den Endpunkten ermittelt umgesetzt werden. Dies geht im einzelnen aus Tabelle 1-3 hervor, wo die bei unterschiedlichen Stufen zu verfolgenden Geradenverläufe jeweils dargestellt sind.

Am Ende einer Stufe kann es vorkommen, daß sowohl ein Sprung nach oben als auch ein Sprung nach unten angezeigt wird, was durch das Zusammenlaufen zweier Kanten entsteht. Dieser Fall ist in Figur 10 wiedergegeben. Dabei ist im linken Teil der Figur das Kantenbild und im rechten Teil die Ausgangssituation dargestellt, welche zu dem links dargestellten Bild führte. Als beste Lösung für diesen Fall stellte sich die Betrachtung des entgegengesetzten Status heraus. Ist der entgegengesetzte Status UP, so wird der aktuelle auf DOWN gesetzt, wodurch die Hauptkante weiter interpoliert wird. Entsprechend ergibt sich bei DOWN ein UP für den aktuellen Status. Nur falls der andere Status keine Vorzugsrichtung vorgibt (NO, HOR oder ebenfalls UP/DOWN), wird der Status auf NO gesetzt, und so auf eine Interpolation an diesem Ende verzichtet.

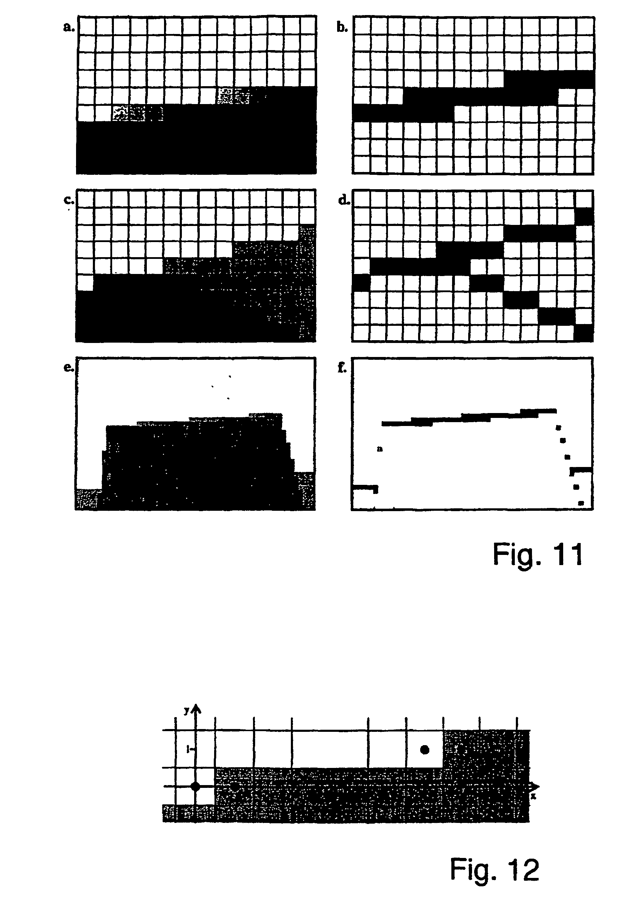

Texturkanten werden dadurch kenntlich, daß zwischen den Stufen ein Bereich existiert, in dem zwei Pixel im Kantenbild übereinander gesetzt sind. (Figur 11b) Texturkanten werden nicht weiter behandelt, da im Binärbild keinerlei Information über den wirklichen Farbverlauf an der Kante vorhanden ist; das Ergebnis einer neuerlichen Interpolation würde also immer eine Verschlechterung des Aussehens zur Folge haben. Es kann aber auch andere Gründe geben, daß zwischen zwei Stufen Pixel übereinander gesetzt sind, beispielsweise auch bei dem schon behandelten Fall zweier auf einen Punkt zulaufenden Kanten. Dieser Fall ist in Figur 11c wiedergegeben. In Figur 11 sind allgemein die Fälle wiedergegeben, welche zu "zwei übereinandergesetzten Pixeln" im Kantenbild führen. In diesen Fall muß trotzdem eine Behandlung erfolgen. Durch das Umsetzen des Status auf NO an dem Ende, wo der Übergangsbereich existiert, lassen sich beide Fälle sinnvoll behandeln. Bei einer Texturkante werden so beide Stati auf NO korrigiert, bei dem Fall zweier Kanten, wird nur der eine Status umgesetzt, durch den anderen erfolgt dann weiterhin eine Interpolation.

Problematisch erweist sich der Fall, bei dem zwischen den beiden Grundfarben gar kein Farbverlauf interpoliert wurde (wie es bei einem Testbild Ziff Davis' Winbench vorkommt). Das Kantenbild ist in keiner Weise von dem einer Texturkante unterscheidbar, und wird deswegen auch <u>nicht</u> behandelt. Dieser Fall ist in Figur 10e wiedergegeben.

Rauschen äußert sich im Kantenbild durch das vereinzelte Auftreten von Kantenpixeln, die in keinem Zusammenhang mit einer wirklic hen Kante stehen. Dieser Fall findet in den Tabelle 1 bis 3 insoweit Berücksichtigung, indem, falls beide Stati NO sind, der y-Wert auf Null gesetzt und somit nicht weiter behandelt wird.

Am Beispiel einer schräg nach oben verlaufenden Kante soll noch einmal verdeutlicht werde, welche Unterschiede sich zwischen der angenommenen Geraden, und der realen Geraden maximal ergeben können.

Der Einfachheit halber wird für die Betrachtung ein anderes Koordinatensystem zugrunde gelegt, bei dem der Nullpunkt im Pixel links von der Stufe liegt. Dies ist aus Figur 12 ersichtlich.

Die reale Gerade verläuft also sicher zwischen den Koordinaten (0,0) und (1,0) bzw. $(x_{E,1})$ und $(x_{E+1,1})$, da sich sonst eine andere Rasterisierung ergeben hätte. Die angenommene Gerade g verläuft durch die Punkte (0.5,0) und (xE + 0.5,1), woraus sich die Geradengleichung ergibt zu

$$g{:}y = \frac{1}{x_E} * (x - \frac{1}{2})$$

Wesentlich ist die maximale Differenz dieser Geraden zu allen anderen Möglichen. Die Differenz wird nur an den ganzzahligen x-Koordinaten benötigt, da nur dort Samplepoints liegen. Es müssen also die Differenzen zu allen möglichen Extremfällen der realen Geraden betrachtet werden.

Es ergeben sich drei Fälle (siehe Figur 6)

1. Differenz zu allen parallelen Geraden

Falls die reale Gerade parallel zur Angenommen verläuft, so ist die Differenz für jedes Pixel der Stufe die selbe. Aus der Geradengleichung für die am weitesten unten möglichen Geraden (Punkte (1,0) und $(x_{E+1,1})$)

$$g_u{:}y = \frac{1}{x_E} * (x - 1)$$

ergibt sich

$$\Delta y_1 = |g - g_u| = \frac{1}{2 * x_E}$$

als Differenz bei jedem x-Wert.

Aus der Geradengleichung für die am weitesten oben liegenden Geraden (Punkte (0,0) und $(x_{E,1})$)

$$g_0{:}y = \frac{1}{x_E} * x$$

ergibt sich

$$\Delta y_2 = |g_0 - g| = \frac{1}{2 * x_E}$$

als Differenz bei jedem x-Wert.

2. Differenz zur Geraden mit maximaler Steigung

Die Gerade mit der maximalen Steigung verläuft durch die Punkte (1,0) und $(x_{E,1})$ und wird beschrieben durch:

$$g_M{:}y = \frac{1}{x_E - 1} * (x - 1)$$

$$\Delta y_3\,(x) = |g_M - g| = \left| \frac{1}{(x_E - 1) * x_E} * (x - \frac{1}{2} * x_E - \frac{1}{2}) \right|$$

Die maximale Differenz wird sich am weitesten außen ergeben, da dort die Geraden immer weiter auseinanderlaufen, es werden also die x-Werte $1(\Delta y_3(1) = 1/2x_E)$ und $x_E(\Delta y_3(x_E) = 1/2x_E)$ in die Gleichung 10 eingesetzt, wodurch sich die maximale Differenz

$$\Delta y_3 = \frac{1}{2*x_E}$$

ergibt.

3. Differenz zur Geraden minimaler Steigung

Die Gerade mit der minimalen Steigung verläuft durch die Punkte (0,0) und $(x_{E+1,1})$ und die Geradengleichung lautet demzufolge:

$$g_m{:}y = \frac{1}{x_E+1}*x$$

$$\Delta y_4\,(x) = |g_m\text{-}g| = \left|\frac{1}{(x_E+1)*x_E}*(-x*\frac{1}{2}*x_E+\frac{1}{2})\right|$$

Nach den gleichen Überlegungen wie bei Punkt 2 ergeben sich die maximalen Differenzen bei 1 () und $x_E$ (), wodurch die maximale Differenz

$$(\Delta y_4\,(1) = \frac{(x_E\text{-}1)}{2*(x_E+1)*x_E}$$

*und*

$$x_E\,(\Delta y_4(x_E) = \frac{(x_E\text{-}1)}{2*(x_E+1)*x_E})$$

entsteht.

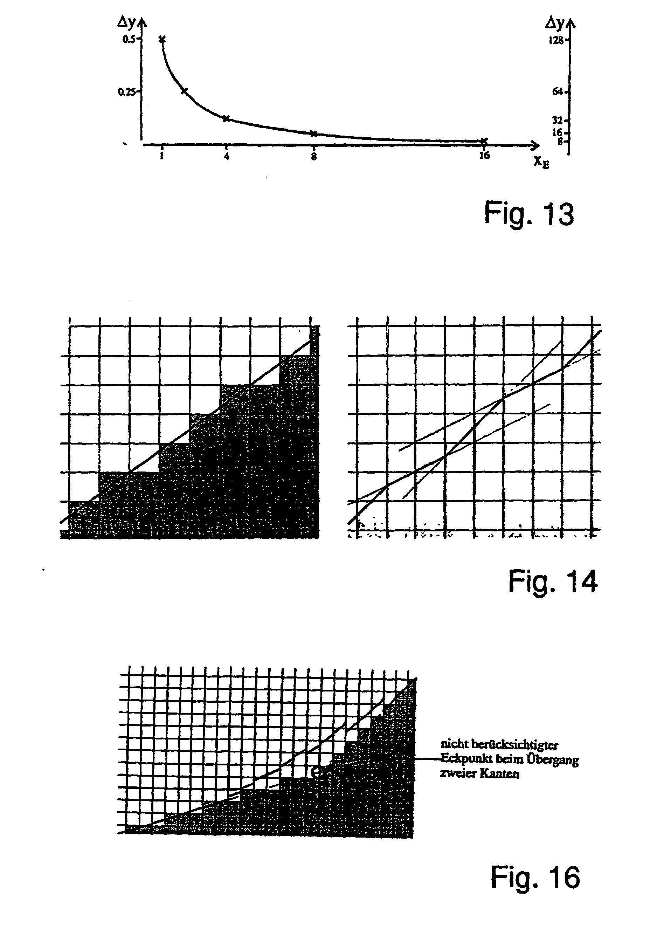

Wie aus den obigen Gleichungen ersichtlich ist, beträgt die maximale Differenz zu den Geraden $\Delta y = x1/2x_E$ Figur 13 gibt die maximale Abweichung in Abhängigkeit von der Stufenlänge $x_E$. Für lange Stufen entspricht die angenommene Gerade praktisch der wirklichen, wohingegen für kurze Stufen ($x_E < 4$) kaum annehmbare Differenzen entstehen, wenn man vom Grenzfall einer Kante zwischen weiß und schwarz ausgeht.

Eine Verbesserung ergibt sich, wenn statt nur über eine Stufe die Kante über mehrere Stufen verfolgt wird, da dadurch die reale Gerade besser approximiert werden kann. Bei einer fest vorgegebenen Fenstergröße kann bei kurzen Stufen eine Interpolation über viele Stufen erfolgen, bei langen Stufen meist nur eine Stufe interpoliert werden, was der Form der Differenz-Funktion entgegenkommt. Bei sehr langen Stufen, die nicht mehr komplett in das aktuelle Fenster hineinpassen, wird nicht mehr versucht, der realen Geraden zu folgen, da dazu lokal die Information fehlt, so daß ab einer Stufenlänge, die über die Fensterbreite hinausgeht, jede Stufe die gleiche Interpolation erfährt (Figur 8). Das Fenster sollte also möglichst groß gewählt werden, um diesen Effekt zu vermeiden; bei einem Fenster der Größe des eigentlichen Bildes tritt dieser Fehler gar nicht mehr auf. Zu große Fenstergrößen widersprechen aber der eigentlichen Idee des Algorithmus, so daß ein Kompromiß zwischen den beiden Extremen gefunden werden muß.

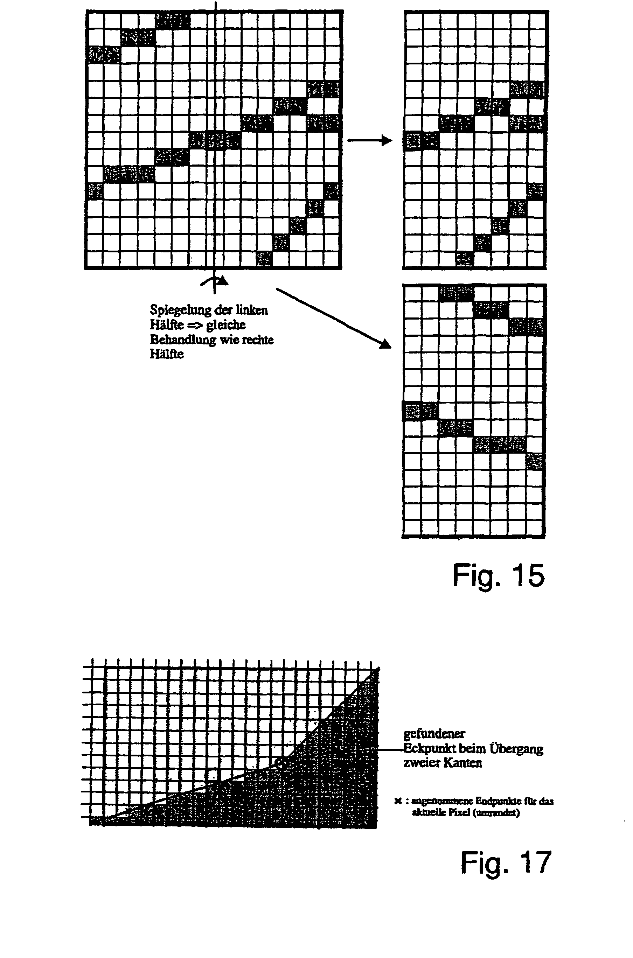

Bei der Verfolgung nur einer Stufe tritt wie gezeigt das Problem auf, daß kurze Stufen zu einer sehr ungenau approximierten Geraden führen. Dies wird besonders augenfällig, wenn die Rasterisierung einer Kante nahe 45° betrachtet wird, bei der abwechselnd "ein-pixel-lange" und "zwei-pixel-lange" Stufen auftreten (Figur 14). Bei den "ein-pixel-langen" Stufen wird eine Gerade der Steigung 45° angelegt, bei den "zwei-pixel-langen" Sprüngen jedoch eine Gerade mit der Steigung

$$\arctan\frac{1\,(\textit{Stufen in y-Richtung})}{2\,(\textit{Stufen in x-Richtung})} \approx 26{,}6\,\textit{Grad}$$

Durch die Verfolgung mehrerer Stufen kann die Vielfalt der möglichen Geraden (Steigung zwischen 26,6 und 45°) auf einen kleinen Bereich eingeschränkt werden, da die Endpunkte der anzulegenden Geraden immer weiter auseinander wandern, und somit die Gerade immer genauer beschrieben wird.

Mehrere Stufen werden jedoch nicht immer verfolgt, sondern nur dann, wenn die Stati an den Enden der zentralen Stufe (Stufe, zu der das aktuell betrachtete Pixel gehört) entgegengesetzte Richtungen der Sprünge anzeigen (also UP/DOWN oder DOWN/UP), da es sich nur in diesen Fällen um eine "gutartige" Kante handelt, die einer genaueren Approximation wert ist.

Ist einer der Stati NO, so ist dieser Endpunkt bereits festgelegt, da in dieser Richtung keine weiteren Stufen existieren. Dieser Endpunkt muß aber keinesfalls auf der realen Geraden liegen, so daß bei einer Verfolgung der Kante in die andere Richtung zwar die Steigung genauer bestimmt werden kann, jedoch stimmt der Ansatzpunkt der Geraden und damit der zu berechnende Flächenanteil nicht.

Bei einem Endstatus HOR handelt es sich auf jeden Fall um eine sehr flache Kante. Da nicht einmal die zentrale Stufe ins aktuelle Fenster paßte, wird garantiert auch keine andere Stufe komplett sichtbar sein.

Für die weitere Behandlung ist Voraussetzung, daß die Bearbeitung symmetrisch erfolgt, so daß der Fall "Stufen nach links verfolgen" auf den Fall "Stufen nach rechts verfolgen" zurückgeführt wird. Weiterhin wird versucht, die Stufen aus dem halben Fenster (nur die rechte Seite wird benötigt) mittels der Position des Endpunktes der zentralen Stufe und des Status an dieser Stelle zu extrahieren (vgl. Figur 15).

Erfolgte ein Sprung nach oben, wird eine Zeile höher versucht, wieder eine möglichst lange Stufe zu finden; entsprechend wird bei einem Sprung nach unten eine Zeile tiefer verfahren. Am Ende der Stufe wird dann wiederum der Status festgestellt, und sofern der Status der selbe wie am Ende der zentralen Stufe ist, wird versucht, nun die nächste Stufe zu verfolgen. Von weiterem Interesse sind nur solche Stufen, die noch vollständig ins Fenster passen. Als Ergebnis erhält man eine Anzahl von Stufen mitsamt ihren jeweiligen Längen. Das Verfahren sieht auf den ersten Blick recht aufwendig aus, es muß jedoch jede Spalte des Kantenfensters nur ein einziges Mal betrachtet werden.

Der einfachste Ansatz wäre jetzt, die jeweiligen Endpunkte der letzten Stufen als Punkte auf der approximierten Geraden festzulegen, jedoch liefert das in einigen Fällen vollkommen falsche Ergebnisse. Zum Beispiel wird der Fall zweier Kanten unterschiedlicher Steigungen nicht korrekt behandelt. Durch das hier skizzierte Verfahren würde die Ecke zwischen den beiden Kanten nicht wahrgenommen, und somit weginterpoliert, wobei nicht einmal eine kontinuierliche Änderung entsteht, sondern immer wieder Sprünge (Figur 16). Noch ungünstiger sieht es bei der Rasterisierung eines Kreises aus, der prinzipiell aus mehreren Kanten zusammengesetzt werden kann, deren Steigungen sich allmählich ändern. Hierbei würde sogar über mehrere Ecken hinweg interpoliert werden.

Bei der Rasterisierung durch die Scankonvertierung entstehen an einer Kante charakteristische Sprungmuster, die eingehalten werden müssen. Ist für einen Sprung eine der Regeln nicht mehr gültig, so kann man davon ausgehen, daß dieser Sprung zu einer anderen Kante gehört, somit kann die entsprechende Stufe eliminiert werden.

Regeln bei der Rasterisierung einer Kante:

1. Es können maximal zwei verschiedene Stufenlängen vorkommen, deren Stufenlängen sich außerdem um maximal 1 unterscheiden dürfen.

2. Nur eine der beiden Stufenlängen darf mehrmals hintereinander auftreten.

3. Durch das Aneinanderreihen der Anzahlen der Stufen, die die gleiche Länge haben, erhält man eine Zahlensequenz, bei der abwechselnd immer eine Eins und dann eine beliebige Zahl ( > 0) steht. Die Einsen (nur die an jeder zweiten Position) werden aus dieser Sequenz gestrichen. Bei der erhaltenen Sequenz dürfen wieder nur zwei verschiedene Zahlen vorkommen, die sich um eins unterscheiden.

4. Bei der unter 3. erhaltenen Sequenz darf nur eine der beiden möglichen Zahlen mehrmals hintereinander auftreten.

5. Durch wiederholtes Anwenden der Regeln 3. und 4. auf die Zahlensequenz, läßt sich ein immer globalerer Blick auf die Kante gewinnen.

Je kleiner das betrachtete Fenster gewählt wird, desto weniger der oben genannten Regeln müssen beachtet werden, da in einem kleines Fenster nur sehr wenige Stufen passen, und somit nicht genügend Information für alle Regeln zur Verfügung steht. Bei der hier als Beispiel beschriebenen Hardware-Implementierung wurde eine Fenstergröße von 17 x 17 gewählt, bei der nur die ersten beiden Regeln implementiert wurden, da die dritte Regel nur in sehr wenigen Fällen Anwendung finden würde, und die Unterschiede so marginal sind, daß der Mehraufwand nicht gerechtfertigt ist. Bei der nachfolgend beschriebenen Software-Implementierung, die für beliebige Fenstergrößen ausgelegt ist, wurden die Regeln bis einschließlich Nr. 4 berücksichtigt.

Ausgehend von der zentralen Stufe werden sukzessive jeweils immer eine Stufe nach rechts bzw. links zu den betrachteten Stufen hinzugefügt. Ist für eine der zugefügten Stufen eine Regel nicht mehr erfüllt, so wird die Stufe wieder entfernt, und es wird nur noch in die andere Richtung weitergesucht. Können auf beiden Seiten keine weiteren Stufen hinzunehmen werden (ohne die Regeln zu verletzen), so ist dieser Vorgang abgeschlossen, und es können aus den Stufen die Endpunkte der anzulegenden Geraden bestimmt werden.

Falls die letzten Stufen an beiden Enden komplett benutzt werden, ergibt sich das Problem, daß es bei der Verschiebung des Fensters um ein Pixel vorkommen kann, daß am linken Rand eine Stufe nicht mehr ins Fenster paßt, und gleichzeitig eine neue Stufe am rechten Rand dazugenommen wird, was in einer relativ starken Änderung der angenommenen Geraden resultiert.

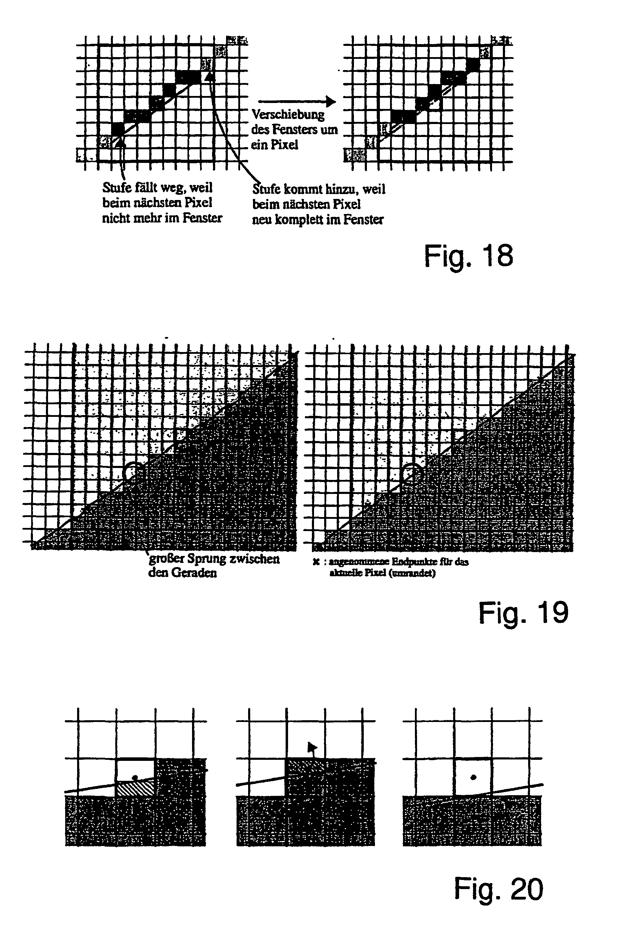

In Figur 18 ist wiedergegeben, wie die Verschiebung des Fensters um ein Pixel nach rechts zu einer neuen und einer wegfallenden Stufe führt.

Dieser Effekt kann vermieden werden, wenn die letzten Stufen nur halb benutzt werden, das heißt es wird die halbe Länge zur x-Koordinate und 0.5 zur y-Koordinate hinzugerechnet. Durch dieses Vorgehen wird die abrupte Hinzunahme bzw. das abrupte Weglassen einer Stufe verdeckt, und die Geraden benachbarter Pixel passen sich besser einander an (Figur 19).

Das Verfahren arbeitet wie vorgestellt auf einem gepointsampleten Bild, die endgültige Farbgebung eines Pixels ergibt sich also aus seiner gepointsampleten Farbe unter Zumischung der Farben benachbarter Pixel. Die Zumischung der Farben wird jedoch nicht in jedem Fall durchgeführt. Handelt es sich bei betrachteten Pixel um kein Kantenpixel, das heißt es wurden keine extremen Farbsprünge zu den benachbarten Farben wahrgenommen, so wird der ursprüngliche Farbwert übernommen, was bei ca. 90% der Pixel eines Bildes auftritt. In den meisten anderen Fällen erfolgt eine Zumischung nur einer benachbarten Pixelfarbe, und zwar der, zu der der Farbsprung existierte, nur in Ausnahmefällen erfolgt eine Zumischung von mehr als zwei Farben.

Die Bestimmung der einzelnen Mischfaktoren erfolgt auf der Grundlage der pro Pixel angelegten Gerade(n), die durch die wahrnehmbaren Farbsprünge im Bild bestimmt werden. Die Zumischungsrichtung ergibt sich aus der Lage des Pixels bezüglich des Farbsprunges. Wurde beispielsweise ein Farbsprung zum darüberliegenden Pixel erkannt, so wird daraus ein Mischfaktur bzgl. dieses Pixels bestimmt.

Für die Bestimmung der vier Mischfaktoren aus den einzelnen Richtungen sind demzufolge vier Geraden nötig:

    1. Ist das darüberliegende Pixel im Kantenbild als <u>horizontal</u> markiert, so ergab sich ein Farbsprung zum aktuellen Pixel und es wird durch dieses Pixel eine Gerade bestimmt, die den UP-Mischfaktor festlegt.

    2. Ist das aktuelle Pixel im Kantenbild als <u>horizontal</u> markiert, so ergab sich ein Farbsprung zum darunterliegenden Pixel und es wird eine Gerade bestimmt, die den DOWN-Mischfaktor festlegt.

    3. Ist das linke Pixel als <u>vertikal</u> im Kantenbild markiert, so ergab sich ein Farbsprung zum aktuellen Pixel und es wird eine Gerade unter Rückführung auf den horizontalen Fall bestimmt, die den LEFT-Mischfaktor festlegt.

    4. Ist das aktuelle Pixel als <u>vertikal</u> markiert, so ergab sich ein Farbsprung zum rechten Nachbarn und es wird eine Gerade unter Rückführung auf den horizontalen Fall bestimmt, die den RIGHT-Mischfaktor festlegt.

Bei den Punkten 1 und 3 fällt auf, daß das aktuelle Pixel gar nicht als Kantenpixel markiert worden war. Das kam daher, daß der Differenzoperator immer nur Pixel markiert, die entweder links (für den vertikalen Operator) oder oberhalb (für den horizontalen Operator) des Farbsprunges liegen. In diesen beiden Fällen muß das aktuelle Fenster also um ein Pixel nach oben (im Fall 1) bzw. um ein Pixel nach links (im Fall 3) verschoben werden, damit das nachfolgend vorgestellte Verfahren angewendet werden kann, da dort davon ausgegangen wird, daß das Zentralpixel ein Kantenpixel enthält, von dem aus die Gerade verfolgt werden soll.

Das Koordinatensystem, in dem der Anfangs- und Endpunkt der Geraden festgelegt wird, wurde so definiert, daß die x-Koordinate des betrachteten Punktes Null ist und der Farbsprung sich genau bei der y-Koordinate Null befindet

Die Gerade wurde definiert durch die beiden Punkte $(x_{Anf}, y_{Anf})$ und $(x_{End}, y_{End})$, somit lautet die allgemeine Geradengleichung:

$$y = \frac{y_{End} - y_{Anf}}{x_{End} - x_{Anf}} * (x - x_{Anf}) + y_{Anf}$$

Um den Mischfaktor aus dieser Geraden zu extrahieren, gibt es prinzipiell zwei verschiedene Verfahren.

Durch Einsetzen des x-Wertes 0 erhält man den Schnittpunkt der Geraden mit der y-Achse:

$$y_{Real} = - \frac{y_{End} - y_{Anf}}{x_{End} - x_{Anf}} * x_{Anf} + y_{Anf}$$

Ist der y-Wert größer als 0.0, jedoch kleiner als 1.0, so muß das Pixel an der Koordinate (0/0.5) eine Zumischung aus dem darunterliegenden Pixel erfahren. Ist der y-Wert kleiner als 0.0, jedoch größer als -1.0, so wird das Pixel an der Koordinate (0/-0.5) mit dem darüber liegenden Farbwert abgemischt. Der Betrag des y-Wertes gibt dabei an, wieviel zugemischt werden soll. Aus der Betrachtung zweier Spezialfälle soll klar werden, warum dies so festgelegt wurde. Ist der y-Wert genau Null, so verläuft die Gerade genau zwischen den beiden Pixeln, jedes Pixel gehört also voll zu der jeweiligen Farbseite. Ist der y-Wert jedoch fast 0.5, so gehört das obere Pixel nur zu 50% zur oberen Farbhälfte, hat jedoch vollkommen die Farbe der oberen Farbhälfte, da das Bild ja Ergebnis eines Pointsampling-Verfahrens war. Der y-Wert markiert nun, wo der eigentliche Farbsprung hätte stattfinden sollen, falls vertikal eine größere Auflösung gewählt worden wäre. Durch die Mischung erhält das Pixel nun eine Farbe aufgrund der Flächenanteile zwischen den beiden Extremfarben.

Liegt der Betrag des y-Wertes zwischen 0.5 und 1.0, so sollte aufgrund der Geraden das Pixel bereits den anderen Farbwert haben, nach dem Kantenbild hat es ihn jedoch nicht. Dies kann dadurch zustande kommen, daß die angenommene Gerade nicht exakt der wirklichen Kante entspricht. Es werden jedoch trotzdem Faktoren bis 1.0 zugelassen, da benachbarte Pixel ebenfalls nach der vermeintlich falschen Geraden interpoliert werden und falls der Mischfaktor auf 0.5 beschränkt würde, wäre ein Bruch in der fertig interpolierten Kante wahrnehmbar. Bei einem Wert über 1.0 (entsprechend unter -1.0) wird das Pixel an der Koordinate (0/0.5) komplett umgefärbt, und das Pixel darüber (0/1.5) müßte ebenfalls noch teilweise umgefärbt werden, was jedoch nicht getan wird, da dann die Kante sich zu weit von der realen entfernen würde. Diese drei Fälle sind in Figur 20 nebeneinander dargestellt.

Das zweite Verfahren liefert genauere Ergebnisse. Hierbei wird aufgrund der Lage der Geraden bezüglich des Pixelmittelpunktes der genaue Flächenanteil bestimmt, der sich unterhalb der Geraden befindet (Figur 20).

Befindet sich die Gerade unterhalb des Pixelmittelpunktes, wird entsprechend des Flächenanteils unterhalb der Geraden der Farbwert des darunter liegenden Pixels zugemischt, da dann der Farbsprung zum Pixel darunter existierte. Im anderen Fall wird entsprechend des Flächenanteils oberhalb der Geraden die Farbe des darüberliegenden Pixels zugemischt.

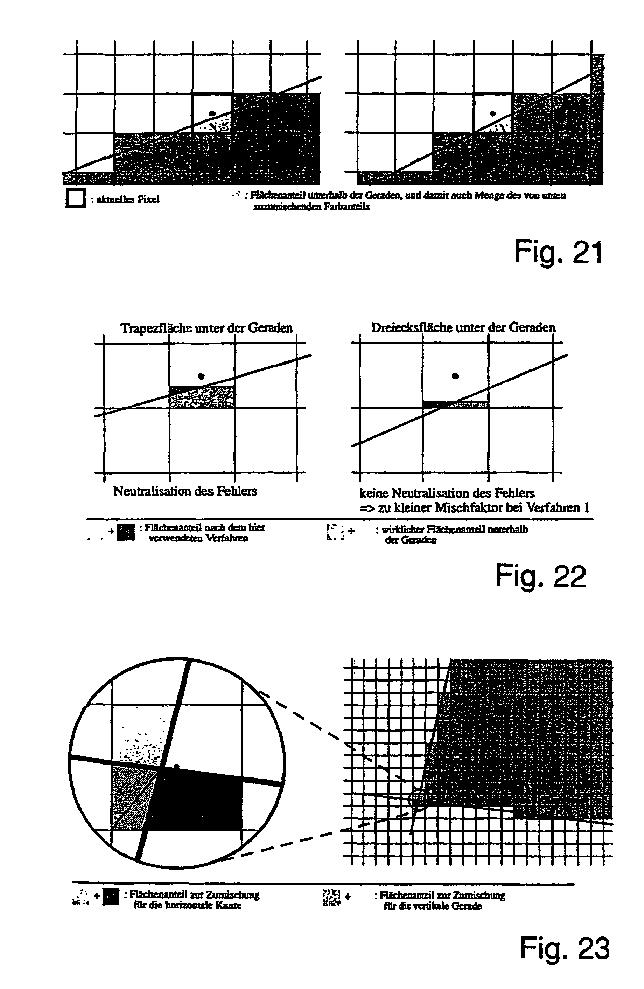

Die Flächenanteile lassen sich mittels eines Tabellen-Lookups bestimmen, bei dem lediglich die Steigung der Geraden und der Abstand der Geraden zum Pixelmittelpunkt eingeht. Das Verfahren läßt sich also recht gut in Hardware realisieren und stellt damit eine Erweiterungsoption des hier vorgestellten Algorithmus dar, mit dem eine größere Genauigkeit erzielt werden kann, jedoch mit einem größeren Hardwareaufwand, da zusätzliche Tabellen benötigt werden (Figur 21).

Einen wesentlichen Unterschied bei den beiden Verfahren gibt es nur im Fall einer Dreiecksfläche unterhalb der Geraden. In diesem Fall liefert Verfahren 1 einen zu kleinen Mischfaktor. Falls es sich um eine Trapezfläche handelt, so liefern beide Verfahren genau die selben Ergebnisse, da sich das Dreieck, das zuviel berechnet wurde, genau gegen das Dreieck, welches zu wenig gerechnet wurde, aufhebt (Figur 22 links).

Als problematisch stellt sich die Bestimmung des Mischfaktors für das zentrale Pixel dar. Falls nur horizontale Mischfaktoren (also UP und DOWN) bzw. nur vertikale Mischfaktoren (LEFT und RIGHT) ungleich Null sind, ergibt sich der zentrale Mischfaktor zu

$$mix_{center} = 1 - mix_{up} - mix_{down} - mix_{left} - mix_{right}$$

Die beiden gegenüberliegenden Mischfaktoren (UP/DOWN bzw. LEFT/RIGHT) ergeben zusammengezählt maximal 1.0, so daß auch der zentrale Mischfaktor im Bereich 0.0 bis 1.0 liegt. Sind jedoch vertikale und horizontale Mischfaktoren vorhanden, so ist dies nicht mehr gewährleistet. Das Problem entsteht daraus, daß sich die Faktoren in diesem Falle nicht mehr komplementär verhalten. Figur 23 enthält eine Ecke eines Objektes, an dem dies verdeutlicht werden soll. Die vertikale Kante gibt an, daß ein bestimmter Prozentsatz von linken Pixel zugemischt werden soll, gleiches gilt für die horizontale Kante bzgl. des unteren Pixels. Die beiden Flächen, die zu den Mischfaktoren führen, besitzen jedoch eine gemeinsame Fläche, die gedanklich getrennt werden müßte, und jedem Faktor nur ein Teil dieser Fläche zugeschlagen wird.

Diese genauere Betrachtung macht aber nur Sinn, wenn die Mischfaktoren sich auch auf die wirklichen Flächenanteile beziehen. Da bei dem implementierten Verfahren dies nicht verwirklicht ist, wird hier erneut eine Näherung eingeführt, indem bei vertikalen und horizontalen Mischfaktoren alle Faktoren halbiert werden.

$$mix_{center} = 1 - \frac{mix_{up}}{2} - \frac{mix_{down}}{2} - \frac{mix_{left}}{2} - \frac{mix_{right}}{2}$$

Durch diese Vorgehen ist wieder gewährleistet, daß der zentrale Mischfaktor im Bereich 0.0 bis 1.0 liegt. Die verwendete Näherung ist sehr grob, die Fehler werden im Bild jedoch nicht wahrgenommen, da die Ecke eines Objektes eine Diskontinuität darstellt, und dadurch der entstehende Farbfehler nicht auffällt.

Für die Farbmischung muß zwischen zwei oder mehr Farben interpoliert werden, um eine Zwischenfarbe zu erhalten. Diese Interpolation kann in einem beliebigem Farbraum durchgeführt werden (da alle in einander überführbar sind), wobei sich die Ergebnisse mehr oder weniger stark unterscheiden. Die Unterschiede in den Farben zwischen dem RGB- und dem YIQ-Modell sind mit bloßem Auge nicht wahrnehmbar. Da die Farben initial als RGB-Farben vorliegen und auch final wieder als solche benötigt werden, wird auf eine Umrechnung in ein anderes Farbmodell verzichtet, und die Interpolation wird im RGB-Farbraum vollzogen.

Die Farbmischung eines Pixels erfolgt letztlich pro Farbkanal nach der Mischungsformel:

$$col_{center}^{new} = mix_{center}*col_{center}^{old} + mix_{up}*col_{up}$$

$$+mix_{down}*col_{down}+mix_{left}*col_{left}+mix_{right}*col_{right}$$

Wobei auf der rechten Seite der Gleichung die Farben (col?) aus dem Originalbild stammen.

Da das Verfahren nur auf Informationen aus fertig gerenderten Bildern, die im Framebuffer stehen, zurückgreift, wurde eine Implementation als Stand-Alone-Programm vorgezogen, d.h., das Programm wird von der Kommandozeile mit einem Bild in beliebigen Format (TIFF, PPM, BMP usw.) aufgerufen, und schreibt ein antialiastes Bild heraus; ein direkter Anschluß an den Renderingprozeß ist also nicht nötig. So kann das Ergebnis des Verfahrens mit verschiedenen Renderern ausprobiert werden, die auch nicht als Software zur Verfügung stehen müssen, sondern von denen nur Bilder vorliegen. Ebenso ist es möglich, Kombinationen mit anderen Antialiasing-Verfahren zu testen, die schon im Rendering-Prozeß eingebaut sind, da mit dem hier vorliegenden Algorithmus nicht alle Aliasing-Effekte behoben werden können.

Es wurde viel Wert darauf gelegt, möglichst viele Fälle auf einen Grundfall zurückzuführen, wie beispielsweise die Verfolgung der vertikalen auf die Verfolgung der horizontalen Kanten, oder das Suchen der Stufen nach links auf das Suchen nach rechts. Durch dieses Vorgehen können Änderungen schnell umgesetzt werden, da sich immer nur der jeweilige Grundfall ändert, nicht aber die Rückführung, die einmalig implementiert werden mußte.

Die Fenstergröße ist variabel gehalten und nicht ausschließlich auf quadratische Fenstergrößen mit einem zentrierten Zentralpixel beschränkt, sondern es ist möglich, für jede Richtung eine eigene Blicklänge zu definieren. So ist es beispielsweise denkbar, horizontal einen größeren Ausschnitt zu wählen, da die Kanteninformation für die Pixel chipintern gespeichert ist. Nach unten sollten bei Verwendung im Display-Prozeß möglichst wenige Zeilen benutzt werden, da all diese Zeilen gespeichert werden müssen (Erklärung bei der weiter unten beschriebenen Hardware-Implementierung).

Die Implementierung des Post-Antialiasing-Verfahrens erfolgte in der Programmiersprache C, wobei insbesondere Wert auf Variabilität gelegt wurde. Durch Kommandozeilenparameter kann zwischen verschiedenen Varianten des Algorithmus umgeschaltet werden; so sind nicht nur alle Vorstufen der endgültigen Version verfügbar, sondern auch verschiedene zusätzliche Versuchsimplementierungen, wie beispielsweise verschiedene Möglichkeiten der Kantenbildgenerierung über Manhattandistanz oder quadratischer Distanz. Die Vorstufen des endgültigen Algorithmus dienten zum Vergleich, welchen Qualitätsgewinn die einzelnen eingebauten Features, wie die Verfolgung mehrerer Stufen anstatt einer, oder Verwendung der jeweils letzten Stufe nur halb, verursachten. So war es möglich, immer an den Stellen nachzubessern, bei denen der visuelle Eindruck der antialiasten Bilder noch zu wünschen übrig ließ.

Der Pseudoalgorithmus für das Verfahren stellt sich wie folgt dar (dick geschriebene Variablen sind die jeweiligen Ergebniswerte):

```
PostAntialiase(Image pic, Image result) {

    generateEdgePic(pic, edges);

    for y in 0..(pic.height-1) {

        for x in 0..(pic.width-1) {

            if isEdgePixel(x,y) {

                cutActualWindow(edges, edgeWindow);

                computeMixFactorsHorizontal(x, y,edgeWindow,

                            mix_up, mix_down);


                transformVerticalToHorizontal(edgeWindow);

                computeMixFactorsHorizontal(x, y,edgeWindow,

                            mix_left, mix_right);
```

```
        mixColors(mix_up, mix_left, mix_right,

                mix_down, pic[x,y-1], pic[x-1,y],
                pic[x,y], pic[x+1,y], pic[x,y+1],

                mixedColor);

        storeColor(mixedColor, result[x,y]);

    } else {

        storeColor(pic[x,y], result[x,y]);

    }

  }

 }

}
```

In isEdgePixel() wird getestet, ob das Pixel (x,y) als Kante, das Pixel (x,y-1) als horizontale oder das Pixel (x-1,y) als vertikale Kante im Kantenbild markiert ist; nur dann muß eine weitere Behandlung erfolgen, ansonsten wird mittels storeColor() der alte Farbwert einfach ins neue Bild übernommen.

In generateEdgePic() wird mittels des beschriebenen Verfahrens das Kantenbild generiert. In cutActualWindow() wird aus dem Kantenbild das Fenster ausgeschnitten, welches als Umgebung für das aktuelle Pixel dient. Dies ist nötig, da in der späteren Hardware auch nur eine begrenzte Umgebung zur Verfügung steht, da das Kantenbild "on-the-fly" generiert wird und nicht wie hier im voraus.

Die Funktion computeMixFactorsHorizontal() wird sowohl für die horizontalen Mischfaktoren (mix_up und mix_down) als auch für die vertikalen (mix_left und mix_right) aufgerufen. Dies ist möglich, da das aktuelle Kantenfenster mittels transformVerticalToHorizontal() so umgebaut wird, daß die ehemals vertikalen Kanten nun horizontal verfolgt werden können.

```
computeMixFactorsHorizontal(x,  y, edgeWindow,

                    mix_up, mix_down) {

    if isEdge(x,y) {

        maskRightEdgeType(edgeWindow,  binWindow);

        getPositionInEdge(binWindow,  xAnf, yAnf,

                    statAnf, xEnd, yEnd, statEnd);

        mixFactor(xAnf, yAnf, statAnf, xEnd, yEnd,

                    statEnd, mix_down);

    } else {

        mix_down = 0;

    }

    if isEdge(x,y-1) {

        translateWindow(edgeWindow);

        maskRightEdgeType(edgeWindow,  binWindow);

        getPositionInEdge(binWindow,  xAnf, yAnf,

                    statAnf, xEnd, yEnd, statEnd);

        mixFactor(xAnf, yAnf, statAnf, xEnd, yEnd,

                    statEnd, mix_up);
```

```
} else {
 mix_up = 0;


}


}
```

Mittels isEdge() wird getestet, ob an der entsprechenden Stelle im Kantenfenster ein Kantenpixel vorliegt, nur dann kann nämlich eine Kante verfolgt werden, ansonsten wird der entsprechende Mischfaktor gleich auf Null gesetzt. In maskRightEdgeType() wird aus dem Kantenfenster, welches bisher noch 4 Bit pro Pixel enthielt, das Bit ausgeblendet, welches durch das Zentralpixel des Fensters vorgegeben wird, so daß ab sofort mit einem Binärbild weitergearbeitet wird. Mittels translateWindow() werden alle Pixel des Kantenfensters um ein Pixel nach unten verschoben, so daß im Zentrum sich das Kantenpixel befindet, von dem aus die Kante verfolgt werden soll, um den Mischfaktor für das obere Pixel zu erhalten.

In getPositionInEdge() können nun beide Fälle genau gleich behandelt werden. In dieser Funktion erfolgt die wirkliche Verfolgung der Kante im Kantenbild, was zum Anfangspunkt ($x_{Anf, yAnf}$) und Endpunkt (xEnd,yEnd) und dem jeweiligen Status (UP / DOWN / NO / HOR) an den Enden führt.

Aufgrund dieser Information wird dann in mixFactor() letztlich der Mischfaktor bestimmt, der sich aus der jeweiligen Kante ergibt.

In mixColors() wird zunächst der noch fehlende Mischfaktor für das zentrale Pixel bestimmt, wobei wiederum verschiedene Varianten vorgesehen sind, und dann erfolgt anhand der Mischungsformel die wirkliche Mischung der fünf in Frage kommenden Farben.

Die nachfolgend dargestellte Hardware-Implementierung ist ein Ausführungsbeispiel, welches primär dazu dient die Ausführung des Verfahrens zu veranschaulichen. Es wurde versucht, die Lösung so allgemein wie möglich zu gestalten. So wurden beispielsweise die Adreßbreiten für die Zähler variabel gehalten, sowie auch die Bitbreiten der Mischfaktoren, genau wie die Tabellenbreite und -länge der verwendeten Dividierer. Die Allgemeinheit konnte jedoch nicht überall beibehalten werden, da sonst einige Module zu komplex geworden wären. Als Beispiel ist das Modul findSeq() zu erwähnen, bei dem ausgehend von einem (n x n)-Fenster etwa $n^2/8$ Pixel zu berücksichtigen sind, um die Verfolgung der Stufen zu gewährleisten. Weiterhin mußten die Positionen der Registerstufen auf einen speziellen Fall festgelegt werden, da bei einem größeren Fenster mehr Pipeline-Stufen nötig sind, weil die Komplexität ansteigt. Der Übersichtlichkeit halber wurden in den Blockschaltbildern der parametrisierbaren Module konkrete Bitbreiten vorgegeben.

Für die Hardware-Implementierung wurden folgende Parameter und Grenzwerte gewählt:

- Fenstergröße: 17 x 17

Ist die Fenstergröße zu klein gewählt (etwa 9 x 9), so läßt die Bildqualität bei flachen Kanten zu wünschen übrig, da die Übergangsbereiche sehr kurz werden (nur 8 Pixel / vergleiche dazu Figur 8). Ist das Fenster jedoch zu groß gewählt, so steigt die Komplexität einiger Module, und damit auch die Gatteranzahl, sehr stark an. Für die Implementation wurde also eine mittlere Fenstergröße gewählt, um einen Kompromiß zwischen diesen beiden Extremen zu finden.

- maximale Bildschirmbreite: 2048 Pixel/Zeile

Die maximale Bildschirmbreite wurde mit 2048 Pixel pro Zeile angenommen. Dies stellt sicherlich eine obere Grenze für Bildschirmauflösungen der nächsten Jahre dar. Die maximale Bildschirmhöhe ist ebenfalls mit 2048 Zeilen festgelegt. Da das Verhältnis von Breite zu Höhe im Regelfall fest vorgegeben ist (1,25 oder 1,33), so wird dieser Maximalwert sicherlich nie erreicht werden. Die Festlegung der maximalen Bildschirmbreite führte zum Festlegen der Adreßbreiten der Zähler auf 11 Bit und der maximalen Länge der verwendeten Pipes auf 2048 Elemente.

- Bitbreite der Mischfaktoren: 7 Bit

Dieser Wert ergab sich aus der Fehlerbetrachtung der maximalen Abweichungen der Mischfaktoren vom tatsächlichen Wert. (Die maximale Abweichung beträgt maximal 1/256 des Original-Mischfaktors. Aufgrund der Form der Mischungsformel ergibt sich somit eine maximale Abweichung um 5 Farbwerte.)

Aus der Festlegung der Mischfaktorbreite ergab sich auch die nötige Genauigkeit der Dividierer, die mit einer Bitbreite von 9 Bit angenommen wurden.

Das erfindungsgemäße Verfahren kann sowohl als Triple-Buffer als auch als zwischengeschaltetes Modul im Display-Prozeß Anwendung finden (Erklärung der beiden Konfigurationsmöglichkeiten in einem späteren Abschnitt). Der Entwurf mittels eines Triple-Buffers erfordert einen recht komplexen RAM-Controller, der die entsprechend nötigen Farbwerte aus dem Speicher (SDRAM oder einer anderen Speicherart) holt, und die gemischten Werte wieder zurückschreibt. Der Entwurf dieses Controllers würde den Rahmen dieser Arbeit sprengen, weswegen auf diese Variante verzichtet wurde. Das Grundsystem wurde also für den Display-Prozeß entworfen. Mittels kleiner Änderungen läßt sich das System für einen Triple-Buffer-Betrieb umrüsten, wie er weiter unten näher beschrieben ist.

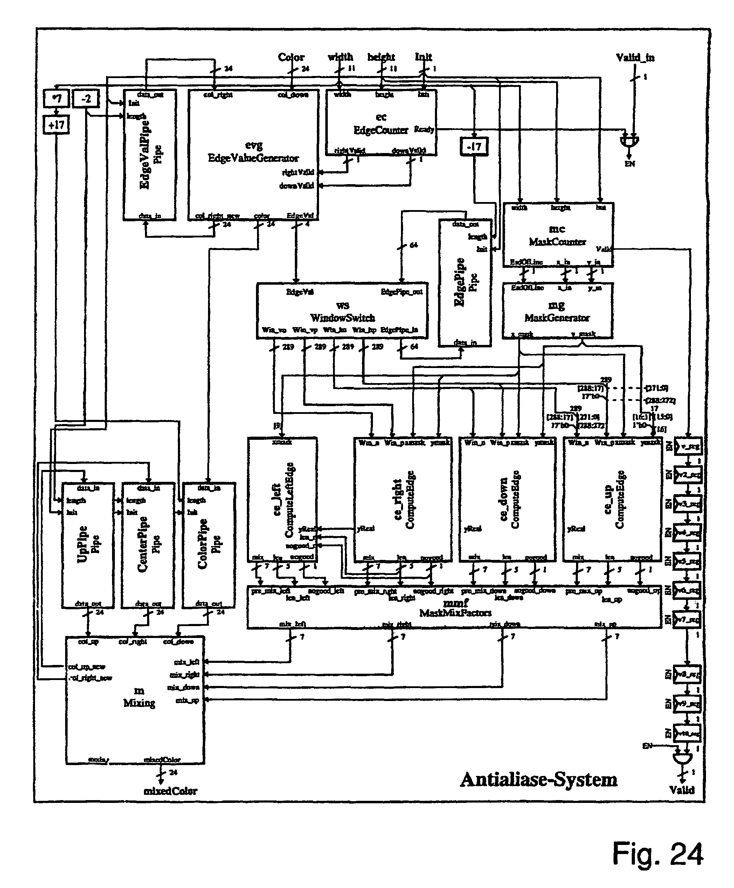

Das System ist nach dem Pipelining-Prinzip aufgebaut, d.h., es wird in jedem Takt ein fertiggemischtes Pixel geliefert. Um dies zu bewerkstelligen, befinden sich immer mehrere Pixel gleichzeitig in der Verarbeitung, da es nicht möglich ist, alle nötigen Bearbeitungsschritte in einem Takt (in unserem Fall 15 ns) durchzuführen. Das System funktioniert so, daß mit jedem Takt ein neuer Farbwert eines Pixels übernommen und eine feste Anzahl Takte später der gemischte Farbwert dieses Pixels als Ausgangswert bereitgestellt wird. Die einzelnen Registerstufen wurden an die Stellen so eingefügt, daß die maximale Bearbeitungszeit in einem Takt nicht überschritten wird. Als Taktrate wurde ein 66 MHz-Taktgewählt; die Periodendauer beträgt somit 15 ns. Ferner wurde eine 0,35 µm CMOS-Technik angenommen, da für diesen Fall die Verzögerungszeiten der einzelnen Elemente aus dem Entwurf eines anderen Systems (Visa⁺-System von GMD FIRST) in etwa bekannt waren. Wird das System für eine andere Taktrate oder Technologie vorgesehen, so verschieben sich natürlich die Registerstufen. Der Inhalt des Pipes in Abhängigkeit vom aktuellen Fenster ist in Figur 24 näher dargestellt.

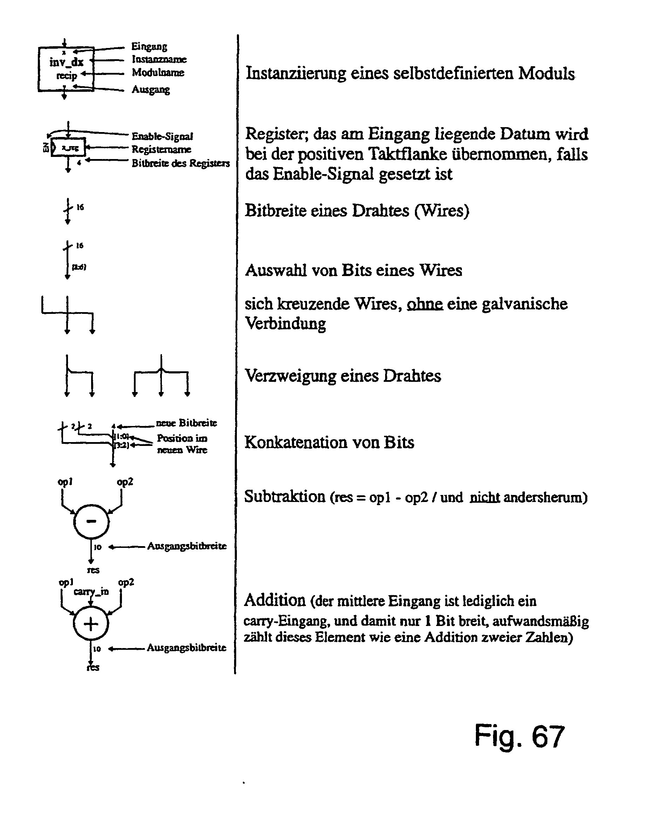

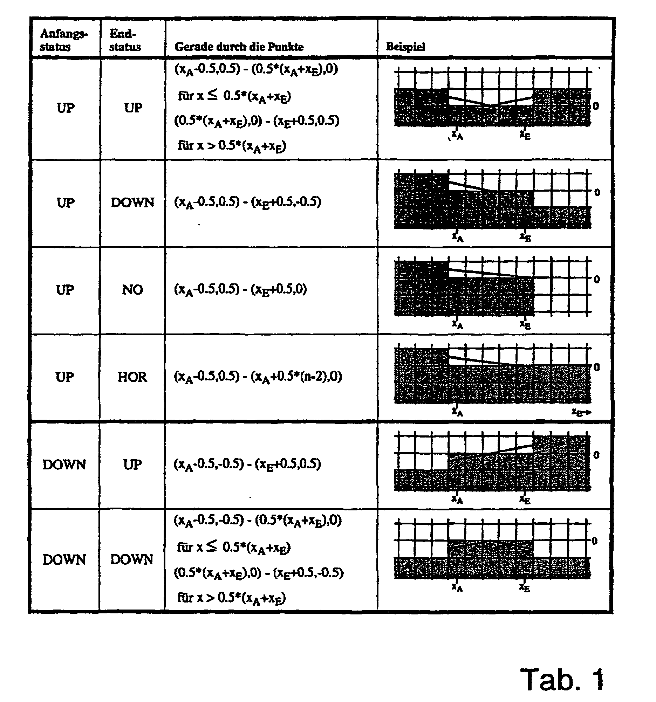

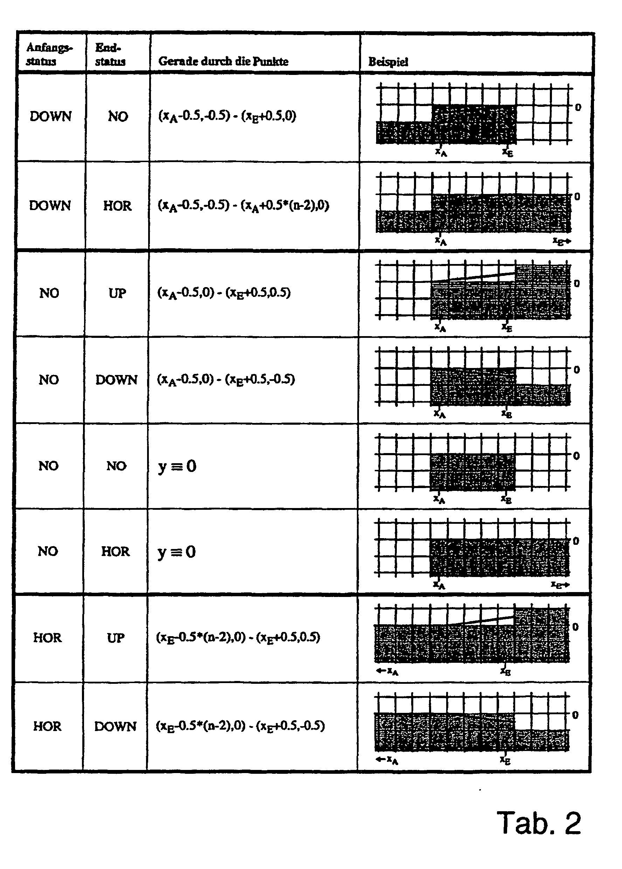

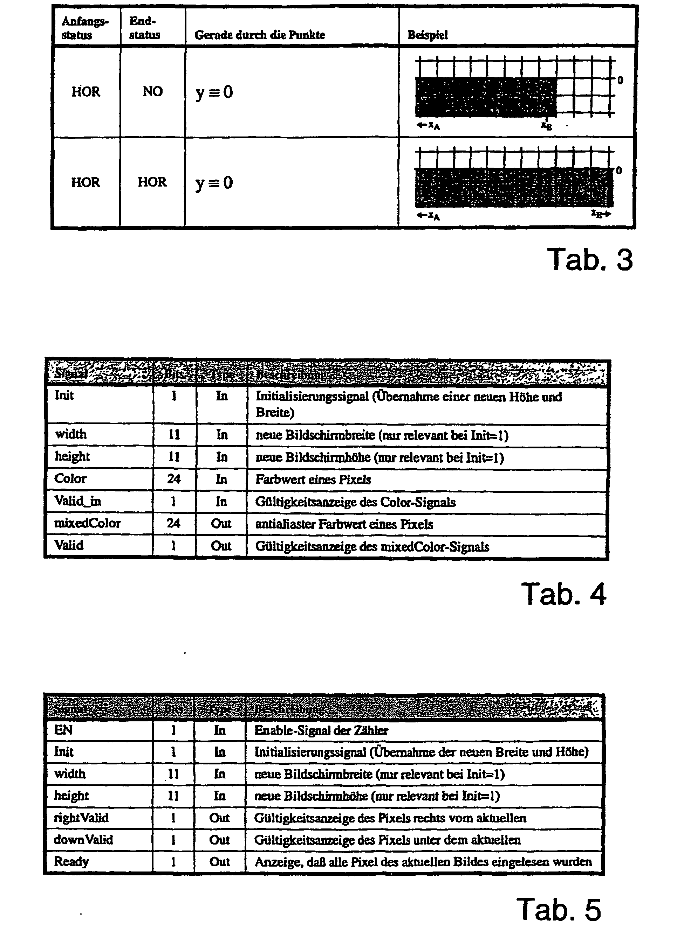

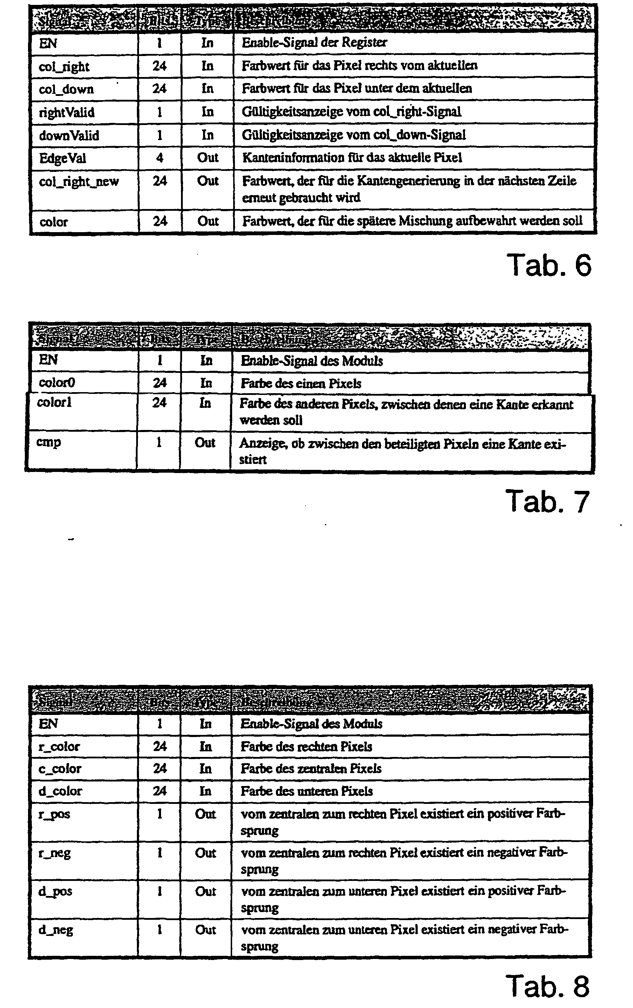

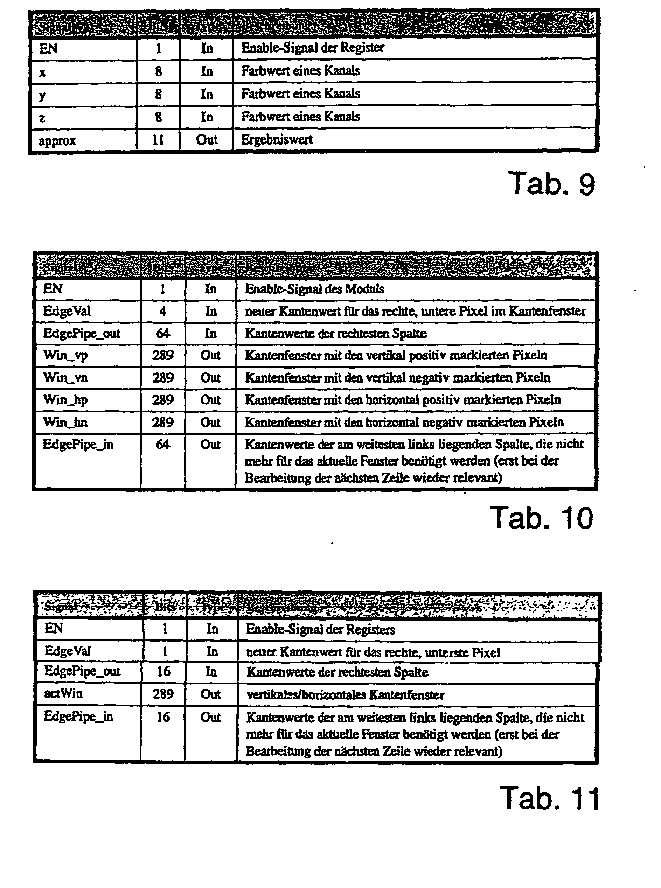

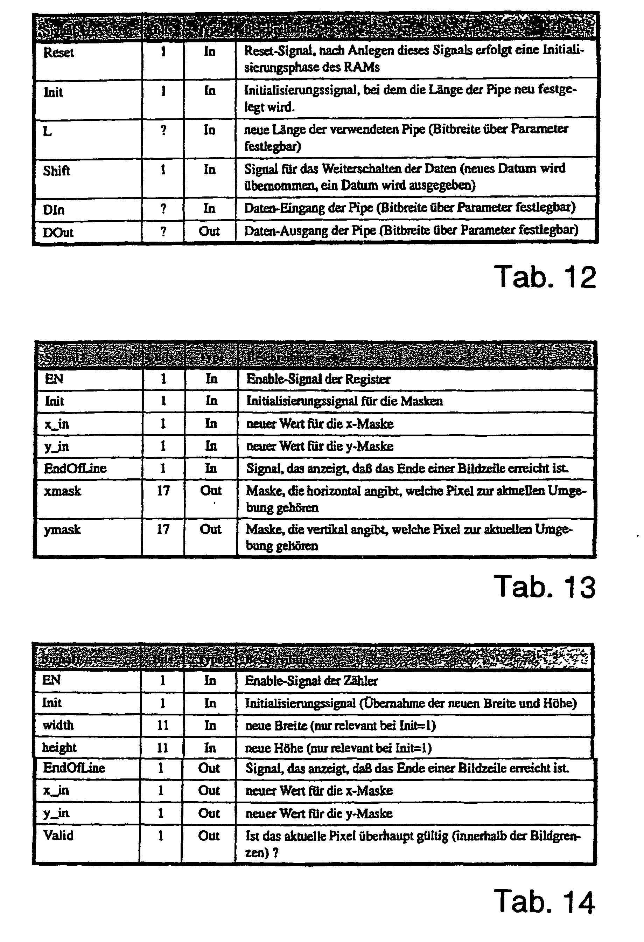

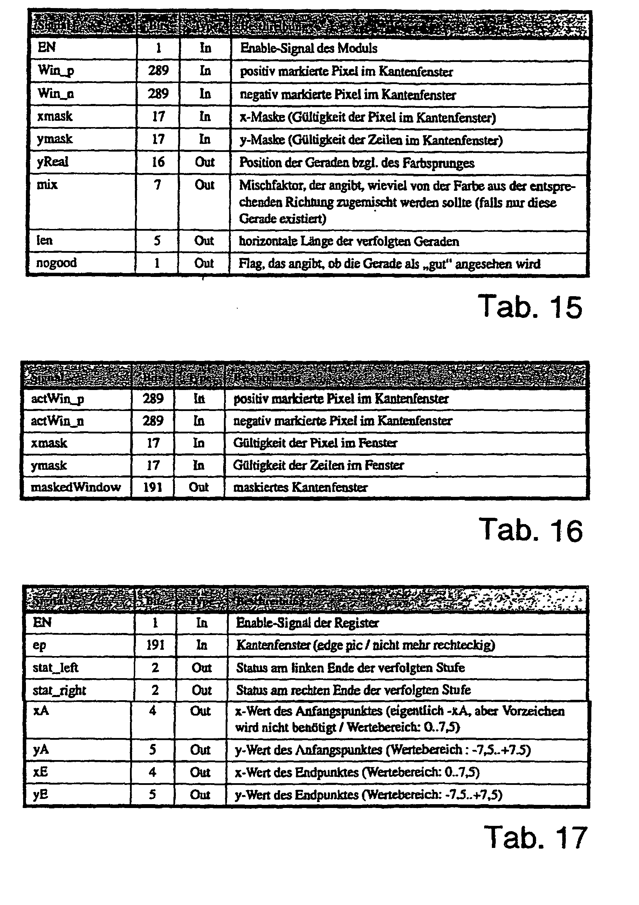

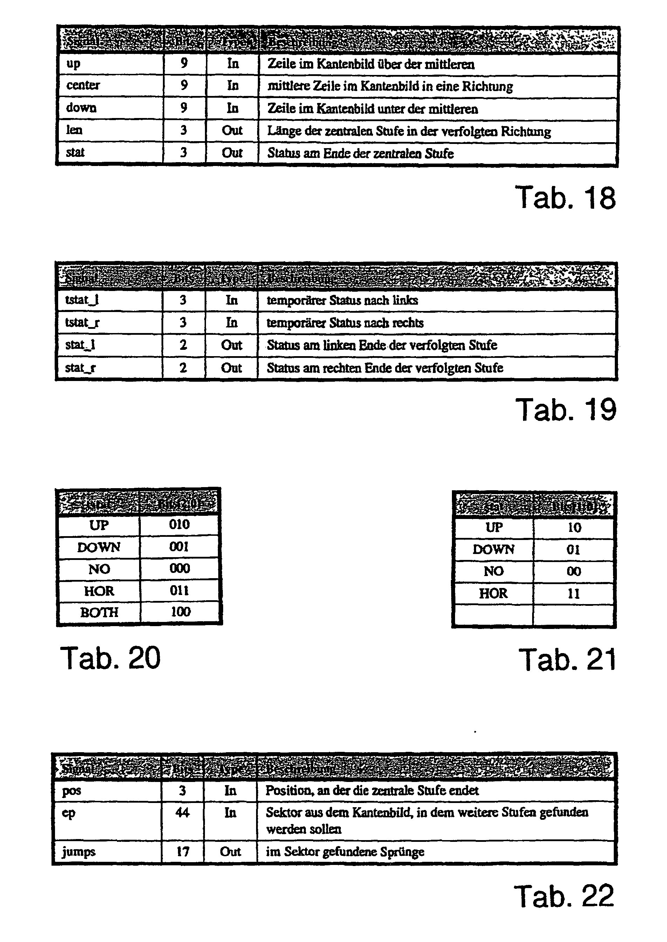

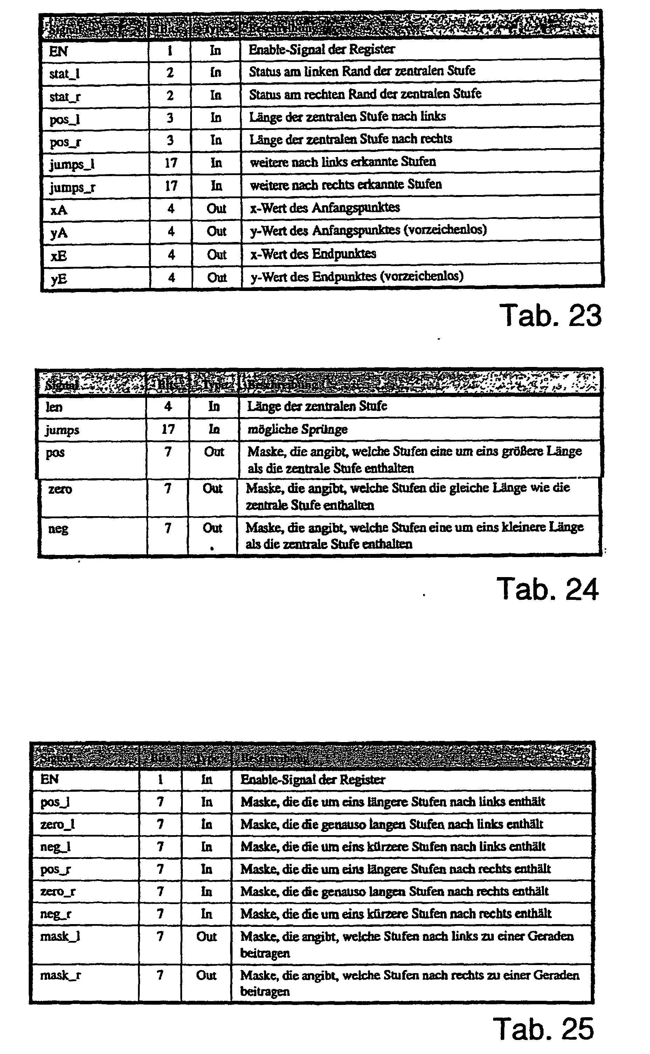

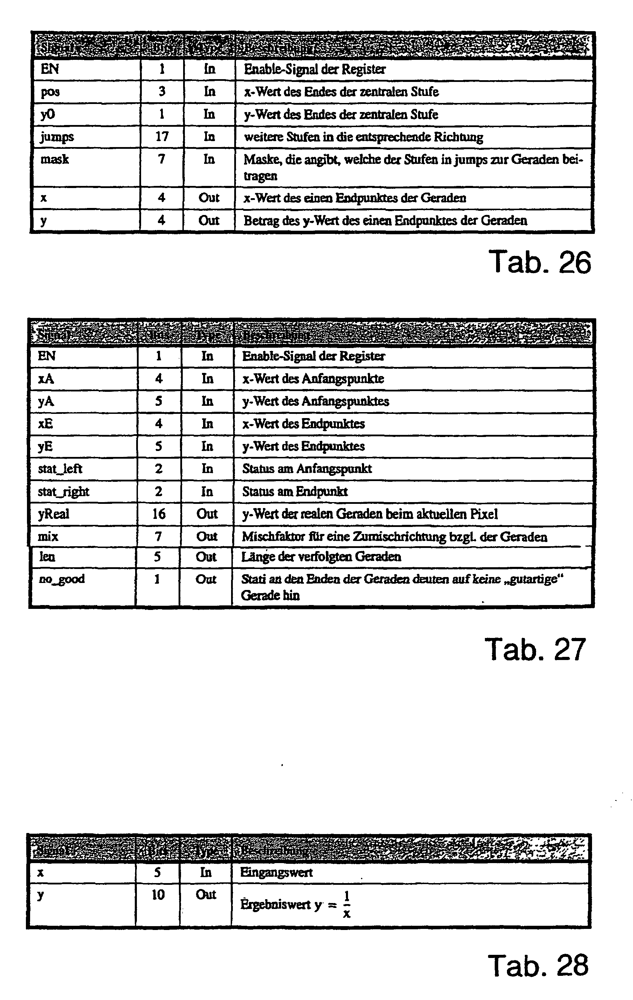

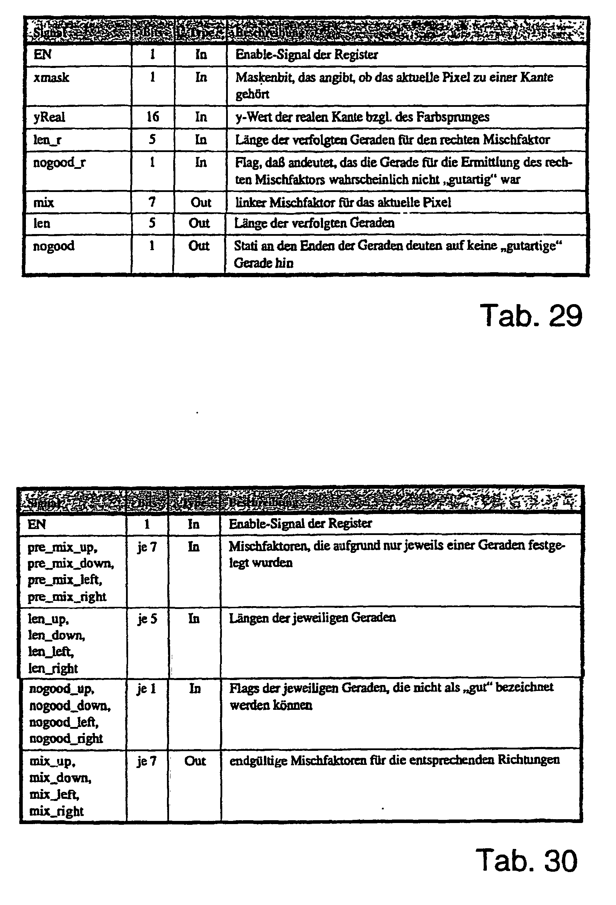

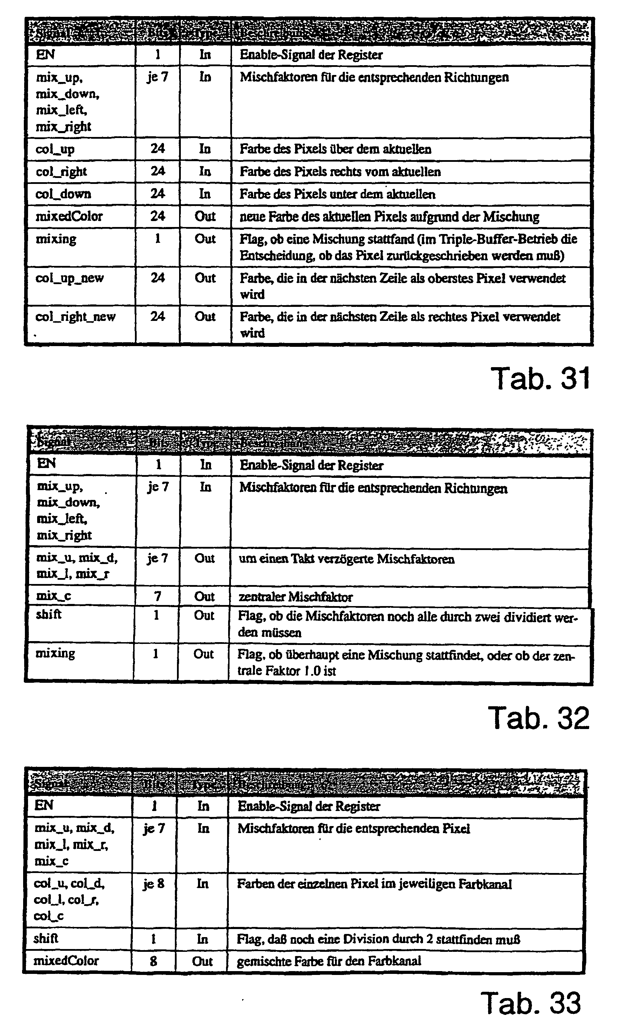

Die einzelnen Module werden durch Blockschaltbilder illustriert, deren verwendete Symbolik in Figur 67 erklärt wird. Die Module werden hier gemäß Top-down-Methode präsentiert, das heißt, es wird zunächst das Hauptmodul beschrieben, dann die darin enthaltenen Module. Sollte ein Modul weitere Untermodule enthalten, so wird das entsprechende Untermodule gleich im Anschluß an das Modul beschrieben.

Das Antialiase-System() gemäß Figur 24 sowie Tabelle 4 ist das Hauptmodul, von dem aus alle weiteren Module importiert werden und als Teilkomponenten weiter unten beschrieben sind.

Das vorliegende System besteht prinzipiell aus zwei entkoppelten Prozessen:

1. Generierung der Kanteninformation

2. Berechnung der Geraden aufgrund eines lokalen Ausschnittes aus dem Kantenbild und anschließende Mischung der Pixelfarben

Da die Mischung auf dem Kantenfenster arbeitet, muß der Kantengenerierungsprozeß immer einen Vorsprung von 8 Zeilen und 8 Punkten haben, so daß bei einem 17 x 17 Fenster schon alle Kanteninformationen zur Verfügung stehen, wenn sie benötigt werden.

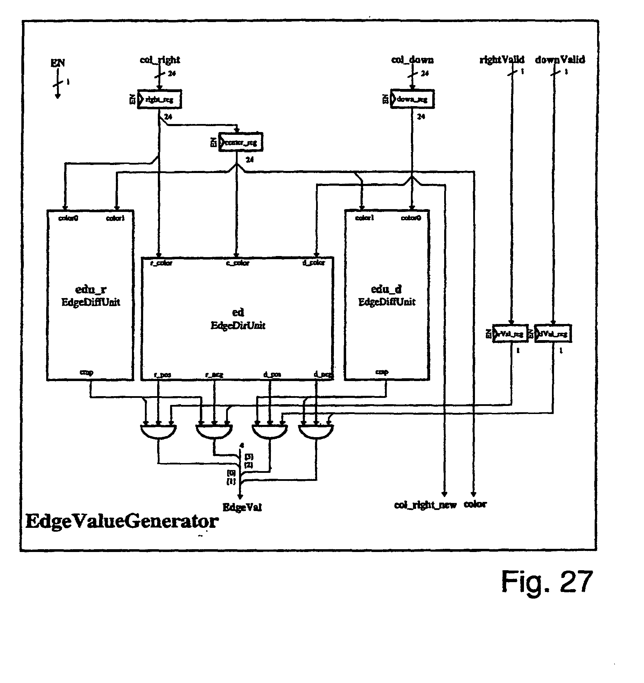

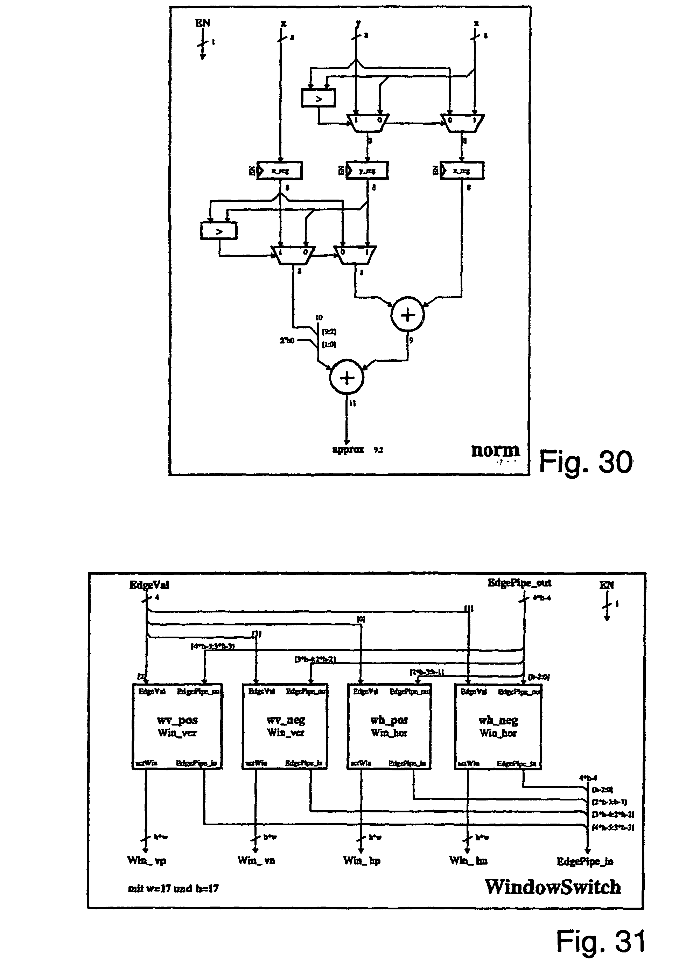

Die Kanteninformation wird im Modul EdgeValueGenerator() (Tabelle 6, Figur 27) aus den neu eingelesenen Farbwerten erzeugt. Im Modul Windowswitch() (Figur 31 ) wird der jeweils aktuelle Ausschnitt aus dem Kantenbild gehalten. Im Modul CenterPipe() werden die temporär nicht mehr benötigten Kanteninformationen zwischengespeichert. Pro Pixel werden 4 Bit Kanteninformation gehalten, wodurch sich bei 16 parallel abgelegten Pixeln eine Bitbreite von 64 Bit ergibt. Das wichtige bei diesem Modul ist, daß die Kanteninformation "on-chip" gespeichert wird, denn in jedem Takt werden 64 Bit abgelegt und auch parallel 64 Bit wieder eingelesen. Ein externer Speicher wäre also ständig damit beschäftigt, Werte abzulegen und wieder zu holen, und könnte somit für nichts Anderes verwendet werden. Die Speicherung ist praktisch auch möglich, da bei einer maximalen Bildschirmbreite von 2048 Pixeln 128 kB abgelegt werden müssen. (Derzeit sind on-chip RAMs von 1 MBit ohne größere Probleme realisierbar.) Dieser Speicher ist in beiden Varianten (Triple-Buffer / Display-Prozeß) nötig.

Für jedes einzelne Pixel müssen bis zu vier Geraden verfolgt werden, um die vier Mischfaktoren aus den einzelnen Richtungen zu bestimmen. Statistisch gesehen, wird in etwa 61 % der Fälle nur eine Gerade benötigt. Jedoch kommen auch die anderen Fälle (zwei Geraden 27%, drei Geraden 8% und sogar vier Geraden 4%) vor. Da in jedem Takt ein neues Pixel bearbeitet wird, muß also der schlimmste Fall von vier Geraden angenommen werden und eine parallele Bearbeitung aller vier Fälle erfolgen. Dies geschieht in den Modulen ComputeEdge(), die als Ergebnis jeweils einen Mischfaktor für die entsprechende Gerade liefern. Für die vertikale Verfolgung der Geraden kann dabei das gleiche Modul wie für die horizontale Gerade verwendet werden, da, wie schon häufiger erwähnt, das vertikale Kantenfenster vorher zu einem horizontalen transformiert wird (geschieht in WindowSwitch()).

Bei genauer Betrachtung der zu verfolgenden Geraden fällt auf, daß diejenige Gerade, die für das aktuelle Pixel zum rechten Mischfaktor führt, mit der Geraden identisch ist, die beim nächsten Pixel zum linken Mischfaktor führt. Aufgrund dessen wird bei der Behandlung der rechten Geraden die Position bezüglich des aktuellen Pixels für das nächste Pixel weiterverwendet, so daß nicht vier, sondern nur drei Geraden verfolgt werden müssen; somit reduziert sich der Hardware-Aufwand. Die gleiche Optimierung ist für die obere bzw. untere Gerade nicht so einfach möglich, da zwar die gleiche Gerade verfolgt wird, die Information aus dieser Geraden aber über eine Zeile aufbewahrt werden müßte, was einen zusätzlichen Speicheraufwand von 32 kB bedeuten würde.

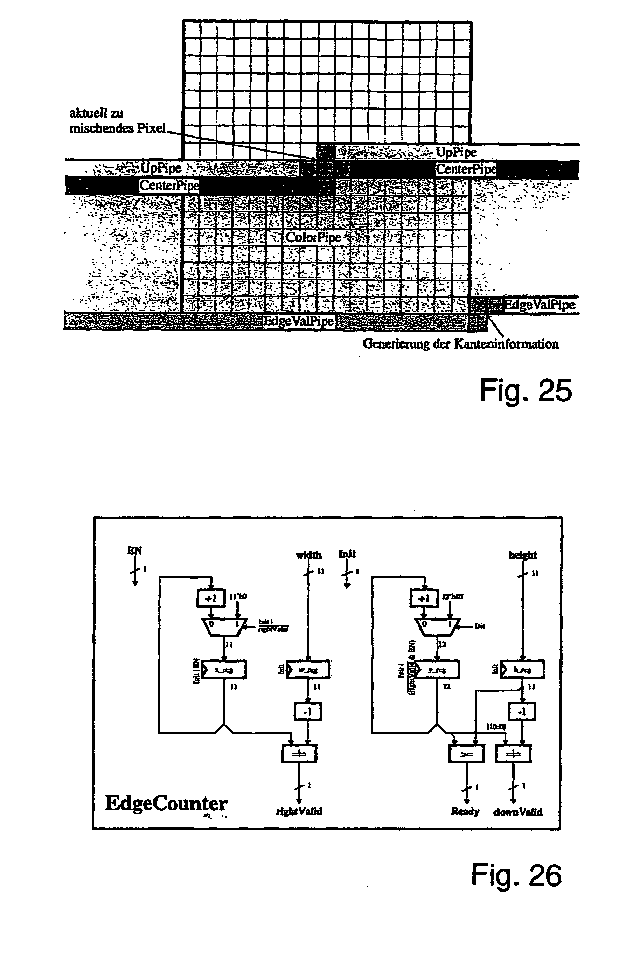

In ColorPipe() werden die Farbwerte aufgehoben, bis sie für die Mischung der neuen Farben wieder benötigt werden. In CenterPipe() bzw. UpPipe() werden die Farbwerte jeweils um eine zusätzliche Zeile verzögert. Der Inhalt der Pipes stellt sich wie in Figur 25 dar.

Der edgecounter() (Figur 26, Tabelle 5) gibt an, für welches Pixel gerade die Kanteninformation generiert wird. Dementsprechend werden bei einigen Pixeln die Nachbarn über die beiden Signale rightValid und downValid ausgeblendet, die im Bild keine wirklichen Nachbarn sind. rightValid wird jeweils beim letzten Pixel einer Zeile zurückgenommen, da das nächste Pixel schon zur nächsten Zeile gehört und somit nichts mit dem aktuellen Pixel gemeinsam hat. downValid wird in der letzten Zeile zurückgenommen, da die Zeile darunter keine gültigen Daten mehr enthält. Ready gibt an, wann alle Pixel des aktuellen Bildes eingelesen wurden. Ab diesem Zeitpunkt muß nicht mehr auf neue Daten gewartet werden, so daß aus diesem Signal das Enable-Signal für alle anderen Module generiert werden kann.

Im Module EdgeValueGenerator() (Figur 27, Tabelle 6) wird die Kanteninformation für jedes einzelne Pixel generiert. Dazu sind jeweils drei Farbwerte nötig (Figur 24 unten), von denen jedoch immer nur zwei neu übernommen werden. Der zentrale Farbwert ist der rechte Farbwert des vorigen Pixels. In den Modulen EdgeDirUnit() findet die Entscheidung statt, ob das aktuelle Pixel als Kantenpixel anzusehen ist; im Modul EdgeDirUnit() wird der Typ der Kante festgelegt.

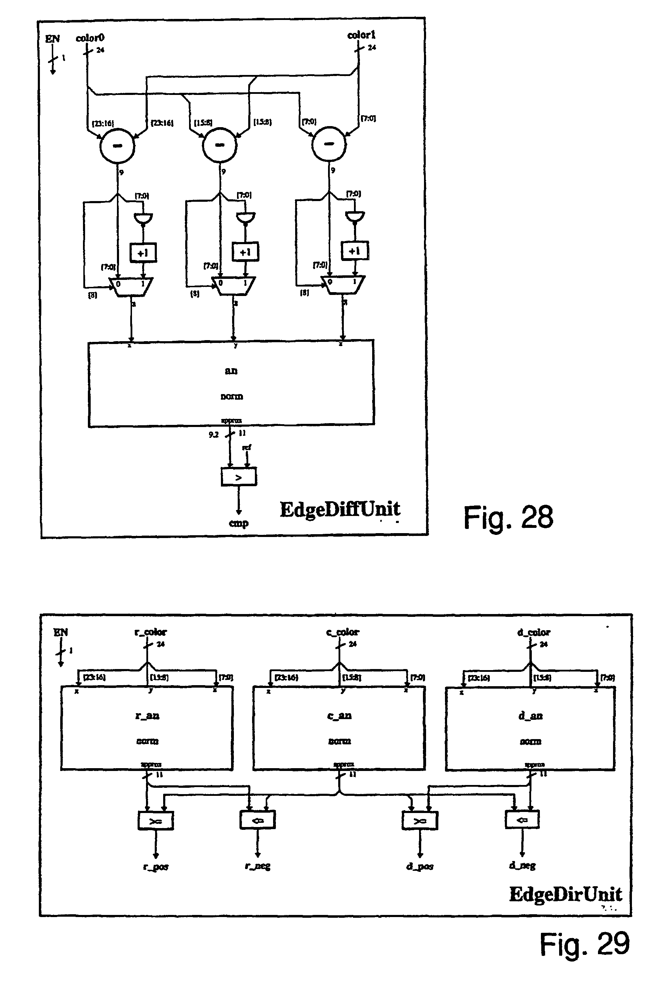

Im Modul EdgeDiffUnit() (Figur 28) findet die eigentliche Entscheidung statt, ob zwischen zwei Pixeln eine Kante existiert oder nicht. Zu diesem Zweck muß der euklidische Abstand a der beiden Farben im Farbraum bestimmt werden, auf den dann im nachhinein eine Schwellwertbildung angewendet wird. Der Schwellwert (ref) ist als Parameter ausgeführt worden, damit er leicht geändert werden kann. Grundsätzlich wird ein Schwellwert von 40.0 angenommen, da dieser Wert sich an vielen Testbildern bewährt hat. Der Wert braucht in der endgültigen Hardware-Implementation nicht festgelegt zu werden, sondern kann immer wieder geändert werden, falls sich herausstellt, daß für verschiedene Szenen verschiedene Schwellwerte verwendet werden sollten. In der Regel wird aber bei unbekannte Szenen mit einem Standardwert gearbeitet.

In dem Modul EdgeDirUnit() (Figur 29, Tabelle 8) findet die Bestimmung der Richtung einer Kante statt. Dazu werden die Abstände der einzelnen Farben zum Koordinatenursprung im Farbraum berechnet, die dann untereinander verglichen, die gewünschten Werte liefern.

Hier wird die Berechnung der Formel

$$a = \sqrt{x^2 + y^2 + z^2}$$

approximiert, da die genaue Berechnung der Wurzel viel zu aufwendig für diesen Fall wäre. Als Approximation wird die Formel

$$a_{approx} = k + \frac{1}{4} * l + \frac{1}{4} * m$$

verwendet, wobei k = max(x,y,z) , l = med(x,y,z) und m = min (x, y, z) ist. Der maximale Fehler entsteht, wenn x = y = z gilt. In dem Fall liefert die genaue Formel a = $\sqrt{3}$x, während die Approximation $a_{approx}$= 3/2x ergibt. Der maximale Fehler beträgt demzufolge $F_{max}$ = (3/2-$\sqrt{3}$)/3/2= 13,4%. Durch eine andere Wahl der Vorfaktoren, $a_{approx}$ = k + 11/32*l + m/4 , läßt sich der maximale Fehler sogar auf 8% minimieren. Aufgrund der viel einfacheren Form der Vorfaktoren bei der ersten Variante (keine Multiplikation nötig, sondern nur eine Shift-Operation um zwei Stellen nach rechts) wird der größere Fehler in Kauf genommen. Ein Fehler von 13% mag viel klingen; da die Ergebniswerte aber nur für eine Schwellwertbildung benötigt werden, ist das akzeptabel. Es werden einfach ein paar Pixel weniger als Kante markiert als normalerweise. Durch Anpassen des Schwellwertes läßt sich das jedoch wieder wettmachen.

Das Ergebnis der Berechnung liegt im Fixpunkt-Format (hier 9.2) vor, mit dem dann auch weitergerechnet wird.

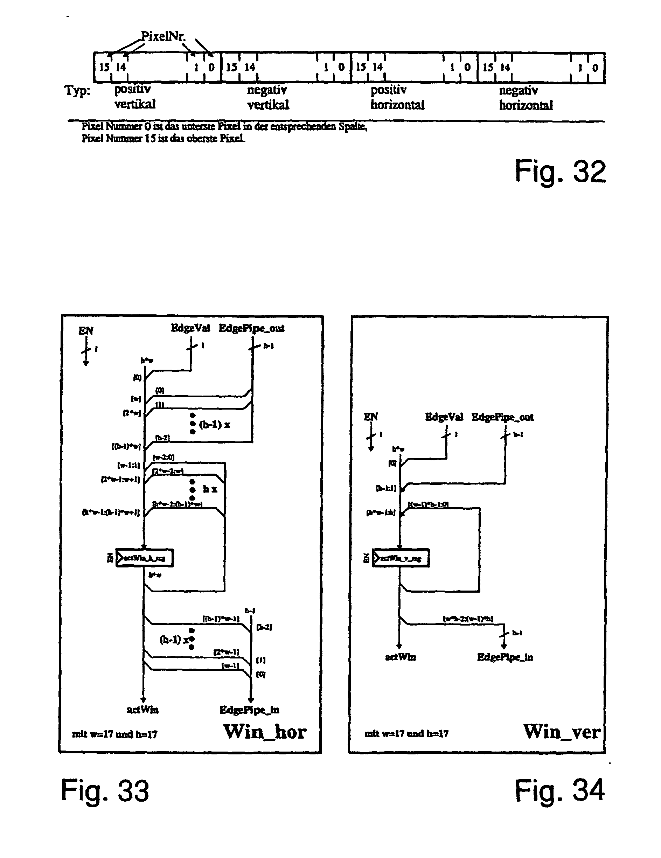

Im Modul WindowSwitch() (Figur 31, Tabelle 10) ist der aktuelle Kantenbildausschnitt gespeichert, wobei die Bits schon so abgespeichert werden, daß vertikale Kanten horizontal verfolgt werden können. Über den Eingang EdgePipe_out werden die schon generierten Kanteninformationen der rechten Spalte aus dem Speicher gelesen; über EdgeVal kommt der neu erzeugte Kantenwert hinzu. Entsprechend erfolgt über EdgePipe_out die Ausgabe der für spätere Zeilen nötigen Kanteninformation. In der Pipe werden die Kantenwerte nicht pixelweise gespeichert, sondern vielmehr sortiert nach den Typen der Kantenwerte, so daß sich die Verteilung in Figur 32 ergibt.

Um die Verfolgung der Stufen in den einzelnen Fenstern durchführen zu können, wird die Kanteninformation zeilenweise benötigt. Da die Information aber spaltenweise neu ins Fenster übernommen wird, muß bei dem horizontalen Fenster eine Neuordnung der Bits stattfinden, damit sie in der richtigen Reihenfolge gespeichert werden. Bei dem vertikalen Fenster muß dies nicht geschehen. Dort findet nämlich eine Transformation von vertikal nach horizontal statt. Im Endeffekt wird die Wirkung der Transformation durch die Neuordung der Bits rückgängig gemacht. In den Blockschaltbildern wurden die Parameter nicht durch konkrete Werte ersetzt, damit das Muster der Verkettung der Bits besser deutlich wird (w ist die Breite des Kantenfenster, also 17, und h ist die Höhe, auch 17).

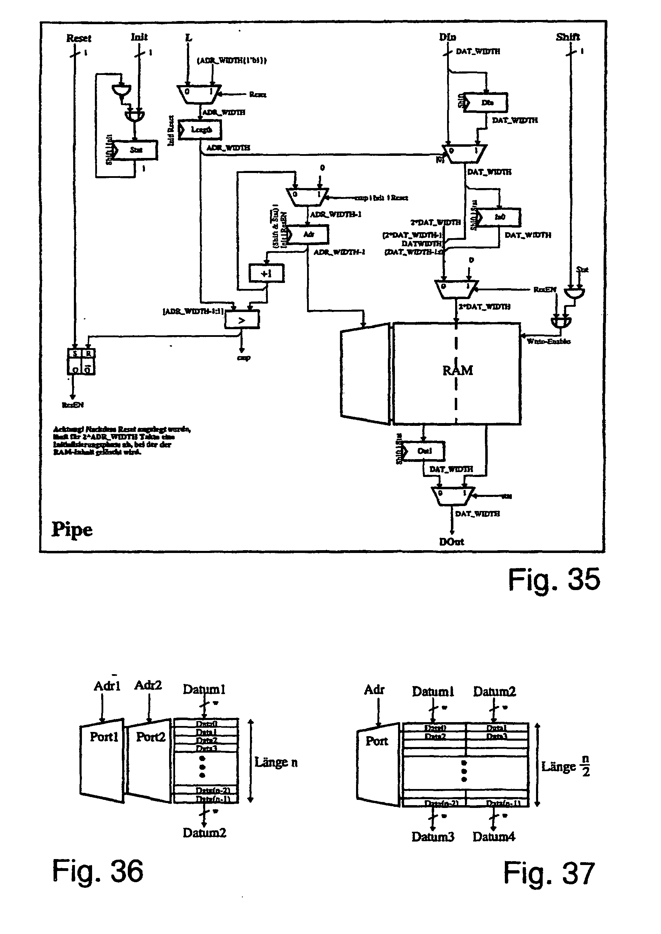

Bei dem Modul pipe() (Figur 35, Tabelle 12) handelt es sich um ein schlichtes Verzögerungsmodul, das ein Datum übernimmt, und nach einer fest vorgegebenen Anzahl von Takten wieder ausgibt. In der Grundform wäre das Modul so zu implementieren, daß nacheinander so viele Register geschaltet werden, wie es die Länge verlangt. Dies ist jedoch aufgrund der beträchtlichen Hardware-Kosten (7 Gatter pro gespeichertes Bit) nicht sinnvoll, da zusätzlich noch die Länge variabel gehalten ist, gar nicht möglich. Es wird daher ein RAM vorgesehen, bei dem die Hardware-Kosten wesentlich günstiger (maximal 1 Gatter pro gespeichertes Bit) sind. Bei dem Entwurf der Pipe() wurde mit besonderer Sorgfalt vorgegangen, damit die Hardware-Kosten möglichst gering ausfallen, da die Pipes aufgrund ihrer enormen Größe die höchsten Kosten verursachen. In der normalen Form einer Pipe ist immer ein Dualport-RAM notwendig, da in jedem Takt ein Wert geschrieben und gleichzeitig ein Wert gelesen werden muß. Durch das parallele Ablegen zweier Werte im Speicher konnte der zweite Port eingespart werden, indem immer in einem Takt zwei Werte gleichzeitig an eine Adresse geschrieben werden und im nächsten Takt zwei Werte parallel ausgelesen werden (Figur 37).

Folglich hat das verwendete RAM nun die doppelte Datenbreite, aber nur noch die halbe Länge. Die Speichermenge ist also gleich geblieben, aber es wurde ein Kosten verursachender Port eingespart. Die Register In0 und Out1 werden zum Parallelisieren zweier Daten bzw. Serialisieren der Daten benötigt. Das Register Stat enthält das Schreib-/Lese-Signal für das RAM. Nach den bisherigen Überlegungen wäre es nur möglich, gerade Längen für die Pipe zuzulassen. Durch das zusätzliche Register DIn sind nun auch ungerade Längen möglich, da es für die Verzögerung um einen weiteren Takt sorgt, falls es in den Datenpfad eingeschaltet wird. Der Adreßzähler Adr wird nach jedem Schreibvorgang inkrementiert. Ist die Länge der Pipe erreicht, so wird wieder bei der Adresse 0 begonnen; demzufolge wird das RAM als Ringpuffer betrieben. Um undefinierte Werte im RAM zu vermeiden, wurde zusätzlich ein Reset-Signal verwendet, durch das eine Initialisierungsphase angeworfen wird, die den RAM-Inhalt löscht. Pro Takt wird immer eine neue Zelle gelöscht; also sind bei einer Länge n des RAMs dementsprechend n Takte erforderlich. Während dieser Zeit werden die Daten am Eingang DIn ignoriert.

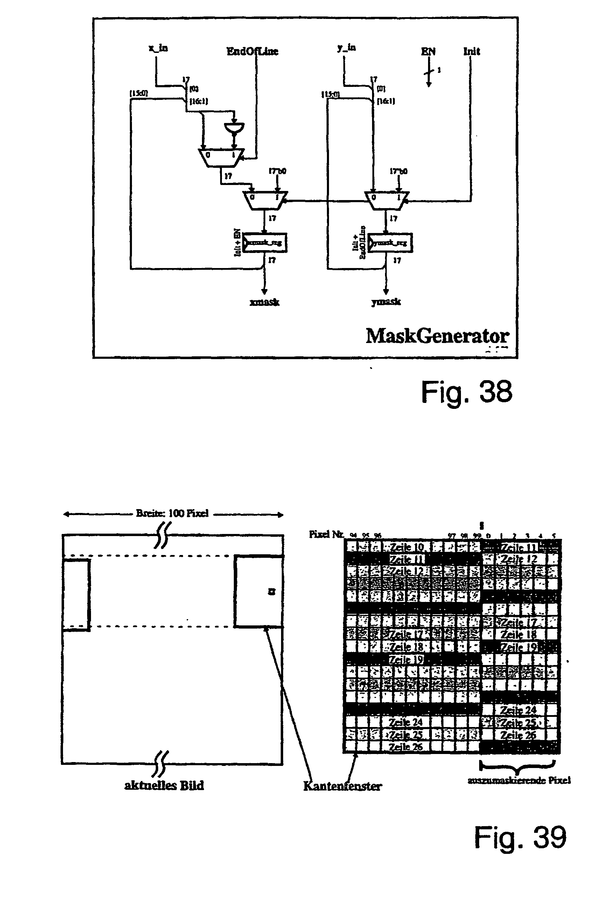

In dem Modul MaskGenerator(), Figur 38, Tabelle 13 werden die beiden Masken generiert, mit denen das aktuelle Kantenfenster maskiert wird, um nur relevante Pixel aus der Umgebung zu betrachten. Die Notwendigkeit der y-Maske entsteht dadurch, daß bei der Bearbeitung der Pixel der ersten 8 Zeilen im oberen Bereich des Fensters noch Pixel enthalten sind, die gar nicht zum aktuellen Bild gehören. Um zu verhindern, daß unter Umständen über die Bildgrenze hinaus Geraden verfolgt werden, erfolgt eine Maskierung dieser Pixel. Entsprechendes gilt für die untersten 8 Zeilen des Bildes, bei denen in den unteren Zeilen keine legalen Kantenwerte vorhanden sind.

Das Kantenfenster wird, wie schon erwähnt, bei der Bearbeitung laufend um ein Pixel nach rechts weitergeschoben. Ist das letzte Pixel einer Bildzeile erreicht, so wird ein Sprung zum ersten Pixel der nächsten Zeile ausgeführt. Durch dieses Vorgehen entstehen bei den letzten acht Pixeln einer Zeile am rechten Rand des Fensters Pixel, die eigentlich schon zum linken Rand des Bildes gehören (vergl. Figur 39). Entsprechend sind im Fenster bei den ersten acht Pixeln einer Zeile noch Werte enthalten, die eigentlich zum rechten Rand des Bildes gehören. Um die jeweils für das aktuelle Fenster ungültigen Werte auszublenden, wird die x-Maske benötigt. Dadurch, daß im nicht maskierten Fenster sowohl Pixel vom rechten, als auch vom linken Rand des Bildes enthalten sein können, geht beim Umschalten in die nächste Zeile keine Zeit verloren, und es kann eine Behandlung wie im Normalfall stattfinden.

Die x-Masken-Generierung läuft nun so ab, daß bei jedem Takt die letzte Maske um eine Stelle nach links geshiftet wird (genau wie die Pixel im Kantenfenster). Am rechten Rand wird ein neuer Wert übernommen, der angibt, ob die Pixelspalte noch zur gleichen Zeile gehört. Ist das letzte Pixel einer Zeile bearbeitet worden (angezeigt durch das Signal EndOfLine), so wird die Maske bitweise invertiert, wodurch automatisch die Maske für das erste Pixel der neuen Zeile entsteht. Entsprechend wird bei jeder neuen Zeile die y-Maske um ein Wert weitergeschaltet.

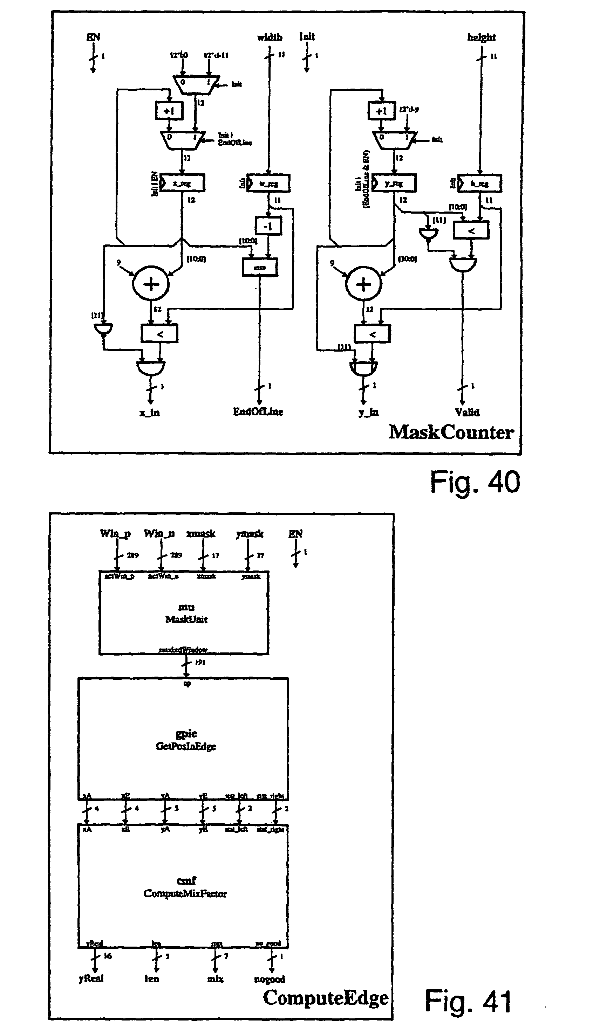

In dem Modul MaskCounter() (Figur 40, Tabelle 14) wird die Position des aktuell zu bearbeitenden Pixels bestimmt. Zu Beginn stehen die Zähler außerhalb des Bildes (x,y) = (-11, -9), da über die ersten Takte zunächst einmal die Kanteninformation für die ersten Zeilen generiert werden muß; dementsprechend gibt das Signal solange ein Valid = 0 aus. Die Variablen x_in und y_in bestimmen, ob das neu im Kantenfenster sichtbar werdende Pixel zur Umgebung des aktuellen Pixels gehört. Das Signal EndOfLine wird jeweils am Ende einer Zeile aktiv, um das Toggeln der xmask im Modul MaskGenerator() zu ermöglichen.

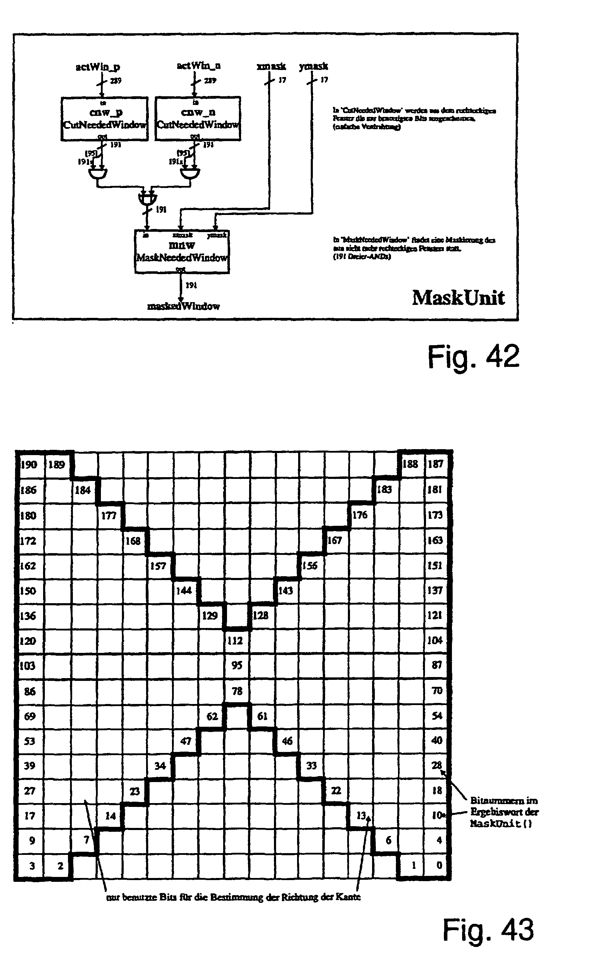

Aus dem aktuellen Kantenfenster werden zunächst die nur gültigen Pixel mittels des Moduls MaskUnit() (Figur 42, Tabelle 16) ausmaskiert, und dann die eigentliche Verfolgung der Geraden im Modul GetPosInEdge() durchgeführt. Aus den ermittelten Punkten wird dann der Mischfaktor im Modul ComputeMixfaktor() bestimmt. Das Modul ComputeEdge() (Figur 41, Tabelle 15) findet sowohl bei der Erkennung horizontaler, als auch vertikaler Geraden Verwendung.

Für die Verfolgung der Geraden stehen bisher zwei Kantenfenster zur Verfügung, von denen im Normalfall nur eines im Zentralpixel als Kante markiert ist. Durch die UND-Verknüfpung des gesamten Fensters mit diesem Zentralpixel wird das nicht benötigte Kantenfenster ausgeblendet. In einigen Fällen können jedoch auch beide Fenster erhalten bleiben, so daß die beiden Fenster pixelweise ODER-verknüpft werden.

Die Geraden werden immer horizontal im Fenster verfolgt, so daß die maximale Steigung einer Geraden 45° beträgt. Durch diesen Umstand werden aus den ursprünglich (17*17) = 289 Pixeln des Fensters einige garantiert nicht weiter benötigt, so daß sie auch nicht an die nächsten Module weitergereicht werden, es bleiben somit nur noch 191 Bits übrig, wie es in Figur 43 dargestellt ist.

Das Untermodul CutNeededWindow() hat damit keine eigenständige Funktionalität.

In ihm werden nur aus dem 289 Bit breitem Wire die richtigen Bits ausgewählt, was einer einfachen Verdrahtung entspricht, und somit auch keine Zeit kostet.

In MaskNeededWindow() erfolgt dann die eigentliche Maskierung des nun nicht mehr rechteckigen Fensters, bei dem die Pixel ausgeblendet werden, die nicht zur aktuellen Umgebung gehören.

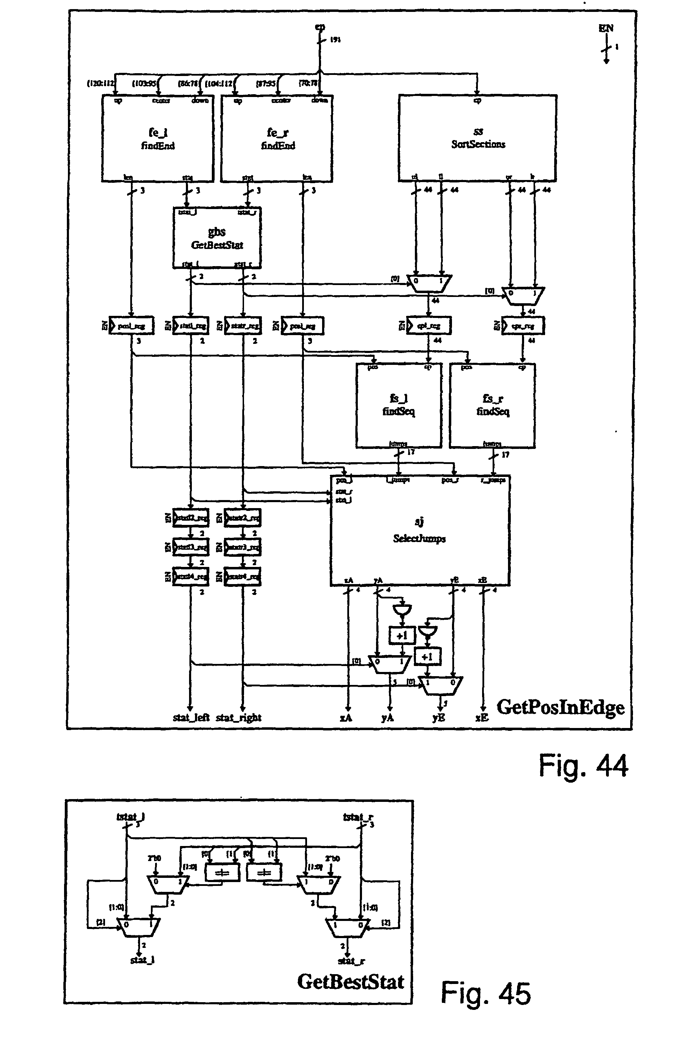

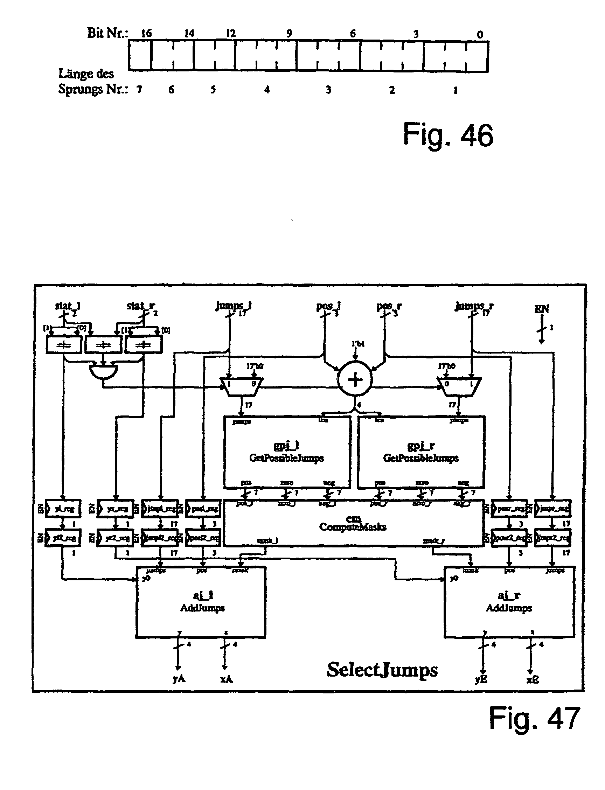

Im Modul GetPosInEdge() (Figur 44, Tabelle 17) wird aus dem Kantenfenster der Anfangs- und Endpunkt der verfolgten Geraden extrahiert. Im Modul FindEnd() (Tabelle 18) wird die zentrale Stufe bis zu ihrem Ende in beide Richtungen verfolgt. An den Enden ergeben sich die Stati, die angeben, in welchen Richtungen weitere mögliche Stufen liegen. Durch GetBestStat() (Figur 45, Tabelle 19) werden die bestmöglichen Stati ausgeblendet. Im Modul SortSections() wird das Kantenfenster in vier Sektoren unterteilt (wieder kein richtiges Modul, sondern nur Auswahl der Bits), worauf dann anhand der bestmöglichen Stati nach rechts und links jeweils der Sektor ausgewählt wird, in dem weitere Stufen vermutet werden. In findSeq() (Tabelle 22) werden alle möglichen weiteren Stufen im entsprechenden Sektor verfolgt. SelectJumps() (Tabelle 23, Figur 47) dient schließlich dazu, aus allen möglichen Stufen nur die Stufen auszuwählen, durch die wirklich eine Gerade interpoliert werden kann. Aufgrund der Stati wird dann das Vorzeichen der y-Werte angepaßt.

Im Modul findEnd() wird die zentrale Stufe bis zu ihrem Ende verfolgt. Prinzipiell ist dies ein iterativer Prozeß, denn an jeder Stelle (ausgehend von der Mitte) erfolgt ein Vergleich, ob die Stufe schon beendet ist. Ist das der Fall, so wird der Status an dieser Stelle bestimmt, andernfalls erfolgt an der nächsten Stelle die gleiche Prozedur. Da dies jedoch (diskret aufgebaut) eine zu lange Zeit in Anspruch nehmen würde, wurde dieses Modul als einzelnes "Case" modelliert, bei dem die Abfrage parallel stattfindet. Durch eine automatische Logik-Optimierung mittels eines geeigneten Tools wurden so die Hardware-Kosten, und auch die Bearbeitungszeit reduziert.

Am Ende einer Stufe kann es vorkommen, daß sich sowohl nach oben, als auch nach unten eine weitere Stufe zur Verfolgung anbietet. Anhand des jeweils entgegengesetzten Status am Ende der Stufe wird die beste Möglichkeit ausgewählt. Bietet sich keine Stufe an, so wird der entsprechende Status auf NO korrigiert.

Anhand der Position des Endes der zentralen Stufe werden im Modul findSeq() weitere mögliche Stufen ermittelt. Falls jede Stufe nur ein Pixel lang ist, so ergibt sich eine 45° Steigung, und es können maximal sieben weitere Stufen komplett in den Sektor passen. Dementsprechend ist jumps in sieben einzelne Bereiche unterteilt, in denen die Länge der jeweiligen Stufen abgelegt wird.

Da die letzten Stufen nicht mehr so lang sein können, wird deren Bitbreite auf zwei bzw. ein Bit reduziert. (Sie können nicht mehr so lang ausfallen, weil, wenn bei der fünften Stufe noch etwas eingetragen werden soll, die vorigen Stufen mindestens die Länge eins besessen haben müssen. Folglich kann die fünfte Stufe noch maximal die Länge drei haben, damit sie noch vollständig im Fenster liegt und erkannt wird.)

Das Vorgehen im Modul findSeq() kann am besten iterativ geschrieben werden: Ist in einer Zeile kein weiteres Kantenpixel vorhanden, so wird die Länge der Stufe an der entsprechenden Position im Ergebnis eingetragen, und in der Zeile darüber wird wiederum versucht, eine weiteres Kantenpixel zu finden. Ist keine weitere Stufe vollständig im Fenster enthalten, so wird die entsprechende Länge im Ergebnis auf Null gesetzt.

Da dieses Modul wieder zu komplex für einen diskreten Aufbau ist, wurde wieder auf die Möglichkeit der Modellierung mittels eines Case zurückgegriffen, und mittels einer Logik-Optimierung minimiert.

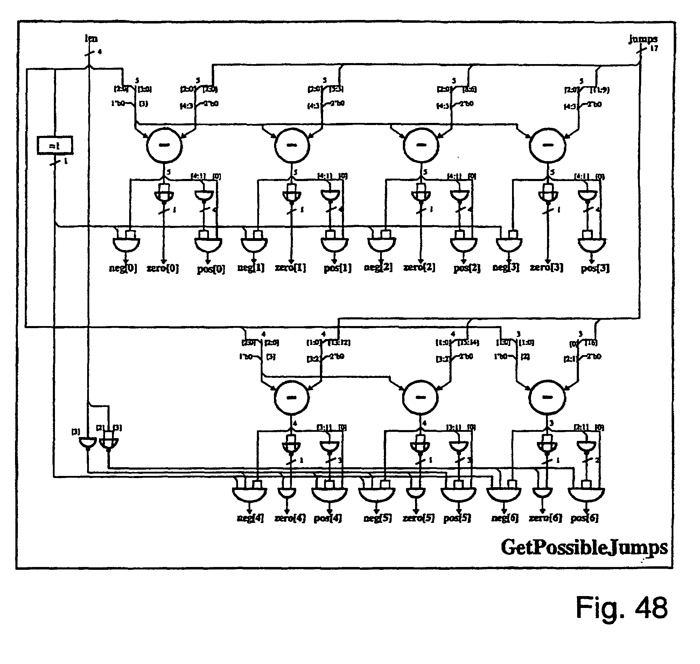

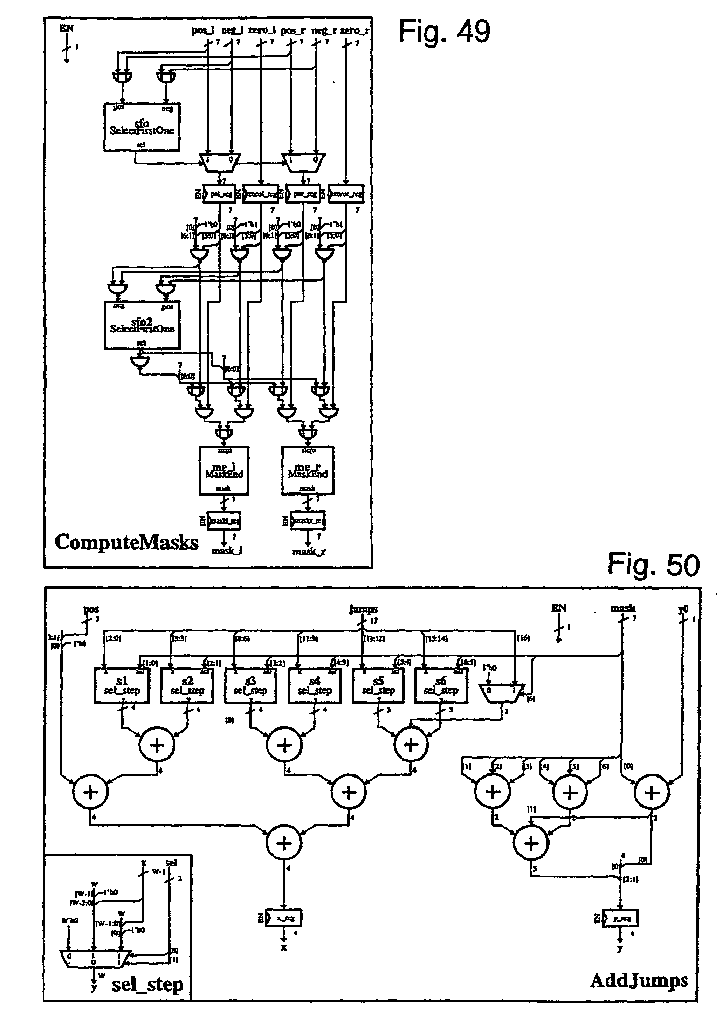

In findSeq() (Tabelle 22) wurden alle weiteren Stufen ermittelt, die in das Fenster paßten. Durch SelectJumps() werden nun die Stufen ausgewählt, die zu einer möglichst langen Geraden durch das Zentralpixel führen. Zunächst wird dazu die Länge der zentralen Stufe benötigt, aufgrund derer dann in GetPossibleJumps() (Figur 48, Tabelle 24) die Stufen ausgeblendet werden können, die eine zu große oder zu kleine Länge besitzen. In ComputeMasks() (Figur 49, Tabelle 25) werden dann Masken generiert, welche die nicht möglichen Sprünge ausmaskieren. In AddJumps() (Figur 50, Tabelle 26) werden dann die einzelnen Stufen zusammenaddiert, so daß sich die Anfangs- und Endpunkte ergeben. Falls der Status an einem Ende der zentralen Stufe weder UP noch DOWN war, so sollte eigentlich gar keine weitere Stufe verfolgt werden, und die Variable jumps wird auf Null gesetzt.

Im Modul GetPossibleJumps (Figur 48) werden die Längen der einzelnen Stufen mit der der zentralen Stufe verglichen, da sich nur eine Gerade ergeben kann, wenn alle Stufenlängen innerhalb einer Toleranz von 1 liegen. Der Vergleich erfolgt über eine Subtraktion und anschließender Auswertung der Ergebnisse.

Zunächst wird anhand des ersten SelectFirstOne() -Moduls entschieden, ob um eins längere oder um eins kürzere Stufen als die Zentralstufe zugelassen werden. Die Entscheidung fällt dabei anhand der Stufe, die sich am nächsten an der Zentralstufe befindet und eine andere Länge besitzt. Mittels des zweiten SelectFirstOne()-Moduls wird entschiedenen, welche der beiden möglichen Stufenlängen mehrmals vorkommen darf, da aufgrund der Rasterisierungsregeln bei einer normalen Geraden immer nur eine Stufenlänge mehrmals hintereinander vorkommen darf. In den MaskEnd()-Modulen werden schließlich noch alle Stufen ausgeblendet, die durch vorherige Maskierungsaktionen keine Verbindung mehr zur zentralen Stufe besitzen. Das SelectFirstOne()-Modul wurde genau wie das MaskEnd ()-Modul wieder mittels einer Case-Anweisung modelliert und durch Synopsys minimiert.

Sollen weitere Rasterisierungsregeln angewendet werden, so müssen sie innerhalb dieses Moduls umgesetzt werden.

In dem AddJumps() Modul (Figur 50, Tabelle 26) werden die Ergebnisse der bisherigen Stufen zusammenaddiert, so daß sich ein Endpunkt der Geraden ergibt. Die mask gilt dabei als Bitmaske, die angibt, welche der Stufenlängen in jumps mit einbezogen werden sollen. Die letzte Stufe wird, wie bereits beschrieben, nur mit der halben Länge und Höhe berücksichtigt.

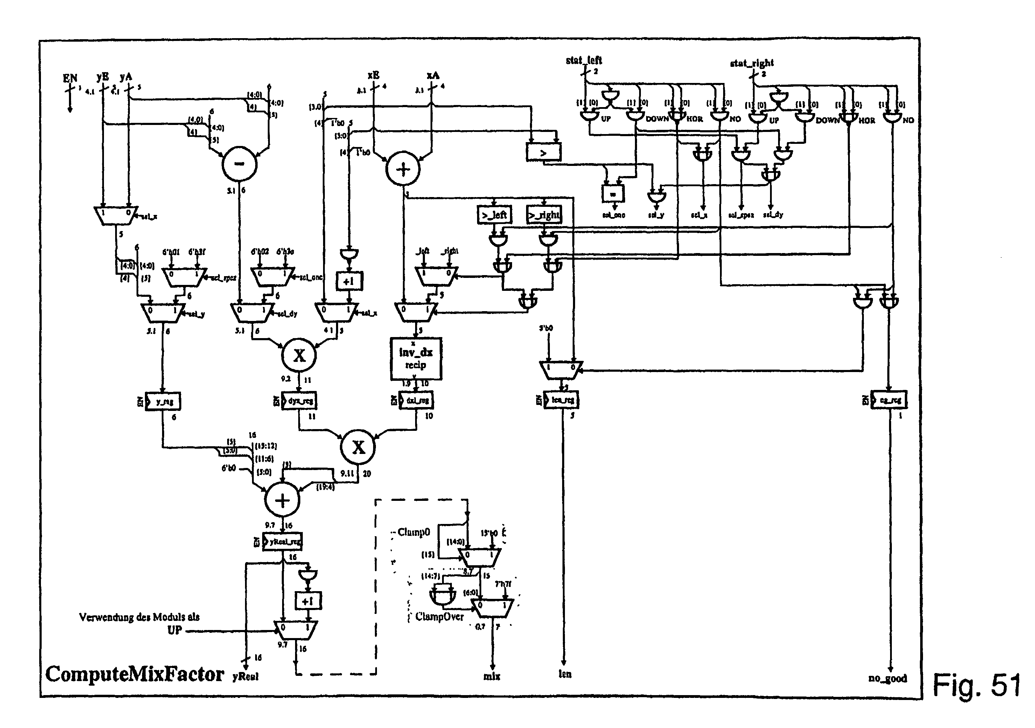

Nunmehr soll das Module ComputeMixFactor () (Figur 51, Tabelle 27) beschrieben werden. Die eigentliche Berechnung des Mischfaktors besteht darin, aus dem Anfangs- und Endpunkt eine Gerade zu bestimmen, wobei nur der y-Wert an der Stelle x=0 dieser Geraden interessiert. Je nachdem, welches Pixel gerade betrachtet wird (über oder unter dem Farbsprung), wird der eben ermittelte y-Wert yReal invertiert oder nicht (Multiplexer links unten), so daß der y-Wert nun 1:1 dem Mischfaktor im Bereich 0..1 entspricht. Durch die letzten beiden Multiplexer wird der Mischfaktor nur noch auf den Bereich 0..1 zurechtgeschnitten, so daß keine Überläufe entstehen. Die Entscheidung, ob das Pixel über oder unter dem Farbsprung bearbeitet wird, liegt durch die Verwendung des Moduls schon fest. Der drittletzte Multiplexer wählt somit nur alternative Zweige aus, die über einen Parameter selektiert werden.

Für die Bestimmung der Geraden wird der Kehrwert des x-Abstandes der beiden Endpunkte benötigt. Zu diesem Zweck wird das Modul recip() eingeführt.

Bei diesem Modul und dem anschließenden MaskMixFactors() ist eine Besonderheit anzumerken. Die beiden Module arbeiten nämlich überlappend. Während das Modul ComputeMixFactor() noch damit beschäftigt ist, den Mischfaktor zu berechnen, sind die Länge len und das zusätzliche Flag no_good bereits an MaskMixFactors() weitergeleitet worden, und befinden sich dort in Bearbeitung. Der Ausgang mix ist also immer um ein Takt verzögert, so daß insgesamt ein Bearbeitungstakt und damit zusätzliche Register eingespart werden konnten.

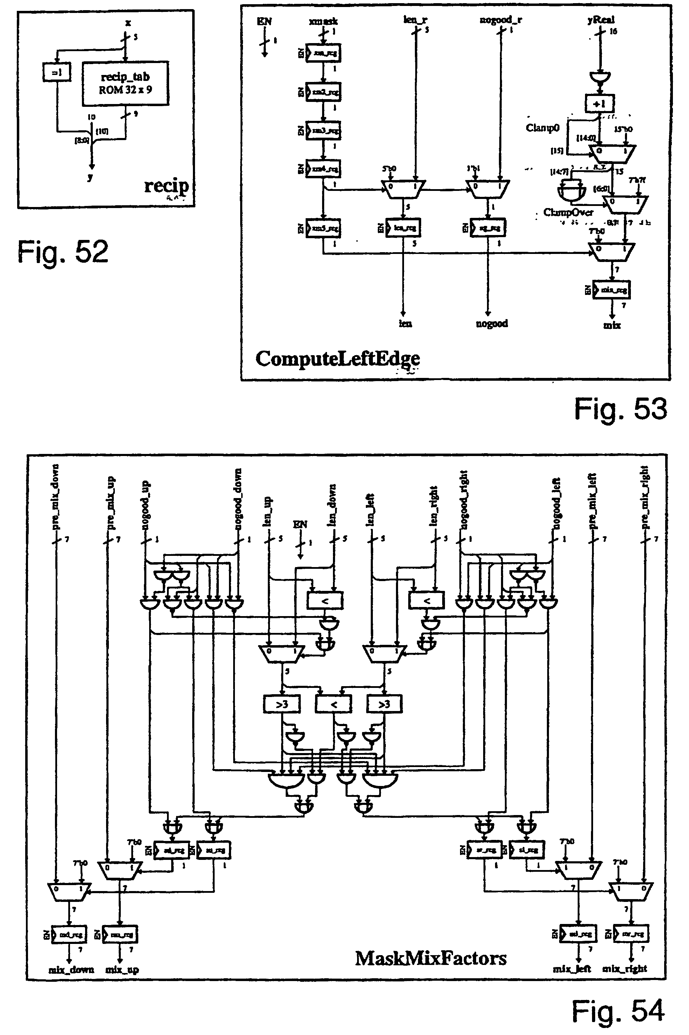

Die Kehrwertbildung (Modul Recip(), Figur 52, Tabelle 28) wird bei diesem einfachen Fall auf ein Tabellen-Lookup zurückgeführt. Der Eingangswert dient dabei als Adresse für einen ROM-Zugriff, bei dem als Ergebnis der Kehrwert geliefert wird. Um bei der Tabellenbreite ein Bit zu sparen, wurde der Fall x = 1 getrennt behandelt, da dies der einzige Wert ist, bei dem im zugelassenen Eingangswertebereich 1,0..15,0 (4.1 Fixfunktformat des Einganges) eine Vorkommastelle entstehen kann. (Der Wert 0,0 würde einen Fehler produzieren, und der Wert 0,5 kann aufgrund der Form der vorherigen Berechnungen auch nicht auftreten.)

Für die Berechnung des linken Zumischfaktors, wird die verfolgte Gerade des vorherigen Pixels bezüglich des rechten Mischfators wiederverwendet, da die beiden Geraden vollkommen identisch sind. Lediglich im Fall des ersten Pixels in einer Zeile gilt dies nicht, so daß über xmask der entsprechende Mischfaktor und auch alle zusätzlichen Informationen gelöscht werden, Modul CompuLeftEdge, Figur 53, Tabelle 29).

Die bisher berechneten Mischfaktoren wurden immer nur aufgrund einer einzigen Geraden bestimmt. Um zu einem globaleren Eindruck zu gelangen und somit die bestmöglichen Mischfaktoren für ein Pixel zu bestimmen, werden im Modul MaskMixFactor() alle vier Geraden betrachtet und, falls nötig, werden einige Mischfaktoren noch ausmaskiert. Die Notwendigkeit entsteht durch Rauschen, welches durch die Verwendung des Differenzoperators als Kantenerkenner resultiert (auch jeder andere Kantenoperator würde in irgendeiner Weise Rauschen produzieren). Als Beispiel betrachte man eine horizontal orientierte Kante zwischen zwei Farben. Im horizontalen Kantenbild ergibt sich das gewohnte Bild der erwünschten Sprünge. Im vertikalen Kantenbild wird jedoch bei jedem Sprung auch ein Kantenpixel markiert, welches aber keine sinnvolle Bedeutung hat. Da bei der Verfolgung einer Geraden dieser Fall nicht erkannt wird, werden diese Fälle unter anderen im Modul MaskMixFactors() (Figur 54, Tabelle 30) ausgeblendet.

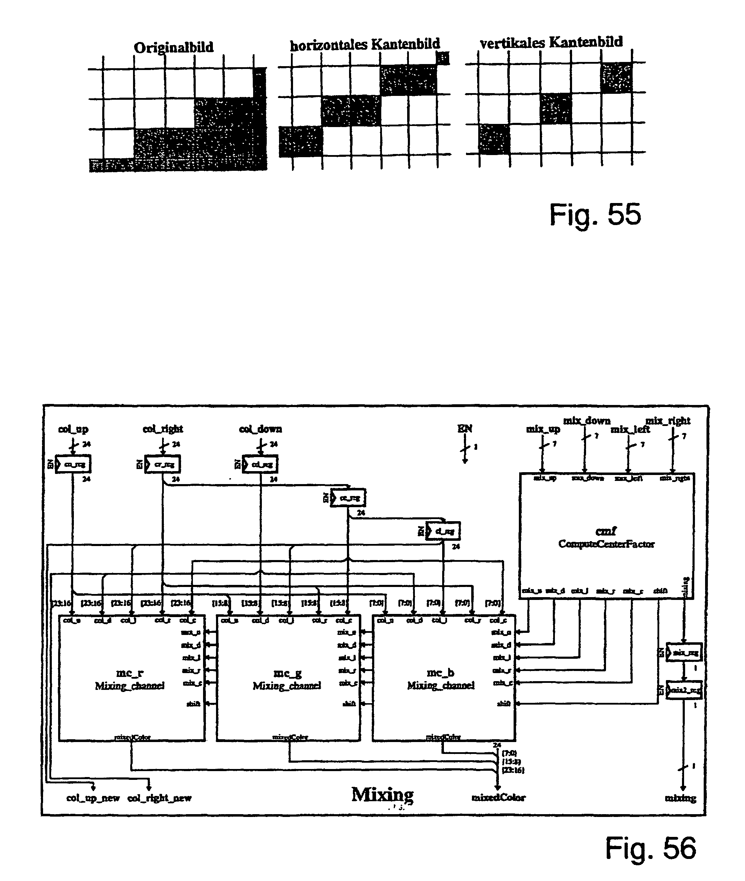

Die tatsächliche Farbe des Pixels wird aufgrund seiner ursprünglichen Farbe und der Farben der vier Nachbarn bestimmt. Zu diesem Zwecke werden die benötigten Farben geladen, wobei nacheinander die rechte Farbe als zentrale Farbe des nächsten Pixels und linke Farbe des übernächsten Pixels fungiert. In ComputeCenterFactor() wird der noch fehlende Mischfaktor für das zentrale Pixel bestimmt, worauf dann in Mixing_channel() des Moduls Mixing() (Figur 56, Tabelle 31) die eigentliche Farbmischung pro Farbkanal stattfindet.

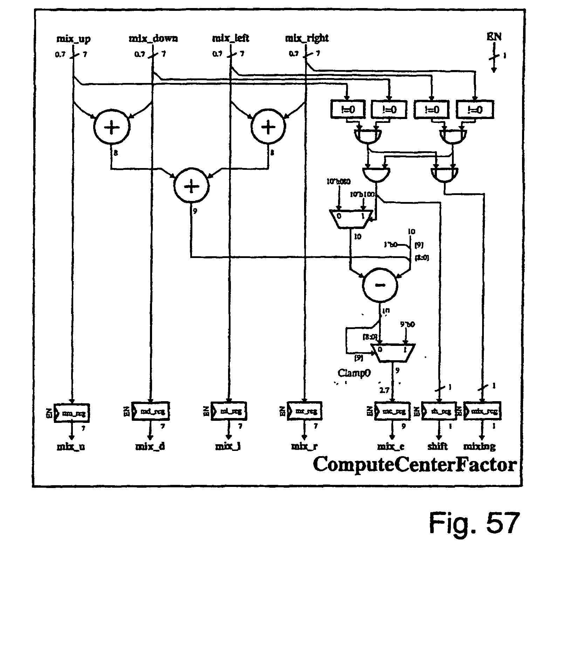

Die Berechnung des zentralen Mischfaktors im Modul ComputeCenterFactor(), Figur 57, Tabelle 32, beruht auf der Tatsache, daß alle Mischfaktoren zusammen 1.0 ergeben müssen, da nur so sichergestellt ist, daß keine Farbüberläufe und damit Farbverfälschungen produziert werden. Falls vertikal und horizontal zugemischt wird, so sind die Faktoren auf 2.0 normiert, um die maximal mögliche Genauigkeit herauszubekommen. Die Division durch zwei (Shift um eine Stelle nach rechts, entspricht einer einfachen Verdrahtung in Hardware) wird erst zu einem späteren Zeitpunkt durchgeführt und über shift initiiert.

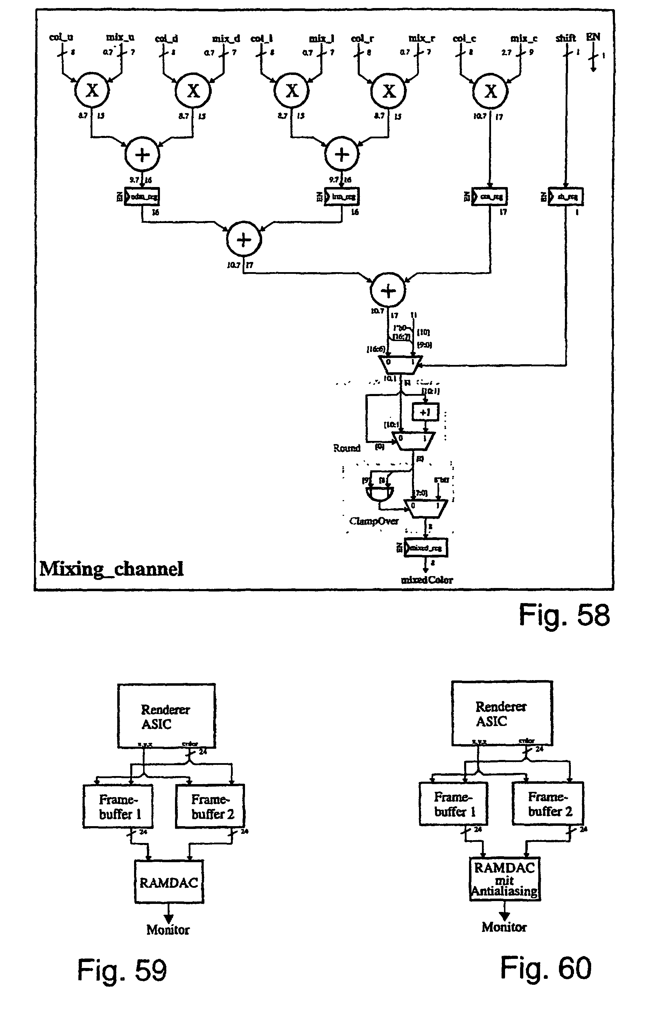

Die endgültige Mischung der Farben findet nach der Mischungsformel im Modul Mixing_Channel() (Figur 58, Tabelle 33) statt. Nach der unter Umständen nötigen Division durch zwei, findet eine Rundung statt, mit der die Genauigkeit noch etwas erhöht werden kann, worauf sich ein Abfangen eines Überlaufes anschließt.

Beim Display-Prozeß wird das im Framebuffer gespeicherte Bild über die RAMDAC in analoge Signale gewandelt, die der Monitor benötigt, um das Bild anzuzeigen. Da im Framebuffer aber nicht zu jedem Zeitpunkt ein fertiges Bild steht, weil die rasterisierten Pixel immer erst nach und nach abgelegt werden, würde man den Aufbau jedes einzelnen Bildes mitbekommen (vor jedem Bild wird der Framebuffer gelöscht). Um dieses Flimmern zu vermeiden, wird die Double-Buffer-Technik verwendet. Dabei arbeitet der Rasterisiererauf dem einen Framebuffer, während der Inhalt des anderen Framebuffer auf dem Monitor dargestellt wird. Ist das nächste Bild fertig gerendert, so wird zwischen den beiden Buffern umgeschaltet und sie vertauschen ihre Funktionen. Ist die Anzeige eines Bildes beendet, bevor das nächste Bild fertig gerendert wurde, so wird das vorherige Bild noch einmal angezeigt.

Figur 59 enthält links eine mögliche Systemkonfiguration: Der Renderer schickt die Farbwerte der rasterisierten Pixel und weitere Informationen (x,y-Position, z-Wert für z-Buffering) an beide Framebuffer, von denen jedoch nur einer die Werte in den Speicher übernimmt. Der Inhalt des anderen Framebuffers wird an den RAMDAC übertragen. Um eine möglichst hohe Bildwiederholrate zu gewährleisten, d.h., um Bildflimmern zu vermeiden, wird meistens nicht nur ein Pixel pro Takt an die RAMDAC übertragen, sondern zwei oder auch vier; so kann die Takt-rate außerhalb des Chips klein gehalten werden, und trotzdem eine hohe Übertragungsrate erreicht werden. Die Pixel werden in der RAMDAC dann wieder serialisiert und mit einer entsprechend vielfachen Taktrate an den Monitor gesendet. Die Idee, das Post-Antialiasing im Display-Prozeß einzubauen, beruht darauf, daß einfach nur der normale RAMDAC gegen einen um die Antialiasing-Funktion erweiterte RAMDAC ausgetauscht werden kann (Figur 60). Der Renderer und der Framebuffer sind von dieser Änderung nicht betroffen, so daß es möglich wird, Antialiasing auch in den Systemen einzubauen, die gar nicht dafür vorgesehen worden sind. Dies ist die Besonderheit des vorliegenden Verfahren, die von den bisherigen Antialiasing-Verfahren nicht geboten worden ist.

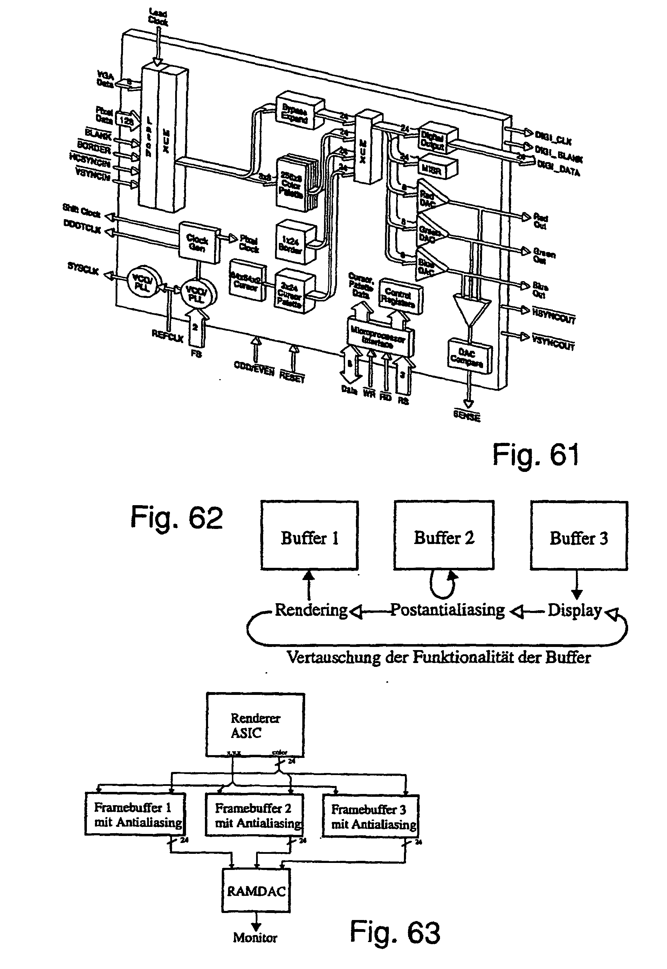

Ein Beispiel eines RAMDAC befindet sich in Figur 61. In diesem speziellen Fall können bis zu vier Pixel pro Takt übernommen werden. Da das Anti-aliasing-Verfahren aber in der Grundvariante immer nur ein Pixel pro Takt bearbeiten kann, kann es nicht einfach vor dem RAMDAC geschaltet werden. Für den Einbau sind zwei Alternativen günstig:

1. Einbau vor dem RAMDAC

Hier müssen immer vier Pixel gleichzeitig pro Takt bearbeitet werden; die gesamte Logik müßte also vier mal parallel aufgebaut werden. Der Speicheraufwand ändert sich nicht. In jedem Takt wird das Kantenfenster um vier Pixel weitergeschoben, wobei jede Logikeinheit immer einen der vier Pixel bearbeitet.

2. Einbau in dem RAMDAC nach dem Demultiplexer

Nach dem Demultiplexer muß immer nur ein Pixel pro Takt bearbeitet werden, da durch das Latch und den anschließenden Demultiplexer die vier parallel vorliegenden Pixel serialisiert werden, jedoch wird hier eine höhere Taktrate benötigt. Die Taktrate in diesem Bereich ist nicht konstant, sondern richtet sich nach der Bildschirmauflösung und der erwünschten Bildwiederholrate. Der Entwurf muß sich immer nach der höchsten Taktrate richten. Bei heute üblichen Taktraten von bis zu 250 MHz müßten dann entsprechend mehr Registerstufen in den Logikblock des Antialiasing-Systems eingebaut werden. Bei so hohen Taktraten muß jedoch überprüft werden, ob das überhaupt durchführbar erscheint. Eine Möglichkeit der Beschränkung auf kleinere Taktraten in der Antialiasing-Einheit besteht darin, daß nur Bilder bis zu einer bestimmten Auflösung bearbeitet werden. Alle Bilder der höheren Auflösung (und damit höheren Taktrate werden an der Antialiasing-Einheit vorbeigeschleust, da bei so hohen Auflösungen die Aliasing-Effekte nicht mehr so stark hervorstechen.

Das zuvor beschriebene Verfahren des Double-Buffers kann auf einen Triple-Buffer erweitert werden, wobei der Inhalt eines Framebuffers auf dem Monitor dargestellt wird, der zweite mittels des Post-Antialiasings bearbeitet wird, und im dritten Framebuffer wird bereits das nächste Bild durch den Renderer erzeugt. Dieser Vorgang ist in Figur 62 schematisch als Zyklus angedeutet. Als Blockschaltbild ist ein Tripelpuffer in Figur 63 wiedergegeben. Drei Framebuffer sind parallelgeschaltet und erhalten ihre Signale zeitlich versetzt in zyklischer Vertauschung bzw. geben sie entsprechend ab.

Der Zeitbedarf der einzelnen Prozesse ist sehr unterschiedlich. Erfordert etwa das Anzeigen eines Bildes ca. 1/80-Sekunde, so benötigt der Renderingprozeß in der Regel mindestens 1/30-Sekunde. Die Zeit für das Antialiasing des Bildes wird sich irgendwo zwischen diesen beiden Extremwerten bewegen.

Der Ablauf bei Verwendung eines Triple-Buffers wird nun wie folgt beschrieben:

Ist die Anzeige eines Bildes beendet, so wird kontrolliert, ob das nächste Bild bereits antialiast wurde. Ist das Bild fertig, so übernimmt der bisherige Antialiasing-Buffer die Übertragungsfunktion für das neue Bild an den RAMDAC. Ist das Bild noch nicht fertig, so wird das gleiche Bild noch einmal an den RAMDAC übertragen. (Beim Double-Buffer wird jedes Bild etwa zwei- bis viermal angezeigt.)

Ist das Antialiasing eines Bildes beendet, so wartet der Prozeß auf die Fertigstellung des nächsten Bildes durch den Renderer. Steht das nächste Bild zur Verfügung, so übernimmt der bisherige Renderer-Framebuffer die Funktion des Antialiasing.

Ist der Rendererprozeß mit der Generierung eines neuen Bildes fertig, so wird unverzüglich auf den ursprünglichen Display-Buffer umgeschaltet, wo sofort mit der Bearbeitung eines neuen Bildes begonnen werden kann. Der Rendererprozeß muß keinesfalls auf den Displayprozeß warten, da aufgrund der schon beschriebenen Zeitverhältnisse das Anzeigen des Bildes an den Antialiasing-Buffer übertragen wurde.

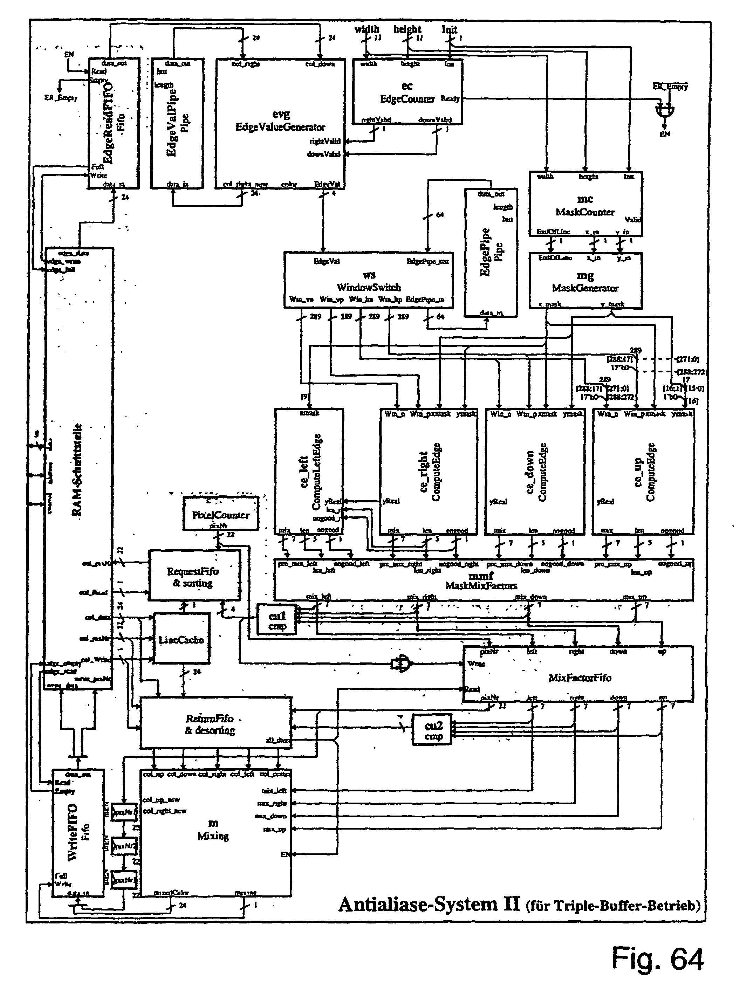

Für die Verwendung im Triple-Buffer-Betrieb müssen einige Änderungen am Grundsystem des Antialiasing vorgenommen werden, wie es in Figur 64 dargestellt ist.

Für den Triple-Buffer-Prozeß ist es nicht notwendig, die Farbwerte nach der Kantengenerierung aufzuheben, da sie noch einmal aus dem Speicher gelesen werden können. Beim Display-Prozeß bestand diese Option nicht, da jeder Farbwert nur einmal übertragen wurde. Demzufolge werden die Farbwerte, die aus dem EdgeValueGenerator() kommen, verworfen (wie man an dem nicht beschalteten Ausgang sieht) und erst dann wieder aus dem Speicher geholt, wenn sie für die Mischung der Farben benötigt werden.

Die Speicherzugriffe verdoppeln sich nicht, wie eigentlich anzunehmen wäre, denn beim zweiten Auslesen müssen nicht alle Farbwerte noch einmal gelesen werden, sondern nur diejenigen, die wirklich zur Farbmischung benötigt werden. Statistische Untersuchungen ergaben, daß im schlimmsten Fall 20% der Pixel des Bildes noch einmal gelesen werden müssen. Natürlich müssen auch nicht alle Pixel in den Speicher zurückgeschrieben werden, sondern nur diejenigen, die wirklich eine Farbveränderung erfahren haben (erkenntlich durch das Ausgangssignal mixing des Moduls Mixing()), was in maximal 10% der Fälle geschieht. Statistisch gesehen müssen pro Pixel demnach 1,3 Speicherzugriffe geschehen (100% Bild einmal auslesen 20% zu mischende Pixel noch einmal lesen, 10% der Pixel zurückschreiben).

Die kombinatorische Logik des Antialiasing-Systems ließe es an sich zu, daß in jedem Takt ein weiteres Pixel fertiggestellt wird, dies ist jedoch entbehrlic. Um bei einer Bildschirmauflösung von 1280 x 1024 die geforderte Bildgenerierungsrate von 25 Bildern pro Sekunde zu erreichen, müssen pro Sekunde 1280 x 1024 x 25 = 32,768 Millionen Pixel bearbeitet werden. Bei einer angenommenen Taktrate von 66MHz für das System stehen also pro zu bearbeitendes Pixel 2,01 Takte Zeit zur Verfügung. Bei höheren Auflösungen kann dieser Wert noch kleiner werden, jedoch wird dann der Renderer keine Bildgenerierungsrate von 25 Bilder pro Sekunde gewährleisten können. Bei heute üblichen Speichern kann man nicht davon ausgehen, daß in jedem Takt ein Datum übertragen werden kann, da Refresh-Zeiten für die Erhaltung der Speicherinhalte bei dynamischen RAMs und Rowwechseizeiten eingehalten werden müssen. Die effektive Übertragungsrate hängt stark von der Zugriffsreihenfolge auf den Speicher ab, so daß allgemein keine konkrete Übertragungsrate angegeben werden kann.

Die Speicherschnittstelle ist in der Regel jedoch so dimensioniert, daß nicht nur ein Pixel pro Takt aus dem Speicher übertragen wird, sondern parallel gleich mehrere So können parallel bis zu 4 Pixel übertragen werden.

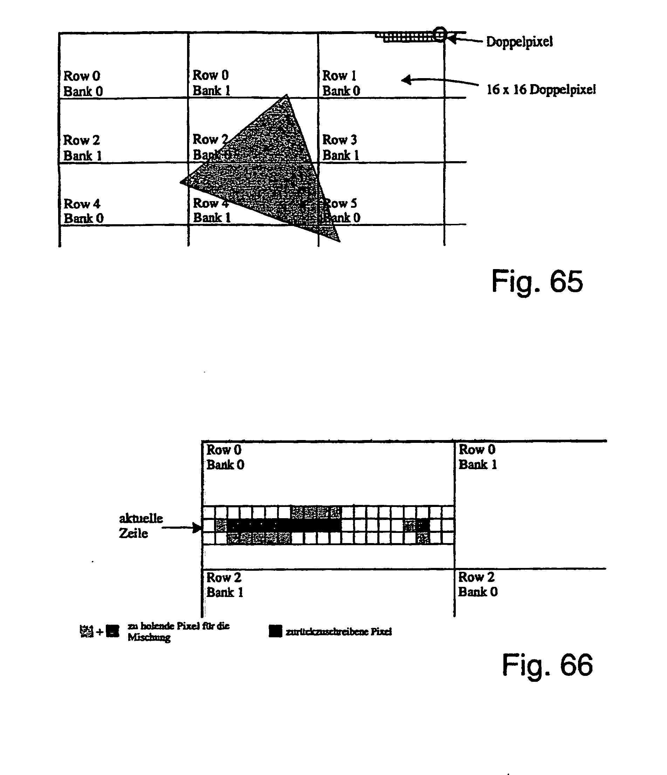

Die wesentliche Voraussetzung, um solche Übertragungsraten zu gewährleisten, ist eine effiziente Speicherabbildung, so daß möglichst schnell auf die nächsten benötigten Pixel zugegriffen werden kann. Als Beispiel sei hier die Speicherorganisation im Framebuffer eines bekannten Systems (GMD VISA) erwähnt. Der verwendete SDRAM-Speicher (1 Mx32-Organisation) ist physikalisch in zwei Bänke aufgeteilt, die aus Rows (2048) aufgebaut sind, die wiederum in Columns unterteilt sind (256 / in einer Column ist jeweils ein Pixel abgelegt). Innerhalb einer Row ist es möglich, auf jede beliebige Columnaddresse in einem Takt zuzugreifen, wohingegen das Umschalten der einzelnen Rows 7 Takte in Anspruch nimmt. Die Speicherabbildung wurde also so ausgelegt, daß die Anzahl der Row-Wechsel sowohl beim Renderingprozeß, als auch beim Auslesen für den Display-Prozeß minimiert wird. Um einen weiteren Adreßbus zu sparen, werden mit einer Adresse immer 2 benachbarte Pixel gleichzeitig aus dem Speicher geholt, da 2 Speicherchips zur Verfügung stehen. Die Rows wurden nun so unterteilt, daß in ihnen ein Bereich von 32 x 16 Doppelpixeln Platz findet, und somit innerhalb dieses Bereichs jedes Doppelpixel in einem Takt auslesbar ist (Figur 65).

Die verwendete Speicherabbildung kommt dem hier verwendeten Verfahren auch sehr entgegen. Beim Auslesen der Pixel für die Kantengenerierung wird das komplette Bild linear zeilenweise ausgelesen, d.h., es ist möglich, in 32 Takten 64 Pixel aus dem Speicher zu lesen, ehe ein Row-Wechsel erfolgen muß, der 7 Takte benötigt. Für diesen Prozeß ergibt sich demnach eine Übertragungsrate von 64 Pixeln in 39 Takten = 1,64 Pixel/Takt. Jedoch ist dies nicht der einzige Prozeß der auf dem Speicher abläuft. Es werden konkurrierend dazu die schon angesprochenen 20% der Pixel für die Mischung geholt, und 10% der Pixel wieder zurückgeschrieben. Durch geeignetes Auspuffern der Anforderungen ist es möglich, die Rowwechsel dazu zu nutzen, um zwischen den einzelnen Prozessen umzuschalten.

Für den zweiten Auslese-Prozeß und den Schreibe-Prozeß sollten die Anforderungen so lange gesammelt werden, bis alle eine Row betreffende Anfragen auf einmal bearbeitet werden können, so daß wiederum möglichst wenige Row-Wechsel sogar bei diesen nicht mehr linearen Vorgängen durchgeführt werden müssen, wie es in Figur 66 dargestellt ist.

Der Ablauf im Modul RAM-Schnittstelle() für die aktuell aus dem Speicher zu holenden Pixel ist wie folgt ausgebildet:

- Lineares Auslesen aus dem Speicher die Pixel, die für die Kantengenerierung benötigt werden, und schreibe sie in die EdgeReadFIFO () bis du am Ende einer Row angekommen bist. Hierfür wird intern ein Zähler verwendet, der sich merkt, bis zu welchem Pixel gelesen wurde.

- Am Ende einer Row wird kontrolliert, wie der Status der anderen beiden Prozesse jeweils aussieht. Sind in einer der beiden FIFOs (RequestFIFO() und WriteFIFO()) alle eine Row betreffende Anfragen eingegangen, so werden sie hintereinander an den Speicher weitergeleitet. Ist dies nicht der Fall, wird weiter die EdgeReadFIFO() gefüllt.

Die EdgeReadFIFO() ist also dimensioniert, daß sie möglichst nie leer wird, so daß immer weiter gearbeitet werden kann.

Die aus MaskMixFactor() herauskommenden Mischfaktoren werden mittels des Moduls cmp() darauf hin überprüft, welcher der Mischfaktoren ungleich Null ist. Sollte dies bei keinem der Fall sein, so muß das aktuelle Pixel nicht gemischt werden, und die Mischfaktoren werden verworfen. Ist jedoch mindestens einer der Faktoren ungleich Null, so werden sie zusammen mit der aktuellen Pixelnummer in der MixFactorFIFO() abgespeichert, um sie dann später (sobald die Farbwerte aus dem Speicher geholt wurden) für die eigentliche Mischung zu verwenden. Ausgehend von den Mischfaktoren werden dann in der RequestFIFO() die benötigten Farbanforderungen zwischengespeichert. Bei benachbarten Pixeln werden unter Umständen die gleichen Farbwerte benötigt, so daß diese doppelten Anforderungen aussortiert werden. Sobald alle eine Row betreffenden Anfragen eingegangen sind, können sie an die RAM-Schnittstelle() übermittelt werden, die dann daraufhin die Farbinformation an die ReturnFIFO() zurückgibt. In der ReturnFIFO () werden dann aufgrund der am Ausgang der MixFactorFIFO() stehenden Mischfaktoren die benötigten Farbinformationen parallelisiert, und sobald alle benötigten Farben vorliegen, wird mittels des Signals all_there das Modul Mixing () in Betrieb genommen, um die tatsächliche Mischung durchzuführen. Die Ergebnisse der Farbmischung werden dann in der WriteFIFO() zwischengespeichert, bis sie letztlich wieder in den Speicher geschrieben werden können. Das Bild wird in einem einzigen Buffer verändert, so daß unter Umständen schon veränderte Daten in den Speicher zurückgeschrieben wurden, obwohl noch die ursprünglichen Daten für die Mischung der nächsten Zeile benötigt werden, demnach muß zusätzlich noch ein lokaler Speicher eingebaut werden, in dem die alten Daten noch zur Verfügung stehen. Demzufolge werden alle schon einmal benutzten Farbwerte im LineCache() gespeichert, da im Speicher nur solche Daten verändert worden sein können, die schon einmal gelesen wurden. Mittels des LineCaches werden in der RequestFIFO() alle Anforderungen aussortiert, die bereits vorhanden sind, und an die ReturnFIFO() werden die entsprechenden Daten dann übertragen.

Die Erfindung beschränkt sich in ihrer Ausführung nicht auf die vorstehend angegebenen bevorzugten Ausführungsbeispiele. Vielmehr wird der Gegenstand des Schutzbegehrens durch die nachfolgenden Patentansprüche angegeben.

**Patentansprüche**

1. Verfahren zum Eliminieren unerwünschter Stufungen an Kanten bei Computergraphik-Bilddarstellungen im Zeilenraster, insbesondere im On-line Betrieb, **gekennzeichnet durch** die Schritte:

    a) Anwendung eines Kantenoperators auf einen Bildteil zur Grobermittlung mindestens eines gerasterten Kantenverlaufs,

    b) Bestimmung der Position mindestens eines ersten Pixels aus der Menge derjenigen Pixel, die den gerasterten Kantenverlauf bilden oder an diesen gerasterten Kantenverlauf angrenzen,

    c) Approximation einer Geraden zur Ermittlung eines wahrscheinlichen Verlaufs der ungerasterten Bildkante in der Nähe des ersten Pixels,

    d) Ermittlung eines Kriteriums aus der Approximationsgeraden und der Position des ersten Pixels für die Zumischung einer Farbe X zu der Farbe C im betrachteten ersten Pixels und

    e) Mischung der ermittelten Farbe X zu der Farbe C im betracheten ersten Pixel.

2. Verfahren nach Anspruch 1, **dadurch gekennzeichnet, daß** das Kriterium des Verfahrensschrittes d) in Abhängigkeit von der Lage des betrachteten Pixels relativ zur Approximationsgeraden festlegt, welche Farbe X zu der Farbe C des betrachteten Pixels zugemischt wird.

3. Verfahren nach Anspruch 2, **dadurch gekennzeichnet, daß** das Kriterium gemäß Verfahrensschritt d) in Abhängigkeit von der Lage des betrachteten Pixels relativ zur Approximationsgeraden festlegt, daß die Farbe mindestens eines benachbarten Pixels gewichtet zur Farbe des betrachteten Pixels zugemischt wird.

4. Verfahren nach einem der vorhergehenden Ansprüche, **dadurch gekennzeichnet, daß** bei einem betrachteten Pixel, das von der Approximationsgeraden nicht geschnitten wird, die Farbe unverändert bleibt.

5. Verfahren nach einem der vorhergehenden Ansprüche, **dadurch gekennzeichnet, daß** bei einem betrachteten Pixel, das von der Approximationsgeraden geschnitten wird, die resultierende Farbe R nach Maßgabe des folgenden Kriteriums bestimmt wird:

   die Approximationsgerade teilt das betrachtete Pixel in zwei Teilflächen $F_1$, $F_2$ wobei $F_1 + F_2 = 1$, mit 1 ist die Gesamtfläche des Pixels, wobei $F_1$ diejenige Teilfläche ist, in welcher der Pixelmittelpunkt liegt;

   - zugemischt wird zu der Farbe C des betrachteten Pixels die Farbe X desjenigen benachbarten Pixels, welche an die längste vom Raster gebildete Kante der Teilfläche $F_2$ angrenzt.

6. Verfahren nach Anspruch 5, **dadurch gekennzeichnet, daß** sich die resultierende Farbe R aus der ursprünglichen Farbe C des betrachteten Pixels und der zugemischten Farbe X eines benachbarten Pixels nach folgender Gleichung ergibt:

$$R = F_1 \times C + F_2 \times X$$

7. Verfahren nach Anspruch 5 oder 6, **dadurch gekennzeichnet, daß** die Teilflächen $F_1$, $F_2$ durch ein geeignetes Approximationsverfahren approximiert werden.

8. Verfahren nach einem der vorstehenden Ansprüche, **dadurch gekennzeichnet, daß** die genannten Verfahrensschritte auf einen mittels eine Rendering und/oder Shading-Verfahrens behandelten Bildteil angewendet werden.

9. Verfahren nach Anspruch 8, **dadurch gekennzeichnet, daß** das Shading/Rendering dreiecks- oder Scanlinebasiert ist, oder daß es sich um ein Gouraud-oder Phong-Shading handelt.

10. Verfahren nach einem der vorstehenden Ansprüche, **dadurch gekennzeichnet, daß** die vorgenannten Verfahrensschritte a) bis e) einzeln oder in Gruppen im zeitlichen Versatz ausgeführt werden.

11. Verfahren nach Anspruch 10, **dadurch gekennzeichnet, daß** der zeitliche Versatz mindestens eine Bildzeile beträgt.

12. Verfahren nach einem der vorstehenden Ansprüche, **dadurch gekennzeichnet, daß** die Verarbeitung im zeitlichen Versatz in einem Framebuffer ohne weitere Zwischenspeicherung erfolgt.

13. Verfahren nach einem der vorstehenden Ansprüche, **dadurch gekennzeichnet, daß** die Approximationsgerade über mehrere Stufen des gerasterten Kantenverlaufs verläuft, und daß die Approximationsgerade endet, wenn die Kriterien

   1) Es können maximal zwei verschiedene Stufenlängen vorkommen, deren Stufenlängen sich außerdem um maximal 1 unterscheiden dürfen.

   2) Nur eine der beiden Stufenlängen darf mehrmals hintereinander auftreten.

   3) Durch das Aneinanderreihen der Anzahlen der Stufen, die die gleiche Länge haben, erhält man eine Zahlensequenz, bei der abwechselnd immer eine Eins und dann eine beliebige Zahl ( > 0) steht. Die Einsen (nur die an jeder zweiten Position) werden aus dieser Sequenz gestrichen. Bei der erhaltenen Sequenz dürfen wieder nur zwei verschiedene Zahlen vorkommen, die sich um eins unterscheiden.

**EP 0 984 397 B1**

4) Bei der unter 3. erhaltenen Sequenz darf nur eine der beiden möglichen Zahlen mehrmals hintereinander auftreten.

5) Durch wiederholtes Anwenden der Regeln 3. und 4. auf die Zahlensequenz, läßt sich ein immer globalerer Blick auf die Kante gewinnen.

in aufsteigender Reihenfolge überprüft werden und mindestens ein Kriterium nicht erfüllt ist.

**14.** Verfahren nach einem der Ansprüche 1 bis 13, **dadurch gekennzeichnet, daß** die Approximationsgerade über mehrere Stufen des gerasterten Kantenverlaufs verläuft, und daß die Approximationsgerade endet, wenn eines der Kriterien

1) Es können maximal zwei verschiedene Stufenlängen vorkommen, deren Stufenlängen sich außerdem um maximal 1 unterscheiden dürfen.

2) Nur eine der beiden Stufenlängen darf mehrmals hintereinander auftreten.

3) Durch das Aneinanderreihen der Anzahlen der Stufen, die die gleiche Länge haben, erhält man eine Zahlensequenz, bei der abwechselnd immer eine Eins und dann eine beliebige Zahl ( > 0) steht. Die Einsen (nur die an jeder zweiten Position) werden aus dieser Sequenz gestrichen. Bei der erhaltenen Sequenz dürfen wieder nur zwei verschiedene Zahlen vorkommen, die sich um eins unterscheiden.

4) Bei der unter 3. erhaltenen Sequenz darf nur eine der beiden möglichen Zahlen mehrmals hintereinander auftreten.

oder eines der Kriterien 1), 2), 3) oder eines der Kriterien 1), 2) nicht erfüllt ist.

**15.** Verfahren nach einem der der vorhergehenden Ansprüche, **gekennzeichnet durch** das Vorsehen eines Tripple-Buffers, wobei sich die drei resultierenden Buffer in zyklischer Vertauschung parallel die Verfahrensschritte Rendering, Post-Antialyasing und Bildwiedergabe teilen.

**Claims**

**1.** A method of eliminating unwanted steps at edges in computer graphic image representations in the line raster, in particular in on-line operation, **characterised by** the steps:

a) Application of an edge operator to an image portion for coarsely ascertaining at least one rastered edge configuration,
b) Determining the position of at least a first pixel from the amount of those pixels which form the rastered edge configuration or adjoin said rastered edge configuration,
c) Approximation of a straight line for ascertaining a probable configuration of the unrastered image edge in the proximity of the first pixel,
d) Ascertaining a criterion from the approximation straight line and the position of the first pixel for mixing a colour X to the colour C in the first pixel considered, and
e) Mixing the ascertained colour X to the colour C in the first pixel considered.

**2.** A method according to claim 1 **characterised in that** the criterion of method step d), in dependence on the position of the pixel being considered relative to the approximation straight line, establishes which colour X is mixed to the colour C of the pixel being considered.

**3.** A method according to claim 2 **characterised in that** the criterion in accordance with method step d), in dependence on the position of the pixel being considered relative to the approximation straight line, establishes that the colour of at least one adjacent pixel is mixed in weighted mode to the colour of the pixel being considered.

**4.** A method according to one of the preceding claims **characterised in that** in the case of a pixel being considered which is not intersected by the approximation straight line, the colour remains unchanged.

32

5. A method according to one of the preceding claims **characterised in that** in the case of a pixel being considered which is intersected by the approximation straight line the resultant colour R is determined in accordance with the following criterion:

the approximation straight line divides the pixel being considered into two surface portions $F_1$, $F_2$, wherein $F_1$ + $F_2$ = 1, with 1 being the total area of the pixel, wherein $F_1$ is that surface portion in which the pixel centre point lies;

- mixed to colour C of the pixel being considered is the colour X of that adjacent pixel which adjoins the longest edge, formed by the raster, of the surface portion $F_2$.

6. A method according to claim 5 **characterised in that** the resultant colour R arises out of the original colour C of the pixel being considered and the mixed colour X of an adjacent pixel in accordance with the following equation:

$$R = F_1 \times C + F_2 \times X$$

7. A method according to claim 5 or claim 6 **characterised in that** the surface portions $F_1$, $F_2$ are approximated by a suitable approximation process.

8. A method according to one of the preceding claims **characterised in that** said method steps are applied to an image portion treated by means of rendering and/or a shading process.

9. A method according to claim 8 **characterised in that** the shading/rendering is triangle- or scanline-based, or that it involves Gouraud or Phong shading.

10. A method according to one of the preceding claims **characterised in that** the above-specified method steps a) through e) are carried out individually or in groups in time-displaced relationship.

11. A method according to claim 10 **characterised in that** the time displacement is at least one image line.

12. A method according to one of the preceding claims **characterised in that** the processing is effected in time-displaced relationship in a frame buffer without further intermediate storage.

13. A method according to one of the preceding claims **characterised in that** the approximation straight line passes over a plurality of steps of the rastered edge configuration and that the approximation straight line ends when the criteria

1) There can occur a maximum of two different step lengths, the step lengths of which may also differ by a maximum of 1.
2) Only one of the two step lengths may occur a plurality of times in succession.
3) The sequential arrangement of the numbers of the steps which are of the same length gives a number sequence in which there is alternately always a one and then any number (>0). The ones (only those at each second position) are deleted from that sequence. In the sequence obtained only two different numbers which differ by one may again occur.
4) In the sequence obtained in 3. only one of the two possible numbers may occur a plurality of times in succession.
5) By repeatedly applying rules 3. and 4. to the number sequence, it is possible to obtain an ever more global view onto the edge

are checked in rising succession and at least one criterion is not fulfilled.

14. A method according to one of claims 1 through 13 **characterised in that** the approximation straight line passes over a plurality of steps of the rastered edge configuration and that the approximation straight line ends when one of the criteria

1) There can occur a maximum of two different step lengths, the step lengths of which may also differ by a maximum of 1.

2) Only one of the two step lengths may occur a plurality of times in succession.

3) The sequential arrangement of the <u>numbers</u> of the steps which are of the same length gives a number sequence in which there is alternately always a one and then any number (>0). The ones (only those at each second position) are deleted from that sequence. In the sequence obtained only two different numbers which differ by one may again occur.

4) In the sequence obtained in 3. only one of the two possible numbers may occur a plurality of times in succession.

or one of the criteria 1), 2), 3) or one of the criteria 1), 2) is not fulfilled.

**15.** A method according to one of the preceding claims **characterised by** the provision of a triple buffer, wherein the three resulting buffers share in cyclic interchange in parallel relationship the method steps of rendering, post-anti-aliasing and image reproduction.

**Revendications**

**1.** Procédé pour éliminer les paliers indésirables sur des contours pour des représentations graphiques par infographie dans une trame, en particulier dans le cadre d'un fonctionnement en ligne, **caractérisé par** les étapes consistant à :

a) Utiliser un opérateur de contour sur une partie d'image pour déterminer globalement au moins un tracé de contour tramé,

b) Déterminer la position d'au moins un premier pixel à partir de l'ensemble des pixels qui forment le tracé de contour tramé ou qui sont adjacents à ce tracé de contour tramé,

c) Faire une approximation d'une droite permettant de déterminer un tracé probable du contour d'image non tramé à proximité du premier pixel,

d) Déterminer un critère à partir de la droite d'approximation et de la position du premier pixel pour l'ajout d'une couleur X à la couleur C dans le premier pixel considéré et

e) Ajouter la couleur déterminée X à la couleur C dans le premier pixel considéré.

**2.** Procédé selon la revendication 1, **caractérisé en ce que** le critère de l'étape de procédé d) détermine, en fonction de la position du pixel considéré par rapport à la droite d'approximation, quelle couleur X doit être ajoutée à la couleur C du pixel considéré.

**3.** Procédé selon la revendication 2, **caractérisé en ce que** le critère conforme à l'étape de procédé d) détermine, en fonction de la position du pixel considéré par rapport à la droite d'approximation, que la couleur d'au moins un pixel voisin est ajoutée de façon pondérée par rapport à la couleur du pixel considéré.

**4.** Procédé selon l'une des revendications précédentes, **caractérisé en ce que** pour un pixel considéré qui n'est pas coupé par la droite d'approximation, la couleur reste inchangée.

**5.** Procédé selon l'une des revendications précédentes, **caractérisé en ce que** pour un pixel considéré qui est coupé par la droite d'approximation, la couleur résultante R est déterminée conformément au critère suivant :

la droite d'approximation divise le pixel considéré en deux surfaces partielles $F_1$, $F_2$, avec $F_1 + F_2 = 1$ et 1 représente la surface totale du pixel, $F_1$ étant la surface partielle dans laquelle se trouve le centre du pixel ;

- on ajoute à la couleur C du pixel considéré la couleur X du pixel voisin qui est adjacent au contour le plus long de la surface partielle $F_2$ formé par la trame.

**6.** Procédé selon la revendication 5, **caractérisé en ce que** la couleur résultante R est obtenue à partir de la couleur d'origine C du pixel considéré et de la couleur ajoutée X d'un pixel voisin, selon l'équation suivante :

$$R = F_1 \times C + F_2 \times X$$

**7.** Procédé selon la revendication 5 ou 6, **caractérisé en ce que** l'on effectue une approximation des surfaces par-

tielles $F_1$, $F_2$ à l'aide d'un procédé d'approximation approprié.

**8.** Procédé selon l'une des revendications précédentes, **caractérisé en ce que** les étapes de procédé mentionnées sont mises en application sur une partie d'image traitée au moyen d'un procédé de rendu et/ou d'ombrage.

**9.** Procédé selon la revendication 8, **caractérisé en ce que** l'ombrage/le rendu est basé sur un triangle ou sur une ligne de balayage ou **en ce qu'**il s'agit d'un ombrage de Gouraud ou de Phong.

**10.** Procédé selon l'une des revendications précédentes, **caractérisé en ce que** les étapes de procédé précédemment mentionnées a) à e) sont mises en oeuvre individuellement ou en groupe, de façon décalée dans le temps.

**11.** Procédé selon la revendication 10, **caractérisé en ce que** le décalage temporel est égal à au moins une ligne d'image.

**12.** Procédé selon l'une des revendications précédentes, **caractérisé en ce que** le traitement avec un décalage temporel s'effectue dans une mémoire d'image, sans autre système de stockage intermédiaire.

**13.** Procédé selon l'une des revendications précédentes, **caractérisé en ce que** la droite d'approximation s'étend sur plusieurs paliers du tracé de contour tramé, et **en ce que** la droite d'approximation se termine lorsque les critères

1) Il ne peut y avoir au maximum que deux longueurs de palier différentes, les longueurs de palier devant en outre être différentes de maximum 1.
2) Seule l'une des deux longueurs de palier peut apparaître plusieurs fois successivement.
3) La succession des nombres de paliers ayant la même longueur permet d'obtenir une séquence de chiffres dans laquelle on trouve alternativement toujours un « un » puis un chiffre quelconque (> 0). Les uns (uniquement ceux présents tous les deux chiffres) sont supprimés de cette séquence. Dans la séquence obtenue, on ne doit alors trouver que deux chiffres différents, qui ne sont pas égaux à un.
4) Dans la séquence obtenue au point 3), seul l'un des deux chiffres possibles peut apparaître plusieurs fois successivement.
5) La mise en application répétée des règles 3 et 4 sur la séquence de chiffres permet d'obtenir une image de plus en plus globale sur le contour.

sont contrôlés dans l'ordre croissant et qu'au moins un critère n'est pas rempli.

**14.** Procédé selon l'une des revendications 1 à 13, **caractérisé en ce que** la droite d'approximation s'étend sur plusieurs paliers du tracé de contour tramé, et **en ce que** la droite d'approximation se termine lorsque l'un des critères

1) Il ne peut y avoir au maximum que deux longueurs de palier différentes, les longueurs de palier devant en outre être différentes de maximum 1.
2) Seule l'une des deux longueurs de palier peut apparaître plusieurs fois successivement.
3) La succession des nombres de paliers ayant la même longueur permet d'obtenir une séquence de chiffres dans laquelle on trouve alternativement toujours un « un » puis un chiffre quelconque (> 0). Les uns (uniquement ceux présents tous les deux chiffres) sont supprimés de cette séquence. Dans la séquence obtenue, on ne doit alors trouver que deux chiffres différents, qui ne sont pas égaux à un.
4) Dans la séquence obtenue au point 3), seul l'un des deux chiffres possibles peut apparaître plusieurs fois successivement.

ou l'un des critères 1), 2), 3) ou l'un des critères 1), 2) n'est pas rempli.

**15.** Procédé selon l'une des revendications précédentes, **caractérisé par** le fait de prévoir un tampon triple, les trois tampons résultants se divisant en décalage circulaire parallèlement aux étapes de procédé que sont le rendu, l'anticrénelage ultérieur et la restitution d'image.

Fig. 1

Verschiebung des
Fensters für das
nächste Pixel

Rückführung auf
horizontalen Fall

Ausblenden der
wesentlichen
Kanteninformation

Fig. 2

Fig. 3

Zentralpixel hat die
Koordinate (0/0.5)

**Fig. 4**

Fall: UP  DOWN  NOedge  HORizontal

Ende des
Fensters

x : Voraussetzung, daß ein Sprung wahrgenommen wird, ist, daß hier kein Kantenpixel steht

**Fig. 5**

a.

b.

$x_A-1$  $x_A$  $x_E$  $x_E+1$

$x_A-1$  $x_A$  $x_B$  $x_E+1$

c.

d.

minimale Steigung
maximale Steigung

**Fig. 6**

X : angenommene Endpunkte für das aktuelle Pixel (umrandet)

Fig. 7

Übergang   Übergang   Übergang

Fig. 8

O : extrapolierter Mittelpunkt
X : angenommener Mittelpunkt

Fig. 9

a.

b.

Fig. 10

Fig. 11

Fig. 12

Fig. 13

Fig. 14

nicht berücksichtigter
Eckpunkt beim Übergang
zweier Kanten

Fig. 16

Spiegelung der linken
Hälfte => gleiche
Behandlung wie rechte
Hälfte

## Fig. 15

gefundener
Eckpunkt beim Übergang
zweier Kanten

x : angenommene Endpunkte für das
aktuelle Pixel (umrandet)

## Fig. 17

Stufe fällt weg, weil
beim nächsten Pixel
nicht mehr im Fenster

Verschiebung
des Fensters um
ein Pixel

Stufe kommt hinzu, weil
beim nächsten Pixel
neu komplett im Fenster

Fig. 18

großer Sprung zwischen
den Geraden

x : angenommene Endpunkte für das
aktuelle Pixel (umrandet)

Fig. 19

Fig. 20

☐ : aktuelles Pixel     ⁝ : Flächenanteil unterhalb der Geraden, und damit auch Menge des von unten zuzumischenden Farbanteils

## Fig. 21

Trapezfläche unter der Geraden     Dreiecksfläche unter der Geraden

Neutralisation des Fehlers     keine Neutralisation des Fehlers
=> zu kleiner Mischfaktor bei Verfahren 1

⁝ + ■ : Flächenanteil nach dem hier verwendeten Verfahren     ⁝ + : wirklicher Flächenanteil unterhalb der Geraden

## Fig. 22

⁝ + ■ : Flächenanteil zur Zumischung für die horizontale Kante     ▦ + : Flächenanteil zur Zumischung für die vertikale Gerade

## Fig. 23

EP 0 984 397 B1

Fig. 24

45

aktuell zu
mischendes Pixel

Generierung der Kanteninformation

## Fig. 25

**EdgeCounter**

## Fig. 26

Fig. 27

EN

color0 color1

[23:16] [23:16] [15:8] [15:8] [7:0] [7:0]

an

norm

approx

EdgeDiffUnit

cmp

Fig. 28

EN

r_color c_color d_color

[23:16] [15:8] [7:0] [23:16] [15:8] [7:0] [23:16] [15:8] [7:0]

r_an c_an d_an

norm norm norm

approx approx approx

r_pos r_neg d_pos d_neg

EdgeDirUnit

Fig. 29

Fig. 30

Fig. 31

PixelNr.

| 15 | 14 | | 1 | 0 | 15 | 14 | | 1 | 0 | 15 | 14 | | 1 | 0 | 15 | 14 | | 1 | 0 |

Typ:  positiv      negativ      positiv      negativ
     vertikal     vertikal    horizontal    horizontal

Pixel Nummer 0 ist das unterste Pixel in der entsprechenden Spalte,
Pixel Nummer 15 ist das oberste Pixel.

# Fig. 32

mit w=17 und h=17    **Win_hor**

# Fig. 33

mit w=17 und h=17    **Win_ver**

# Fig. 34

Fig. 35

Fig. 36

Fig. 37

## Fig. 38

## Fig. 39

Fig. 40

ComputeEdge    Fig. 41

# Fig. 42

nur benutzte Bits für die Bestimmung der Richtung der Kante

# Fig. 43

Fig. 44

Fig. 45

| Bit Nr.: | 16 | | 14 | | 12 | | 9 | | 6 | | 3 | | 0 |
|---|---|---|---|---|---|---|---|---|---|---|---|---|---|

Länge des
Sprungs Nr.:  7    6    5    4    3    2    1

## Fig. 46

## Fig. 47

Fig. 48

EP 0 984 397 B1

Fig. 49

ComputeMasks

Fig. 50

sel_step

AddJumps

58

Fig. 51

ComputeMixFactor

Fig. 52

ComputeLeftEdge

Fig. 53

MaskMixFactors

Fig. 54

Fig. 55

Fig. 56

Fig. 57

Fig. 58

Fig. 59

Fig. 60

## Fig. 61

## Fig. 62

| Buffer 1 | Buffer 2 | Buffer 3 |
|----------|----------|----------|

Rendering ◁— Postantialiasing ◁— Display ◁

Vertauschung der Funktionalität der Buffer

Renderer
ASIC

| Framebuffer 1 mit Antialiasing | Framebuffer 2 mit Antialiasing | Framebuffer 3 mit Antialiasing |
|---|---|---|

RAMDAC

Monitor

## Fig. 63

Fig. 64

Fig. 65

Fig. 66

| | |
|---|---|
| inv_dx recip — Eingang — Instanzname — Modulname — Ausgang | Instanziierung eines selbstdefinierten Moduls |
| EN — Enable-Signal — Registername — Bitbreite des Registers | Register; das am Eingang liegende Datum wird bei der positiven Taktflanke übernommen, falls das Enable-Signal gesetzt ist |
| 16 | Bitbreite eines Drahtes (Wires) |
| 16 [2:6] | Auswahl von Bits eines Wires |
| | sich kreuzende Wires, ohne eine galvanische Verbindung |
| | Verzweigung eines Drahtes |
| 2 2 4 — neue Bitbreite [1:0] — Position im [3:2] — neuen Wire | Konkatenation von Bits |
| op1 op2 (−) 10 — Ausgangsbitbreite res | Subtraktion (res = op1 - op2 / und nicht andersherum) |
| op1 carry_in op2 (+) 10 — Ausgangsbitbreite res | Addition (der mittlere Eingang ist lediglich ein carry-Eingang, und damit nur 1 Bit breit, aufwandsmäßig zählt dieses Element wie eine Addition zweier Zahlen) |

# Fig. 67

| Anfangs-status | End-status | Gerade durch die Punkte | Beispiel |
|---|---|---|---|
| UP | UP | $(x_A-0.5,0.5) - (0.5*(x_A+x_E),0)$<br>für $x \leq 0.5*(x_A+x_E)$<br>$(0.5*(x_A+x_E),0) - (x_E+0.5,0.5)$<br>für $x > 0.5*(x_A+x_E)$ | |
| UP | DOWN | $(x_A-0.5,0.5) - (x_E+0.5,-0.5)$ | |
| UP | NO | $(x_A-0.5,0.5) - (x_E+0.5,0)$ | |
| UP | HOR | $(x_A-0.5,0.5) - (x_A+0.5*(n-2),0)$ | |
| DOWN | UP | $(x_A-0.5,-0.5) - (x_E+0.5,0.5)$ | |
| DOWN | DOWN | $(x_A-0.5,-0.5) - (0.5*(x_A+x_E),0)$<br>für $x \leq 0.5*(x_A+x_E)$<br>$(0.5*(x_A+x_E),0) - (x_E+0.5,-0.5)$<br>für $x > 0.5*(x_A+x_E)$ | |

# Tab. 1

| Anfangs-status | End-status | Gerade durch die Punkte | Beispiel |
|---|---|---|---|
| DOWN | NO | $(x_A-0.5,-0.5) - (x_E+0.5,0)$ | |
| DOWN | HOR | $(x_A-0.5,-0.5) - (x_A+0.5*(n-2),0)$ | |
| NO | UP | $(x_A-0.5,0) - (x_E+0.5,0.5)$ | |
| NO | DOWN | $(x_A-0.5,0) - (x_E+0.5,-0.5)$ | |
| NO | NO | $y \equiv 0$ | |
| NO | HOR | $y \equiv 0$ | |
| HOR | UP | $(x_E-0.5*(n-2),0) - (x_E+0.5,0.5)$ | |
| HOR | DOWN | $(x_E-0.5*(n-2),0) - (x_E+0.5,-0.5)$ | |

Tab. 2

| Anfangs-status | End-status | Gerade durch die Punkte | Beispiel |
|---|---|---|---|
| HOR | NO | $y \equiv 0$ | |
| HOR | HOR | $y \equiv 0$ | |

## Tab. 3

| Signal | Bits | Type | Beschreibung |
|---|---|---|---|
| Init | 1 | In | Initialisierungssignal (Übernahme einer neuen Höhe und Breite) |
| width | 11 | In | neue Bildschirmbreite (nur relevant bei Init=1) |
| height | 11 | In | neue Bildschirmhöhe (nur relevant bei Init=1) |
| Color | 24 | In | Farbwert eines Pixels |
| Valid_in | 1 | In | Gültigkeitsanzeige des Color-Signals |
| mixedColor | 24 | Out | antialiaster Farbwert eines Pixels |
| Valid | 1 | Out | Gültigkeitsanzeige des mixedColor-Signals |

## Tab. 4

| Signal | Bits | Type | Beschreibung |
|---|---|---|---|
| EN | 1 | In | Enable-Signal der Zähler |
| Init | 1 | In | Initialisierungssignal (Übernahme der neuen Breite und Höhe) |
| width | 11 | In | neue Bildschirmbreite (nur relevant bei Init=1) |
| height | 11 | In | neue Bildschirmhöhe (nur relevant bei Init=1) |
| rightValid | 1 | Out | Gültigkeitsanzeige des Pixels rechts vom aktuellen |
| downValid | 1 | Out | Gültigkeitsanzeige des Pixels unter dem aktuellen |
| Ready | 1 | Out | Anzeige, daß alle Pixel des aktuellen Bildes eingelesen wurden |

## Tab. 5

| Signal | Bits | Type | Beschreibung |
|---|---|---|---|
| EN | 1 | In | Enable-Signal der Register |
| col_right | 24 | In | Farbwert für das Pixel rechts vom aktuellen |
| col_down | 24 | In | Farbwert für das Pixel unter dem aktuellen |
| rightValid | 1 | In | Gültigkeitsanzeige vom col_right-Signal |
| downValid | 1 | In | Gültigkeitsanzeige vom col_down-Signal |
| EdgeVal | 4 | Out | Kanteninformation für das aktuelle Pixel |
| col_right_new | 24 | Out | Farbwert, der für die Kantengenerierung in der nächsten Zeile erneut gebraucht wird |
| color | 24 | Out | Farbwert, der für die spätere Mischung aufbewahrt werden soll |

<div align="right">

## Tab. 6

</div>

| Signal | Bits | Type | Beschreibung |
|---|---|---|---|
| EN | 1 | In | Enable-Signal des Moduls |
| color0 | 24 | In | Farbe des einen Pixels |
| color1 | 24 | In | Farbe des anderen Pixels, zwischen denen eine Kante erkannt werden soll |
| cmp | 1 | Out | Anzeige, ob zwischen den beteiligten Pixeln eine Kante existiert |

<div align="right">

## Tab. 7

</div>

| Signal | Bits | Type | Beschreibung |
|---|---|---|---|
| EN | 1 | In | Enable-Signal des Moduls |
| r_color | 24 | In | Farbe des rechten Pixels |
| c_color | 24 | In | Farbe des zentralen Pixels |
| d_color | 24 | In | Farbe des unteren Pixels |
| r_pos | 1 | Out | vom zentralen zum rechten Pixel existiert ein positiver Farbsprung |
| r_neg | 1 | Out | vom zentralen zum rechten Pixel existiert ein negativer Farbsprung |
| d_pos | 1 | Out | vom zentralen zum unteren Pixel existiert ein positiver Farbsprung |
| d_neg | 1 | Out | vom zentralen zum unteren Pixel existiert ein negativer Farbsprung |

<div align="right">

## Tab. 8

</div>

| Signal | Bits | Type | Beschreibung |
|--------|------|------|--------------|
| EN | 1 | In | Enable-Signal der Register |
| x | 8 | In | Farbwert eines Kanals |
| y | 8 | In | Farbwert eines Kanals |
| z | 8 | In | Farbwert eines Kanals |
| approx | 11 | Out | Ergebniswert |

Tab. 9

| Signal | Bits | Type | Beschreibung |
|--------|------|------|--------------|
| EN | 1 | In | Enable-Signal des Moduls |
| EdgeVal | 4 | In | neuer Kantenwert für das rechte, untere Pixel im Kantenfenster |
| EdgePipe_out | 64 | In | Kantenwerte der rechtesten Spalte |
| Win_vp | 289 | Out | Kantenfenster mit den vertikal positiv markierten Pixeln |
| Win_vn | 289 | Out | Kantenfenster mit den vertikal negativ markierten Pixeln |
| Win_hp | 289 | Out | Kantenfenster mit den horizontal positiv markierten Pixeln |
| Win_hn | 289 | Out | Kantenfenster mit den horizontal negativ markierten Pixeln |
| EdgePipe_in | 64 | Out | Kantenwerte der am weitesten links liegenden Spalte, die nicht mehr für das aktuelle Fenster benötigt werden (erst bei der Bearbeitung der nächsten Zeile wieder relevant) |

Tab. 10

| Signal | Bits | Type | Beschreibung |
|--------|------|------|--------------|
| EN | 1 | In | Enable-Signal der Registers |
| EdgeVal | 1 | In | neuer Kantenwert für das rechte, unterste Pixel |
| EdgePipe_out | 16 | In | Kantenwerte der rechtesten Spalte |
| actWin | 289 | Out | vertikales/horizontales Kantenfenster |
| EdgePipe_in | 16 | Out | Kantenwerte der am weitesten links liegenden Spalte, die nicht mehr für das aktuelle Fenster benötigt werden (erst bei der Bearbeitung der nächsten Zeile wieder relevant) |

Tab. 11

| Signal | Bits | Type | Beschreibung |
|--------|------|------|--------------|
| Reset | 1 | In | Reset-Signal, nach Anlegen dieses Signals erfolgt eine Initialisierungsphase des RAMs |
| Init | 1 | In | Initialisierungssignal, bei dem die Länge der Pipe neu festgelegt wird. |
| L | ? | In | neue Länge der verwendeten Pipe (Bitbreite über Parameter festlegbar) |
| Shift | 1 | In | Signal für das Weiterschalten der Daten (neues Datum wird übernommen, ein Datum wird ausgegeben) |
| DIn | ? | In | Daten-Eingang der Pipe (Bitbreite über Parameter festlegbar) |
| DOut | ? | Out | Daten-Ausgang der Pipe (Bitbreite über Parameter festlegbar) |

## Tab. 12

| Signal | Bits | Type | Beschreibung |
|--------|------|------|--------------|
| EN | 1 | In | Enable-Signal der Register |
| Init | 1 | In | Initialisierungssignal für die Masken |
| x_in | 1 | In | neuer Wert für die x-Maske |
| y_in | 1 | In | neuer Wert für die y-Maske |
| EndOfLine | 1 | In | Signal, das anzeigt, daß das Ende einer Bildzeile erreicht ist. |
| xmask | 17 | Out | Maske, die horizontal angibt, welche Pixel zur aktuellen Umgebung gehören |
| ymask | 17 | Out | Maske, die vertikal angibt, welche Pixel zur aktuellen Umgebung gehören |

## Tab. 13

| Signal | Bits | Type | Beschreibung |
|--------|------|------|--------------|
| EN | 1 | In | Enable-Signal der Zähler |
| Init | 1 | In | Initialisierungssignal (Übernahme der neuen Breite und Höhe) |
| width | 11 | In | neue Breite (nur relevant bei Init=1) |
| height | 11 | In | neue Höhe (nur relevant bei Init=1) |
| EndOfLine | 1 | Out | Signal, das anzeigt, daß das Ende einer Bildzeile erreicht ist. |
| x_in | 1 | Out | neuer Wert für die x-Maske |
| y_in | 1 | Out | neuer Wert für die y-Maske |
| Valid | 1 | Out | Ist das aktuelle Pixel überhaupt gültig (innerhalb der Bildgrenzen) ? |

## Tab. 14

| Signal | Bits | Type | Beschreibung |
|---|---|---|---|
| EN | 1 | In | Enable-Signal des Moduls |
| Win_p | 289 | In | positiv markierte Pixel im Kantenfenster |
| Win_n | 289 | In | negativ markierte Pixel im Kantenfenster |
| xmask | 17 | In | x-Maske (Gültigkeit der Pixel im Kantenfenster) |
| ymask | 17 | In | y-Maske (Gültigkeit der Zeilen im Kantenfenster) |
| yReal | 16 | Out | Position der Geraden bzgl. des Farbsprunges |
| mix | 7 | Out | Mischfaktor, der angibt, wieviel von der Farbe aus der entsprechenden Richtung zugemischt werden sollte (falls nur diese Gerade existiert) |
| len | 5 | Out | horizontale Länge der verfolgten Geraden |
| nogood | 1 | Out | Flag, das angibt, ob die Gerade als „gut" angesehen wird |

## Tab. 15

| Signal | Bits | Type | Beschreibung |
|---|---|---|---|
| actWin_p | 289 | In | positiv markierte Pixel im Kantenfenster |
| actWin_n | 289 | In | negativ markierte Pixel im Kantenfenster |
| xmask | 17 | In | Gültigkeit der Pixel im Fenster |
| ymask | 17 | In | Gültigkeit der Zeilen im Fenster |
| maskedWindow | 191 | Out | maskiertes Kantenfenster |

## Tab. 16

| Signal | Bits | Type | Beschreibung |
|---|---|---|---|
| EN | 1 | In | Enable-Signal der Register |
| ep | 191 | In | Kantenfenster (edge pic / nicht mehr rechteckig) |
| stat_left | 2 | Out | Status am linken Ende der verfolgten Stufe |
| stat_right | 2 | Out | Status am rechten Ende der verfolgten Stufe |
| xA | 4 | Out | x-Wert des Anfangspunktes (eigentlich -xA, aber Vorzeichen wird nicht benötigt / Wertebereich: 0..7,5) |
| yA | 5 | Out | y-Wert des Anfangspunktes (Wertebereich : -7,5..+7,5) |
| xE | 4 | Out | x-Wert des Endpunktes (Wertebereich: 0..7,5) |
| yE | 5 | Out | y-Wert des Endpunktes (Wertebereich: -7,5..+7,5) |

## Tab. 17

| Signal | Bits | Typ | Beschreibung |
|---|---|---|---|
| up | 9 | In | Zeile im Kantenbild über der mittleren |
| center | 9 | In | mittlere Zeile im Kantenbild in eine Richtung |
| down | 9 | In | Zeile im Kantenbild unter der mittleren |
| len | 3 | Out | Länge der zentralen Stufe in der verfolgten Richtung |
| stat | 3 | Out | Status am Ende der zentralen Stufe |

## Tab. 18

| Signal | Bits | Typ | Beschreibung |
|---|---|---|---|
| tstat_l | 3 | In | temporärer Status nach links |
| tstat_r | 3 | In | temporärer Status nach rechts |
| stat_l | 2 | Out | Status am linken Ende der verfolgten Stufe |
| stat_r | 2 | Out | Status am rechten Ende der verfolgten Stufe |

## Tab. 19

| Stat | Bit[2:0] |
|---|---|
| UP | 010 |
| DOWN | 001 |
| NO | 000 |
| HOR | 011 |
| BOTH | 100 |

## Tab. 20

| Stat | Bit[1:0] |
|---|---|
| UP | 10 |
| DOWN | 01 |
| NO | 00 |
| HOR | 11 |
| | |

## Tab. 21

| Signal | Bits | Typ | Beschreibung |
|---|---|---|---|
| pos | 3 | In | Position, an der die zentrale Stufe endet |
| ep | 44 | In | Sektor aus dem Kantenbild, in dem weitere Stufen gefunden werden sollen |
| jumps | 17 | Out | im Sektor gefundene Sprünge |

## Tab. 22

| Signal | Bits | Type | Beschreibung |
|---|---|---|---|
| EN | 1 | In | Enable-Signal der Register |
| stat_l | 2 | In | Status am linken Rand der zentralen Stufe |
| stat_r | 2 | In | Status am rechten Rand der zentralen Stufe |
| pos_l | 3 | In | Länge der zentralen Stufe nach links |
| pos_r | 3 | In | Länge der zentralen Stufe nach rechts |
| jumps_l | 17 | In | weitere nach links erkannte Stufen |
| jumps_r | 17 | In | weitere nach rechts erkannte Stufen |
| xA | 4 | Out | x-Wert des Anfangspunktes |
| yA | 4 | Out | y-Wert des Anfangspunktes (vorzeichenlos) |
| xE | 4 | Out | x-Wert des Endpunktes |
| yE | 4 | Out | y-Wert des Endpunktes (vorzeichenlos) |

## Tab. 23

| Signal | Bits | Type | Beschreibung |
|---|---|---|---|
| len | 4 | In | Länge der zentralen Stufe |
| jumps | 17 | In | mögliche Sprünge |
| pos | 7 | Out | Maske, die angibt, welche Stufen eine um eins größere Länge als die zentrale Stufe enthalten |
| zero | 7 | Out | Maske, die angibt, welche Stufen die gleiche Länge wie die zentrale Stufe enthalten |
| neg | 7 | Out | Maske, die angibt, welche Stufen eine um eins kleinere Länge als die zentrale Stufe enthalten |

## Tab. 24

| Signal | Bits | Type | Beschreibung |
|---|---|---|---|
| EN | 1 | In | Enable-Signal der Register |
| pos_l | 7 | In | Maske, die die um eins längere Stufen nach links enthält |
| zero_l | 7 | In | Maske, die die genauso langen Stufen nach links enthält |
| neg_l | 7 | In | Maske, die die um eins kürzere Stufen nach links enthält |
| pos_r | 7 | In | Maske, die die um eins längere Stufen nach rechts enthält |
| zero_r | 7 | In | Maske, die die genauso langen Stufen nach rechts enthält |
| neg_r | 7 | In | Maske, die die um eins kürzere Stufen nach rechts enthält |
| mask_l | 7 | Out | Maske, die angibt, welche Stufen nach links zu einer Geraden beitragen |
| mask_r | 7 | Out | Maske, die angibt, welche Stufen nach rechts zu einer Geraden beitragen |

## Tab. 25

| Signal | Bits | Type | Beschreibung |
|---|---|---|---|
| EN | 1 | In | Enable-Signal der Register |
| pos | 3 | In | x-Wert des Endes der zentralen Stufe |
| y0 | 1 | In | y-Wert des Endes der zentralen Stufe |
| jumps | 17 | In | weitere Stufen in die entsprechende Richtung |
| mask | 7 | In | Maske, die angibt, welche der Stufen in jumps zur Geraden beitragen |
| x | 4 | Out | x-Wert des einen Endpunktes der Geraden |
| y | 4 | Out | Betrag des y-Wert des einen Endpunktes der Geraden |

## Tab. 26

| Signal | Bits | Type | Beschreibung |
|---|---|---|---|
| EN | 1 | In | Enable-Signal der Register |
| xA | 4 | In | x-Wert des Anfangspunkte |
| yA | 5 | In | y-Wert des Anfangspunktes |
| xE | 4 | In | x-Wert des Endpunktes |
| yE | 5 | In | y-Wert des Endpunktes |
| stat_left | 2 | In | Status am Anfangspunkt |
| stat_right | 2 | In | Status am Endpunkt |
| yReal | 16 | Out | y-Wert der realen Geraden beim aktuellen Pixel |
| mix | 7 | Out | Mischfaktor für eine Zumischrichtung bzgl. der Geraden |
| len | 5 | Out | Länge der verfolgten Geraden |
| no_good | 1 | Out | Stati an den Enden der Geraden deuten auf keine „gutartige" Gerade hin |

## Tab. 27

| Signal | Bits | Type | Beschreibung |
|---|---|---|---|
| x | 5 | In | Eingangswert |
| y | 10 | Out | Ergebniswert $y = \frac{1}{x}$ |

## Tab. 28

| Signal | Bits | Type | Beschreibung |
|--------|------|------|--------------|
| EN | 1 | In | Enable-Signal der Register |
| xmask | 1 | In | Maskenbit, das angibt, ob das aktuelle Pixel zu einer Kante gehört |
| yReal | 16 | In | y-Wert der realen Kante bzgl. des Farbsprunges |
| len_r | 5 | In | Länge der verfolgten Geraden für den rechten Mischfaktor |
| nogood_r | 1 | In | Flag, daß andeutet, das die Gerade für die Ermittlung des rechten Mischfaktors wahrscheinlich nicht „gutartig" war |
| mix | 7 | Out | linker Mischfaktor für das aktuelle Pixel |
| len | 5 | Out | Länge der verfolgten Geraden |
| nogood | 1 | Out | Stati an den Enden der Geraden deuten auf keine „gutartige" Gerade hin |

# Tab. 29

| Signal | Bits | Type | Beschreibung |
|--------|------|------|--------------|
| EN | 1 | In | Enable-Signal der Register |
| pre_mix_up, pre_mix_down, pre_mix_left, pre_mix_right | je 7 | In | Mischfaktoren, die aufgrund nur jeweils einer Geraden festgelegt wurden |
| len_up, len_down, len_left, len_right | je 5 | In | Längen der jeweiligen Geraden |
| nogood_up, nogood_down, nogood_left, nogood_right | je 1 | In | Flags der jeweiligen Geraden, die nicht als „gut" bezeichnet werden können |
| mix_up, mix_down, mix_left, mix_right | je 7 | Out | endgültige Mischfaktoren für die entsprechenden Richtungen |

# Tab. 30

78

| Signal | Bits | Typ | Beschreibung |
|---|---|---|---|
| EN | 1 | In | Enable-Signal der Register |
| mix_up, mix_down, mix_left, mix_right | je 7 | In | Mischfaktoren für die entsprechenden Richtungen |
| col_up | 24 | In | Farbe des Pixels über dem aktuellen |
| col_right | 24 | In | Farbe des Pixels rechts vom aktuellen |
| col_down | 24 | In | Farbe des Pixels unter dem aktuellen |
| mixedColor | 24 | Out | neue Farbe des aktuellen Pixels aufgrund der Mischung |
| mixing | 1 | Out | Flag, ob eine Mischung stattfand (im Triple-Buffer-Betrieb die Entscheidung, ob das Pixel zurückgeschrieben werden muß) |
| col_up_new | 24 | Out | Farbe, die in der nächsten Zeile als oberstes Pixel verwendet wird |
| col_right_new | 24 | Out | Farbe, die in der nächsten Zeile als rechtes Pixel verwendet wird |

# Tab. 31

| Signal | Bits | Typ | Beschreibung |
|---|---|---|---|
| EN | 1 | In | Enable-Signal der Register |
| mix_up, mix_down, mix_left, mix_right | je 7 | In | Mischfaktoren für die entsprechenden Richtungen |
| mix_u, mix_d, mix_l, mix_r | je 7 | Out | um einen Takt verzögerte Mischfaktoren |
| mix_c | 7 | Out | zentraler Mischfaktor |
| shift | 1 | Out | Flag, ob die Mischfaktoren noch alle durch zwei dividiert werden müssen |
| mixing | 1 | Out | Flag, ob überhaupt eine Mischung stattfindet, oder ob der zentrale Faktor 1.0 ist |

# Tab. 32

| Signal | Bits | Typ | Beschreibung |
|---|---|---|---|
| EN | 1 | In | Enable-Signal der Register |
| mix_u, mix_d, mix_l, mix_r, mix_c | je 7 | In | Mischfaktoren für die entsprechenden Pixel |
| col_u, col_d, col_l, col_r, col_c | je 8 | In | Farben der einzelnen Pixel im jeweiligen Farbkanal |
| shift | 1 | In | Flag, daß noch eine Division durch 2 stattfinden muß |
| mixedColor | 8 | Out | gemischte Farbe für den Farbkanal |

# Tab. 33